# EUROPÄISCHE PATENTSCHRIFT

(11) **EP 4 064 612 B1**
(45) Veröffentlichungstag und Bekanntmachung des Hinweises auf die Patenterteilung: **12.11.2025**
(21) Anmeldenummer: 22163656.6
(22) Anmeldetag: 22.03.2022
(51) Int. Cl.: H04L 9/40, G07D 7/004, H04L 9/08

(54) **SCHLÜSSELABLEITUNG MITTELS EINER BANKNOTE MIT PROZESSOR**
KEY DERIVATION USING A BANKNOTE WITH PROCESSOR
DÉRIVATION DE CLÉ AU MOYEN D'UN BILLET COMPORTANT UN PROCESSEUR

(30) Priorität: 24.03.2021 DE 102021107378
(43) Veröffentlichungstag der Anmeldung: 28.09.2022
(73) Patentinhaber: Bundesdruckerei GmbH, 10969 Berlin (DE)
(72) Erfinder: PETERS, Florian, 10437 Berlin (DE); MARSING, Sven, 16321 Bernau (DE); RÜCKRIEMEN, Jörg, verstorben (DE)
(74) Vertreter: Richardt Patentanwälte PartG mbB

(56) Entgegenhaltungen:
- WO-A2-03/054808
- DE-A1- 102015 214 340
- ELDEFRAWY MOHAMED HAMDY ET AL: "Banknote Validation through an Embedded RFID Chip and an NFC-Enabled Smartphone", vol. 2015, 1 January 2015 (2015-01-01), CH, pages 1 - 8, XP055861880, ISSN: 1024-123X, Retrieved from the Internet <URL:https://downloads.hindawi.com/journals/mpe/2015/264514.pdf> DOI: 10.1155/2015/264514

## Beschreibung

Die Erfindung betrifft ein Verfahren zum Ableiten eines privaten kryptographischen Schlüssels eines anonymen Kontos für ein Computersystem unter Verwendung einer Banknote. Ferner betrifft die Erfindung eine entsprechende Banknote und ein entsprechendes Computersystem sowie ein System, welche beide umfasst.

Im Zuge der zunehmenden Digitalisierung rücken heutzutage mehr und mehr bargeldlose Zahlungsinstrumente in den Vordergrund, insbesondere basierend auf elektronischen Verfahren zur Zahlungsabwicklung. Im bargeldlosen Zahlungsverkehr erfolgt ein Transfer von Zahlungsmitteln, ohne dass dabei Bargeld transferiert wird. Bei Barzahlungen wird Bargeld, d.h. Banknoten oder Münzen, zwischen Zahlungspflichtigem und Zahlungsempfänger ausgetauscht, während es bei einer bargeldlosen Zahlung nicht zu einem solchen Austausch von Bargeld kommt.

Bargeld hat beispielsweise den Vorteil, dass es für jedermann verfügbar ist und schnell sowie überall eingesetzt werden kann. So ist beispielsweise für eine bargeldbasierte Zahlungsabwicklung kein Bankkonto erforderlich. Zudem wird Bargeld von den Besitzern oftmals als Wertaufbewahrungsmittel geschätzt.

Der Artikel "Banknote Validation through an Embedded RFID Chip and an NFC-Enabled Smartphone" von Mohamed Hamdy Eldefrawy und Muhammad Khurram Khan in Mathematical problems in engineering, Band 2015, Seiten 1 bis 8, beschreibt ein Verfahren zum Prüfen einer Banknote mit einem RFID-Chips und einem NFC-fähigen Smartphone. Ein Verbraucher sendet unter Verwendung seines Smartphones und einer Internetverbindung eine Banknotenprüfungsanfrage an die Währungsagentur (engl.: "Monetary Agency"/MA). Die MA antwortet, indem sie eine zufällige Aufforderung (engl.: "challenge") an das Smartphone des Verbrauchers sendet. Das RFID-Chip in der Banknote empfängt die Aufforderung über die NFC und berechnet eine äquivalente Antwort (engl.: "response") auf die Aufforderung der MA. Wenn irgendeine der Nachrichten falsch ist, wird die Authentifizierung verweigert. Durch dieses Verfahren können Verbraucher die Originalität von Banknoten mit der MA überprüfen, indem sie ihre Smartphones und eine Internetverbindung verwenden.

Bargeldlose Zahlungsverfahren haben demgegenüber beispielsweise den Vorteil, dass sie eine effiziente Zahlungsabwicklung ermöglichen, selbst wenn sich Zahlungspflichtiger und Zahlungsempfänger an entfernten Orten aufhalten, wie es beispielsweise bei Einkäufen über das Internet der Fall ist. Dies können bekannte Banknoten nicht leisten.

Der Erfindung liegt daher die Aufgabe zugrunde, eine verbesserte Zahlungsverfahren unter Verwendung einer Banknote zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Ableiten eines ersten privaten kryptographischen Schlüssels eines anonymen Kontos für ein Computersystem unter Verwendung einer Banknote. Das anonyme Konto des Computersystems ist von einem der Banknote individuell zugeordneten anonymen Banknotenkonto abhängig. Die Banknote umfasst ein Sicherheitselement mit einem Prozessor und einem Speicher mit Programminstruktionen. In dem Speicher des Sicherheitselements ist eine Identifikationsnummer der Banknote gespeichert, welche das von einer die Banknote ausgebenden Zentralbank verwaltete und der entsprechenden Banknote individuell zugeordnete anonyme Banknotenkonto identifiziert.

In einem geschützten Speicherbereich des Speichers des Sicherheitselements ist ein banknotenindividueller zweiter kryptographischer Schlüssel gespeichert.

Das Verfahren umfasst durch die Banknote:
- Empfangen einer Ableitungsanfrage zum Ableiten des ersten privaten kryptographischen Schlüssels für das abhängige anonyme Konto von dem Computersystem,
- Initiieren eines Ableitens des ersten privaten kryptographischen Schlüssels für das abhängige anonyme Konto unter Verwendung einer Einwegfunktion und des banknotenindividuellen zweiten kryptographischen Schlüssels, wobei der abgeleitete erste private kryptographische Schlüssel zum Erzeugen von Kryptogrammen zur Freigabe von Zahlung von dem abhängigen Konto dient.

Ausführungsformen können den Vorteil haben, dass die Banknote nicht nur als Bargeldzahlungsmittel im üblichen Sinne verwendet werden verwendet kann, sondern zusätzlich auch eine bargeldlose Zahlung mit der Banknote ausgeführt werden kann. Bei einer Verwendung als Bargeldzahlungsmittel im üblichen Sinne wird die Banknote im Zuge des Zahlungsabwicklung von dem Zahlungspflichtigen an den Zahlungsempfänger übergeben oder der Zahlungsempfänger übergibt die entsprechende Banknote als Wechselgeld im Zuge der Zahlungsabwicklung dem Zahlungspflichtigen. Mit der Übergabe der Banknote geht das Eigentum an der Banknote von dem Übergeber an den Empfänger über. Mit dem Eigentum an der Banknote geht auch das Eigentum an dem aktuellen Nominalwert der Banknote, d.h. dem dem Banknotenkonto der Banknote zugeordneten Nominalwert, an den Empfänger über.

Bei einer Verwendung für eine bargeldlose Zahlung, d.h. ohne Übergabe der Banknote bzw. Übergang des Eigentums an der Banknote, erfolgt die Zahlung durch ein Bereitstellen eines zahlungsindividuellen Kryptogramms durch die Banknote. Dieses Kryptogramm autorisiert eine Transaktion, bei welcher der zu zahlende Betrag von dem Banknotenkonto der Banknote an ein Konto des Zahlungsempfängers transferiert wird.

Ein Ableiten eines privaten kryptographischen Schlüssels eines anonymen Kontos für ein Computersystem unter Verwendung einer entsprechenden Banknote, erlaubt es die bargeldlose Zahlungsfunktionalität der Banknote auf das Computersystem zu übertragen. Das anonyme Konto des Computersystems ist von einem einer Banknote individuell zugeordneten anonymen Banknotenkonto abhängig. Abhängig ist das Konto des Computersystems von dem Banknotenkonto insofern, als das der private kryptographische Schlüssel zum Nutzen des Kontos von dem kryptographischen Schlüssel des Banknotenkontos, beispielsweise einen privaten kryptographischen Schlüssel, abgeleitet ist. Somit gewährt eine Verfügungshoheit über den kryptographischen Schlüssel des Banknotenkontos zugleich auch eine Verfügungshoheit über das Konto, da aus dem kryptographischen Schlüssel des Banknotenkontos der private kryptographische Schlüssel des Kontos abgeleitet werden kann, welcher Verfügungshoheit über das entsprechende Konto gewährt. Beispielsweise erlaubt es eine Verfügungshoheit über den kryptographischen Schlüssel des Banknotenkontos das Konto zu revozieren, d.h. aufzulösen. Ferner resultiert eine Revozierung des Banknotenkontos beispielsweise automatisch in einem Revozierung des Kontos.

Ausführungsformen können den Vorteil haben, dass eine Banknote dazu genutzt werden kann ein Konto für ein Computersystem, insbesondere ein mobiles tragbares Endgerät, wie etwa ein Smartphone, einzurichten bzw. aus einem Banknotenkonto abzuleiten. Der kryptographische Schlüssel der Banknote dient dabei als eine Generalschlüssel. Dieser ist auf der Banknote sicher gespeichert und kann unabhängig von dem Computersystem aufbewahrt werden. Besteht die Notwendigkeit das abhängige Konto zu revozieren oder muss der private kryptographische Schlüssel des Computersystems wiederhergestellt werden, kann dazu der kryptographische Schlüssel der Banknote verwendet werden. Wird die Banknote unabhängig von dem Computersystem aufbewahrt, beispielsweise in einem Safe oder Schließfach, kann die Wahrscheinlichkeit eines gleichzeitigen Kompromittierens oder einer gleichzeitigen Beschädigung sowohl des Computersystems als auch der Banknote deutlich reduziert werden. Die Banknote dient somit als ein Sicherheitsanker und als eine Art Backup für den privaten kryptographischen Schlüssel des Computersystems.

Hier bezeichnen sowohl der Begriff Banknotenkonto, als auch der Begriff Konto grundsätzlich dieselbe Art von anonymen Konten, d.h. zentrale Datenstrukturen zum Abwickeln von Zahlungen und zur Buchführung. Der Begriff Banknotenkonto verweist darauf, dass es sich bei dem entsprechenden Konto um ein einer Banknote zugeordnetes und kryptographisch an diese Banknote gebundenes Konto handelt.

Ausführungsformen können den Vorteil haben, dass ein eine einfache, komfortable und sichere Nutzung eines Kontos mittels des Computersystems, wie etwa einem Smartphone, ermöglicht wird: Das abgeleitete anonyme Konto erlaubt es dem Computersystem anonyme Zahlung auszuführen. Handelt es sich bei dem Computersystem um ein mobiles tragbares Endgerät, wie etwa ein Smartphone, sind entsprechende anonyme Zahlungen überall und jederzeit möglich. Zugleich wird ein hohes Maß an Sicherheit geboten, da die Banknote selbst als Backup dient. Selbst einem Verlust des Computersystems, besteht mittels der Banknote nach wie vor eine Zugriffsmöglichkeit auf das Konto des Computersystems. Zudem kann bietet die Banknote, etwa bei Implementierung eines Level 3 Merkmals, eine hohe Sicherheit bei Beschädigungen, da selbst bei Beschädigung ersetzt werden kann. Beispielsweise besitzt die Zentralbank Zugriff auf das Banknotenkonto und damit die abgeleiteten Bankkonten, womit sie im Falle einer Beschädigung der Banknote dem Nutzer Zugriff auf sein Geld gewähren kann.

Beispielsweise kann unter Verwendung einer Banknote mit Prozessor für ein Smartphone ein Konto bzw. ein privater kryptographischer Schlüssel für das entsprechende Konto abgeleitet werden. Ferner ermöglicht die Banknote mit Prozessor ein Revozieren des abhängigen Kontos, etwa im Falle eines Verlusts des Smartphones.

Beispielsweise zieht ein Nutzer eine entsprechende Banknote mit Prozessor aus einem Geldautomaten. Der Nutzer öffnet eine Applikation auf seinem Smartphone zum Ableiten eines Kontos bzw. eines privaten kryptographischen Schlüssels für das entsprechende Konto und initiiert den Vorgang. Beispielsweise tippt der Nutzer in einer graphischen Benutzeroberfläche auf eine Schaltfläche "Derivate" oder "Ableiten". Der Nutzer legt die Banknote an das Smartphone. Das Smartphone sendet eine Ableitungsanfrage (REQUEST to DERIV) an die Banknote. Beispielsweise leitet die Banknote einen privaten kryptographischen Schlüssel ab und sendet diesen in Antwort auf die Ableitungsanfrage an das Smartphone, welches unter Verwendung des privaten kryptographischen Schlüssels einen öffentlichen kryptographischen Schlüssel ableitet. Unter Verwendung des privaten kryptographischen Schlüssels kann der Nutzer mit dem Smartphone zahlen. Die asymmetrischen Schlüsselpaare könne auf ein und demselben Smartphone genutzt werden oder auf verschiedene Computersysteme, wie etwa Smartwatch, Tablet, Laptop oder Desktop PC, verteilt sein.

Falls dem Nutzer das Smartphone abhandenkommt, etwa durch Verlust oder Diebstahl, besitzt er nach wie vor die Banknote. Diese wird beispielsweise unabhängig von dem Smartphone an einem sicheren Ort verwahrt. Es besteht beispielsweise die Möglichkeit mehrere asymmetrischen Schlüsselpaare für mehrere Bankkonten mittels ein und derselben Banknote abzuleiten. Der Nutzer kann nunmehr beispielsweise ein anderes Smartphone oder Computersystem nutzen, um die abgeleiteten kryptographischen Schlüssel zu revozieren. Der Nutzer öffnet auf dem anderen Smartphone oder Computersystem eine zum Revozieren von Konto bzw. abgeleiteten kryptographischen Schlüsseln für die entsprechenden Bankkonten. Zum Initiieren des Vorgangs tippt der Nutzer in einer graphischen Benutzeroberfläche beispielsweise auf eine Schaltfläche "Revozieren ALLER abgeleiteter Konten" bzw. "Revoke ALL daughters". Der Nutzer legt die Banknote an das Smartphone oder Computersystem an. Die auf dem anderen Smartphone oder Computersystem bereitgestellte Applikation nun direkt die Banknote bzw. deren kryptographischen Schlüssel zum Signieren verwenden oder den bzw. die abgeleiteten privaten kryptographischen Schlüssel nochmals ableiten und zum Signieren verwenden. Somit könne die abgeleiteten Bankkonten revoziert und deren Beträge zurück an die Mutter, d.h. das Banknotenkonto überwiesen werden. Alternativ kann der Nutzer beispielsweise auch eine IBAN angeben, um das Geld von den abgeleiteten Bankkonten an die IBAN zu überweisen.

Der kryptographische Schlüssel der Banknote, beispielsweise ein privater kryptographischer Schlüssel ist sicher in einem Sicherheitselement der Banknote gespeichert, sodass er beispielsweise nicht ausgelesen werden kann. Da der kryptographische Schlüssel der Banknote nicht auslesbar ist, können Transaktionen von dem Banknotenkonto nur unmittelbar durch die Banknote erfolgen und nicht über eine dritte Anwendung. Ein Ableiten eines Kontos bzw. eines privaten kryptographischen Schlüssels eines Kontos für dein Computersystem, wie etwa ein Smartphone, ermöglicht Transaktionen ohne direkte Beteiligung der Banknote. Hierzu kann beispielsweise eine auf dem Smartphone bereitgestellte dritte Anwendung in Form einer entsprechenden Applikation verwendet werden. Zudem kann die Banknote mit Prozessor selbst sowohl als bargeldbasiertes Zahlungsmittel als auch als bargeldloses Zahlungsmittel verwendet werden.

Insbesondere lassen sich die Vorteile eines bargeldlosen Zahlens mit der Banknote durch das Ableitens auf das Computersystem, wie etwa ein Smartphone, übertragen. Das Banknotenkonto wie auch das abhängige bzw. abgeleitete Konto des Computersystems sind anonym und können prinzipiell beliebig weitergeben werden.

Ausführungsformen stellen zudem einen Sicherungsmechanismus für den Fall eines Verlusts des Computersystems mit dem abgeleiteten privaten kryptographischen Schlüssel bereit. So kann beispielsweise ein Smartphone verloren gehen, schwer beschädigt der gar zerstört werden oder in die falschen Hände geraten. Zwar sind moderne Smartphones und insbesondere deren Sicherheitselemente gegen unberechtigte Zugriffe mit PINs und biometrischen Prüfverfahren, wie etwa FacelD, geschützt, ein Restrisiko bleibt aber dennoch besteht.

Beispielsweise kann die Zahlung mittels der Banknote auf einer Blockchain basieren, wobei es sich bei dem Banknotenkonto und dem abhängigen Konto jeweils um Blockchain-Adressen handelt. Beispielsweise stellt eine Applikation auf dem Smartphone eine Ableitungsanfrage an die Banknote auf Erstellen von dem asymmetrischen Schlüsselpaar der Banknote abgeleiteten privaten kryptographischen Schlüssel für das Smartphone. Die Banknote leitet den privaten kryptographischen Schlüssel für das Smartphone ab. Das Smartphone bzw. die auf dem Smartphone installierte Applikation empfängt den abgeleiteten privaten kryptographischen Schlüssel direkt von der Banknote, beispielsweise via NFC. Der abgeleitete private kryptographische Schlüssel wird von der Applikation an ein Sicherheitselement des Smartphones weitergeleitet. Beispielsweise leitet das Smartphone selbst eine zugehörige Blockchain-Adresse, etwa basierend auf einem zugehörigen öffentlichen kryptographischen Schlüssel, oder eine zugehörige Seriennummer ab. Diese Blockchain-Adresse oder Seriennummer wird fortan beispielsweise für Zahlungen verwendet. Anschließend kann beispielsweise durch Zahlung, insbesondere durch einmalige Zahlung, der Banknote von dem Banknotenkonto an die Tochter, d.h. das Konto des Smartphones, Geld transferiert werden. Beispielsweise wird das Geld von einer Blockchain-Adresse der Banknote, d.h. dem Banknotenkonto, an eine Blockchain-Adresse des Smartphones, d.h. das Konto des Smartphones, transferiert. Mit dem Geld auf dem Konto, ist das Smartphone nunmehr in die Lage versetzt selbstständig Zahlungen und Transaktionen zu tätigen, ohne hierzu die Banknote oder deren kryptographischen Schlüssel zu benötigen.

Nach Ausführungsformen ist beispielsweise ein weiters Ableiten von weiteren privaten kryptographischen Schlüssel erlaubt, beispielsweise bis zu einer festgelegten Maximalzahl.

Geht der abgeleitete kryptographische Schlüssel beispielsweise verloren oder wird kompromittiert, kann der Nutzer die Banknote bzw. den in der Banknote sicher gespeicherten kryptographischen Schlüssel zum revozieren, d.h. zurückziehen, der abgeleiteten Schlüssel verwende. Beispielsweise kann der Nutzer den Besitz bzw. seien Zugriff auf die Banknote und den darin gespeicherten kryptographischen Schlüssel durch ein erneutes Ableiten des verloren gegangenen oder kompromittierten privaten kryptographischen Schlüssel verwenden. Der somit zurückgewonnene privaten kryptographischen Schlüssel kann beispielsweise für eine Transaktion von dem Konto des Smartphones an sich selbst verwendet werden. Die entsprechende Transaktion weist gegenüber einer verwaltenden Instanz, etwa einer Zentralbank den Besitz des entsprechenden privaten kryptographischen Schlüssels nach. Beispielsweise basiert die Zahlungsabwicklung auf einer Blockchain, in welcher die Transaktion protokolliert wird. Eine weitere Möglichkeit kann beispielsweise darin bestehen, dass durch ein Signieren einer Transaktion der Banknote, etwa an sich selbst, die gesamte Banknote inklusive der abhängigen Konten aufgelöst und alles Geld der Banknotenkontos sowie der abhängigen Konten beispielsweise an eine hinterlegte IBAN- bzw. SEPA-Adresse gesendet wird durch eine verwaltende Instanz, wie etwa eine Zentralbank. Die Zentralbank ist dazu in der Lage durch einen mit ihrem privaten kryptographischen Schlüssel signierten Eintrag das Banknotenkonto und die abhängigen Konten aufzulösen. Beispielsweise handelt es sich um Blockchain-Adressen, deren Kette abgebrochen bzw. terminiert werden kann. Dieser Ansatz entspricht einer vollständigen Revozierung.

Nach Ausführungsformen leitet die Banknote den ersten privaten kryptographischen Schlüssel für das abhängige anonyme Konto unter Verwendung des banknotenindividuellen zweiten kryptographischen Schlüssels ab und sendet den abgeleiteten ersten privaten kryptographischen Schlüssel in Antwort auf die Ableitungsanfrage an das Computersystem.

Ausführungsformen können den Vorteil haben, dass die Schlüsselableitung auf der Banknote erfolgt. Nach außen wird alleine der abgeleitete Schlüssel sichtbar. Ohne die Banknote gibt es mithin keinen Weg an den abgeleiteten Schlüssel zu gelangen.

Bei der Einwegfunktion handelt es sich um eine Funktion zur Schlüsselableitung, d.h. eine sogenannte "Key Derivation Function" (KDF). Diese führt eine kryptographische Operation aus, welche aus einem kryptographischen Schlüssel als Eingangswert einen oder mehrere weitere kryptographische Schlüssel als Ausgangswerte erzeugt. Eine Verwendung eines abgeleiteten kryptographischen Schlüssels kann den Vorteil haben, dass ein Angreifer, der Zugriff auf den abgeleiteten Schlüssel erhält, keine nützlichen Informationen über den ursprünglichen kryptographischen Schlüssel oder einen der anderen abgeleiteten kryptographischen Schlüssel erlangt.

Nach Ausführungsformen leitet die Banknote zusätzlich einen zu dem abgeleiteten ersten privaten kryptographischen Schlüssel zugehörigen ersten öffentlichen kryptographischen Schlüssel ab und sendet den abgeleiteten ersten privaten kryptographischen Schlüssel als Teil eines resultierenden ersten asymmetrischen Schlüsselpaars an das Computersystem.

Ausführungsformen können den Vorteil haben, dass zusätzlich zu dem privaten kryptographischen Schlüssel von der Banknote ein zugehöriger abgeleiteter öffentlicher kryptographischer Schlüssel bereitgestellt wird. Das Computersystem erhält mithin beispielsweise ein abgeleitetes asymmetrisches Schlüsselpaar. Der abgeleitete öffentliche Schlüssel kann dazu verwendet werden Kryptogramme, welche von dem Computersystem unter Verwendung des abgeleiteten privaten kryptographischen Schlüssels erzeugt werden zu validieren. Ferner kann der abgeleitete öffentliche kryptographische Schlüssel beispielsweise als Identifikationsnummer des abhängigen Kontos dienen. Beispielsweise handelt es sich bei dem Konto um ein blockchainbasiertes Konto und als dessen Blockchain-Adresse der abgeleitete öffentliche kryptographische Schlüssel verwendet wird oder dessen Blockchain-Adresse aus dem abgeleiteten öffentlichen kryptographischen Schlüssel abgleitet ist. Ein Ableiten einer Blockchain-Adresse umfasst beispielsweise ein Anwenden einer Hashfunktion auf den öffentlichen kryptographischen Schlüssel, welcher als Eingangswert dient.

Nach Ausführungsformen verwendet das Computersystem den abgeleiteten ersten privaten kryptographischen Schlüssel, um den zugehörigen ersten öffentlichen kryptographischen Schlüssel zu berechnen. Ausführungsformen können den Vorteil haben, dass das Computersystem die volle Verfügungshoheit über die Verwendung des abgeleiteten ersten privaten kryptographischen Schlüssels besitzt. Der erste öffentliche kryptographische Schlüssel wird beispielsweise mittels elliptischer Kurven aus dem privaten kryptographischen Schlüssel erzeugt.

Nach Ausführungsformen berechnet die Banknote aus dem banknotenindividuellen zweiten kryptographischen Schlüssel einen Eingangswert für die Einwegfunktion zum Ableiten des ersten privaten kryptographischen Schlüssels für das abhängige anonyme Konto und sendet den resultierenden Eingangswert zum Ableiten des ersten privaten kryptographischen Schlüssels durch das Computersystem in Antwort auf die Ableitungsanfrage an das Computersystem.

Ausführungsformen können den Vorteil haben, dass das Ableiten des ersten privaten kryptographischen Schlüssels durch das Computersystem ermöglicht wird. Die Banknote stellt hierzu einen abgeleiteten Eingangswert bereit. Der kryptographische Schlüssel der Banknote bleibt somit sicher auf der Banknote verwahrt.

Nach Ausführungsformen umfasst das Verfahren ferner ein Ableiten des ersten privaten kryptographischen Schlüssels für das abhängige anonyme Konto durch das Computersystem unter Verwendung der Einwegfunktion und des empfangenen Eingangswerts. Ausführungsformen können den Vorteil haben, dass das Ableiten des ersten privaten kryptographischen Schlüssels durch das Computersystem erfolgt.

Nach Ausführungsformen leitet das Computersystem den ersten privaten kryptographischen Schlüssel zusammen mit einem zugehörigen ersten öffentlichen kryptographischen Schlüssel als erstes asymmetrisches Schlüsselpaar ab. Ausführungsformen können den Vorteil haben, dass zusätzlich zu dem privaten kryptographischen Schlüssel von dem Computersystem ein zugehöriger abgeleiteter öffentlicher kryptographischer Schlüssel bereitgestellt wird. Das Computersystem verfügt mithin beispielsweise über ein abgeleitetes asymmetrisches Schlüsselpaar. Der abgeleitete öffentliche Schlüssel kann dazu verwendet werden Kryptogramme, welche von dem Computersystem unter Verwendung des abgeleiteten privaten kryptographischen Schlüssels erzeugt werden zu validieren. Ferner kann der abgeleitete öffentliche kryptographische Schlüssel beispielsweise als Identifikationsnummer des abhängigen Kontos dienen. Beispielsweise handelt es sich bei dem Konto um ein blockchainbasiertes Konto und als dessen Blockchain-Adresse der abgeleitete öffentliche kryptographische Schlüssel verwendet wird oder dessen Blockchain-Adresse aus dem abgeleiteten öffentlichen kryptographischen Schlüssel abgleitet ist. Ein Ableiten einer Blockchain-Adresse umfasst beispielsweise ein Anwenden einer Hashfunktion auf den öffentlichen kryptographischen Schlüssel, welcher als Eingangswert dient.

Nach Ausführungsformen handelt es sich bei dem banknotenindividuellen zweiten kryptographischen Schlüssel um einen zweiten privaten kryptographischen Schlüssel eines zweiten asymmetrischen Schlüsselpaars der Banknote.

Nach Ausführungsformen ist für die Banknote eine maximale Anzahl an Ableitungen von kryptographischen Schlüsseln für abhängige anonyme Bankkonten festgelegt. Ausführungsformen können den Vorteil haben, dass einerseits mehrere Ableitungen ermöglicht werden, andererseits aber die Anzahl möglicher Ableitungen begrenzt leibt. Die Ableitungen ermöglichen eine Flexibilität beispielsweise hinsichtlich verschiedener Computersysteme für welche mittels ein und derselbe Banknote abhängige bzw. abgeleitete Konten erstellt werden können. Beispielsweise können auch ein oder mehrere Computersysteme jeweils mehrere abhängige Konten erstellt werden. Bei den entsprechenden Konten handelt es sich jeweils um anonyme Konten. Indem mehrere anonyme Konten verwendet werden, kann insgesamt die Anonymität von Transaktionen weiter erhöht werden. In dem für verschiedene Transaktionen unterschiedliche anonyme Konten verwendet werden können, kann verhindert werden, dass die verschiedenen Transaktionen miteinander in Verbindung gebracht werden können. Es kann beispielsweise verhindert werden, dass die Transaktionen jeweils einem gemeinsamen Ursprung zugeordnet werden. Ferner kann eine Begrenzung der maximalen Anzahl an abhängigen Konten verhindern, dass die Abhängigkeit zu vielfältig und/oder zu komplex werden. Falls beispielsweise die Banknote revoziert wird, könne damit auch alle abhängigen Konten ihre Gültigkeit verlieren, d.h. ebenfalls revoziert werden. Durch eine Begrenzung der Anzahl an abhängigen Konten pro Banknote kann verhindert, dass mit einer Revidierung oder einer Ungültigkeit einer einzelnen Banknote zu viele abgeleitet Konten ihre Gültigkeit verlieren. Sollen mehr abhängige Konten zur Verfügung gestellt werden, so können beispielsweise ein oder mehrere weitere Banknoten zum Ableiten weiterer Konten verwendet werden, ohne dass für eine der verwendeten Banknoten die zulässige Höchstzahl von Ableitungen überschritten werden muss.

Nach Ausführungsformen umfasst die Banknote einen Zähler. Der Zähler startet bei null und erhöht sich mit jeder Ableitung um eins bis der Zähler die maximale Anzahl an Ableitungen erreicht. Nach Ausführungsformen startet der Zähler bei der maximalen Anzahl und reduziert sich mit jeder Ableitung ums eins bis der Zähler null erreicht.

Nach Ausführungsformen umfasst das Verfahren ferner:
- Erzeugen eines zahlungsindividuellen ersten Kryptogramms zur Freigabe einer initialen Zahlung von dem Banknotenkonto auf das abhängige Konto, wobei das erste Kryptogramm aus der Identifikationsnummer der Banknote und einem ersten zahlungsindividuellen Code als Eingangswerte unter Verwendung des banknotenindividuellen zweiten kryptographischen Schlüssels erzeugt wird,
- Senden einer das zahlungsindividuelle ersten Kryptogramm umfassenden ersten Zahlungsfreigabe an das Computersystem.

Ausführungsformen können den Vorteil haben, dass durch die initiale Zahlung eine Initialisierung bzw. Registrierung des abhängigen Kontos erfolgen kann. Ferner kann durch die initiale Zahlung beispielsweise ein initialer Geldbetrag von dem Banknotenkonto auf das abgeleitet Konto transferiert werden. Das Computersystem kann das Kryptogramm weiterleiten zum Eintragen der Transaktion in ein Register, welches beispielsweise von der die Banknote ausgebenden Zentralbank verwaltet wird. Bei dem Register kann es sich beispielsweise um eine Blockchain handeln. In diesem Fall handelt es sich bei dem Banknotenkonto bzw. der Identifikationsnummer der Banknote beispielsweise um eine Blockchain-Adresse der Banknote und bei dem Kryptogramm beispielsweise um eine Signatur der Transaktion mit dem kryptographischen Schlüssel der Banknote als Signaturschlüssel.

Beispielsweise dient diese initiale Zahlung bzw. Transaktion einer Initialisierung bzw. Registrierung des abhängigen Kontos. Mit der Eintragung der entsprechenden Transaktion in ein zentrales Zahlungsregister, etwa durch eine die Banknote ausgebende Zentralbank, wird das abhängige Konto beispielsweise registriert und ist mithin zur weiteren Verwendung für Transaktionen, insbesondere zum Ausführen von Transaktionen von dem anhängigen Konto auf anderen Konten, anerkannt. Dem Computersystem wird somit ein anonymes Konto bereitgestellt, mit welchem das Computersystem eine mit der Banknote vergleichbare Funktionalität zum bargeldlosen Zahlen erhält. Im Falle einer Blockchain stellt eine Eintragung mit dem ersten Kryptogramm beispielsweise einen Genesisblock bzw. Genesiseintrag für das abhängige Konto bzw. eine Blockchain-Adresse des abhängigen Kontos dar. Beispielsweise wird das abhängige Konto durch den Genesisblock bzw. Genesiseintrag einerseits selbst registriert. Beispielsweise wird durch den Genesisblock bzw. Genesiseintrag andererseits das Banknotenkonto der entsprechenden Banknote bzw. eine zugehörige Blockchain-Adresse als dasjenige Banknotenkonto registriert, von welchem das abhängige Konto abhängt. Beispielsweise sind in dem zentralen Zahlungsregister, wie etwa einer Blockchain, ausschließlich Banknotenkonten und von den Banknotenkonten abhängige Konten registriert. Beispielsweise ist eine Voraussetzung für ein registrieren eines zusätzlichen Kontos, eine Identifizierung eines Banknotenkontos, von welchem das entsprechende zusätzlichen Konto abhängig ist. Beispielsweise sind in dem zentralen Zahlungsregister, wie etwa einer Blockchain, neben Banknotenkonten und von den Banknotenkonten abhängige Konten lediglich ein oder mehrere Konten registriert, welche einer das zentrale Register verwaltenden Instanz, wie etwa einer Zentralbank zugeordnet sind.

Eine solche Registrierung des Banknotenkontos der entsprechenden Banknote bzw. einer zugehörigen Blockchain-Adresse für das abhängige Konto, erlaubt es der entsprechenden Banknote beispielsweise neben dem Banknotenkonto auch über das abhängige Konto zu verfügen. Beispielsweise können neben dem Computersystem, welches über den ersten privaten kryptographischen Schlüssel für das abhängige anonyme Konto verfügt, auch von der Banknote mit dem banknotenindividuellen zweiten kryptographischen Schlüssel Kryptogramme zur Freigabe von Transaktionen von dem abhängigen Konto erstellt werden. Damit stellt der banknotenindividuelle zweite kryptographische Schlüssel beispielsweise einen Generalschlüssel dar, mit welchem, infolge der Registrierung der Banknote für das abhängige Konto, auch auf das abhängige Konto zugegriffen werden kann. Beispielsweise kann unter Verwendung des banknotenindividuellen zweiten kryptographischen Schlüssels auch eine Revozierung des abhängigen Kontos erfolgen. Beispielsweise wird im Falle eines Revozierens des abhängigen Kontos ein zum Zeitpunkt des Revozierens aktuelles Guthaben des entsprechenden Kontos an das Banknotenkonto derjenigen Banknote, von welchem das abhängige Konto abhängig ist.

Beispielsweise wird die Zahlungsfreigabe zusammen mit dem ersten Kryptogramm in ein zentrales Register eingetragen. Das entsprechende Register wird beispielsweise von einer die Banknote ausgebenden Zentralbank verwaltet. Bei dem ersten Kryptogramm handelt es sich beispielsweise um eine mit dem banknotenindividuellen zweiten kryptographischen Schlüssel als Signaturschlüssel erstellten Signatur. Die Zahlungsfreigabe umfasst beispielsweise zusätzlich zu der Signatur die mit der Signatur signierten Daten. Beispielsweise umfasst die Zahlungsfreigabe die signierten Daten in Klartext. Beispielsweise ist ein zentrales Register, in welchem die Zahlungsfreigabe mit dem ersten Kryptogramm und/oder mit den signierten Daten als Eintrag gespeichert wird, zugriffsbeschränkt. Beispielsweise ist nur eine verwaltende Instanz, wie etwa eine die Banknoten ausgebende Zentralbank, zugriffsberechtigt. In diesem Fall können selbst Daten in Klartext von unberechtigten Zugriffen geschützt werden. Beispielsweise ist ein Teil der von der Zahlungsfreigabe umfassten, signierten Daten verschlüsselt. Beispielsweise sind sämtliche von der Zahlungsfreigabe umfassten signierten Daten verschlüsselt. Eine Verschlüsselung der signierten Daten kann beispielsweise unter Verwendung eines öffentlichen kryptographischen Schlüssels der das zentrale Register verwaltenden Zentralbank erfolgen. Beispielsweise handelt es sich bei dem zentralen Register um eine Blockchain, wobei das erste Kryptogramm in Form einer Signatur und/oder zusätzliche mittels des Kryptogramms signierte Daten als Eintrag eingetragen werden. Beispielsweise wird die vollständige Zahlungsfreigabe in die Blockchain eingetragen.

Zur Registrierung des Banknotenkontos und/oder des abhängigen Kontos umfasst die Zahlungsfreigabe beispielsweise die Identifikationsnummer des Banknotenkontos und/oder des abhängigen Kontos. Zur Registrierung des jeweils zugeordneten kryptographischen Schlüssels umfasst die Zahlungsfreigabe beispielsweise den ersten öffentlichen kryptographischen Schlüssel des abhängigen Kontos und/oder einen zweiten öffentlichen kryptographischen Schlüssel des Banknotenkontos. Beispielsweise umfasst die Zahlungsfreigabe im Falle einer Blockchain als zentrales Register eine Blockchain-Adresse des abhängigen Kontos und/oder des Banknotenkontos. Bei der Blockchain-Adresse des abhängigen Kontos und/oder des Banknotenkontos kann es sich beispielsweise um den ersten bzw. zweiten öffentlichen kryptographischen Schlüssel des abhängigen Kontos bzw. des Banknotenkontos handeln. Beispielsweise kann es sich bei der Identifikationsnummer des abhängigen Kontos und/oder des Banknotenkontos um die Blockchain-Adresse des abhängigen Kontos und/oder des Banknotenkontos handeln.

Nach Ausführungsformen umfasst das erste Kryptogramm ferner eine Angabe, welche angibt, wohin im Falle eines Revozierens des abhängigen Kontos, ein Guthaben des abhängigen Kontos zu transferieren ist. Ausführungsformen können den Vorteil haben, mit der initialen Zahlung bzw. Transaktion festgelegt werden kann, wohin im Falle eines Revozierens des abhängigen Kontos ein zum Zeitpunkt des Revozierens aktuelles Guthaben des entsprechenden Kontos transferiert wird. Das entsprechende Transferieren kann beispielsweise im Falle eines Revozierens automatisch erfolgen. Beispielsweise wird das entsprechende Transferieren von einer das zentrale Register verwaltenden Instanz, beispielsweise einer die Banknote ausgebenden Zentralbank, ausgeführt. Beispielsweise verwendet die verwaltende Instanz, wie etwa die Zentralbank, im Falle einer Blockchain hierzu einen Smart Contract.

Nach Ausführungsformen umfasst die Angabe eine Identifikationsnummer eines Banknotenkontos. Bei dem Banknotenkonto handelt es sich beispielsweise um das Banknotenkonto derjenigen Banknote, von welcher das abhängige Konto abhängig ist. Bei dem Banknotenkonto handelt es sich beispielsweise um ein weiteres Banknotenkonto einer weiteren Banknote. Ausführungsformen können den Vorteil haben, dass im Falle eines Revozierens des abhängigen Kontos ein zum Zeitpunkt des Revozierens aktuelles Guthaben des zu revozierenden Kontos auf das Banknotenkonto transferiert wird und dort zur Verfügung steht.

Nach Ausführungsformen umfasst die Angabe eine Identifikationsnummer eines weiteren abhängigen Kontos. Bei dem weiteren abhängigen Konto handelt es sich beispielsweise um ein Konto, welches von demselben Banknotenkonto abhängig ist. Bei dem weiteren abhängigen Konto handelt es sich beispielsweise um ein Konto, welches von einer weiteren Banknote abhängig ist. Ausführungsformen können den Vorteil haben, dass im Falle eines Revozierens des abhängigen Kontos ein zum Zeitpunkt des Revozierens aktuelles Guthaben des zu revozierenden Kontos auf das weitere abhängige Konto transferiert wird und dort zur Verfügung steht.

Nach Ausführungsformen umfasst die Angabe eine banknotenunabhängige Bankkontonummer. Die banknotenunabhängige Bankkontonummer identifiziert beispielsweise ein Bankkonto, welches unabhängig von Banknoten ist, d.h. weder ein Banknotenkonto, noch ein abhängiges Konto, und beispielsweise nicht Teil des zentralen Registers ist, welches Transaktionen Guthaben von Banknotenkonten und abhängigen Konten protokolliert. Bei der Bankkontonummer kann es sich beispielsweise um eine Internationale Bankkontonummer (International Bank Account Number/IBAN) handeln, wie sie beispielsweise in der ISO-Norm ISO 13616-1:2007 Teil 1 beschrieben ist. Ausführungsformen können den Vorteil haben, dass im Falle eines Revozierens des abhängigen Kontos ein zum Zeitpunkt des Revozierens aktuelles Guthaben des zu revozierenden Kontos auf ein von der banknotenunabhängige Bankkontonummer identifiziertes Bankkonto transferiert wird und dort zur Verfügung steht. Beispielsweise erfolgt das Transferieren auf das von der banknotenunabhängigen Bankkontonummer identifizierte Bankkonto durch eine das zentrale Register verwaltenden Instanz, beispielsweise einer die Banknote ausgebenden Zentralbank. Beispielsweise wird das zu transferierende Guthaben zunächst auf ein Konto der Zentralbank transferiert, welche dann eine Zahlung eines Betrags identischer Höher auf das von der banknotenunabhängigen Bankkontonummer identifizierte Bankkonto veranlasst, beispielsweise ohne Beteiligung des zentralen Registers. Das empfangene Guthaben wird von der Zentralbank beispielsweise mit der Zahlung des Betrags identischer Höher verrechnet.

Nach Ausführungsformen umfasst die initiale Zahlung von dem Banknotenkonto auf das abhängige Konto einen zu zahlenden Betrag von Null. Ausführungsformen können den Vorteil haben, dass die initiale Zahlung anhand des Betrags Null eindeutig als initiale Zahlung identifiziert werden kann, deren einziger Zweck in einer Initialisierung bzw. Registrierung des abhängigen Kontos besteht.

Nach Ausführungsformen umfasst die initiale Zahlung von dem Banknotenkonto auf das abhängige Konto einen zu zahlenden Betrag größer Null. Ausführungsformen können den Vorteil haben, dass mit der initialen Zahlung nicht nur eine Initialisierung bzw. Registrierung des abhängigen Kontos erzielt wird, sondern zudem ein initialer Betrag auf dem abhängigen Konto bereitgestellt wird.

Nach Ausführungsformen handelt es sich bei dem Computersystem um ein mobiles tragbares Endgerät. Bei einem solchen mobilen tragbaren Endgerät kann es sich beispielsweise um ein Smartphone oder aber auch um eine andere Art von mobilem tragbaren Endgerät, wie etwa einer Smartwatch, Smartglasses, einem Tablet oder einem Laptop handeln. Ein Bereitstellen von ein oder mehreren abhängigen Konten für ein mobiles tragbares Endgerät kann den Vorteil haben, dass der Nutzer das entsprechende mobile tragbare Endgerät bei sich tragen und somit jederzeit Transaktionen unter Nutzung der abhängigen Konten ausführen kann. Beispielsweise führt der Nutzer entsprechende mobile tragbare Endgerät unabhängig von einem Ausführen von Transaktionen mit sich. Eine zusätzliche Nutzung der entsprechenden mobilen tragbaren Endgeräte für ein Ausführung von anonymen Transaktionen kann den Vorteil haben, dass der Nutzer für die Transaktionen keinen zusätzlichen Gegenstand benötigt. Zudem dienen entsprechende Transaktionen beispielsweise einer Zahlung von Beträgen, welche in Kontext von Aktionen zu zahlen sind, in die ein entsprechendes mobiles tragbares Endgerät involviert ist. Beispielsweise werden entsprechende mobile tragbare Endgeräte zu Inanspruchnahme von kostenpflichtigen Diensten über das Internet, wie etwa einer Bestellung von Waren oder einem Herunterladen von Dateien verwendet. Ferner werden entsprechende mobile tragbare Endgeräte beispielsweise zum Authentifizieren des Nutzers des mobilen Endgeräts im Zuge einer Inanspruchnahme von kostenpflichtigen Diensten lokal vor Ort oder über ein Netzwerk, wie etwa das Internet verwendet. Wird zur Transaktion das entsprechende bereits involvierte mobile tragbare Endgerät verwendet, kann der gesamte Vorgang für den Nutzer vereinfacht werden.

Nach Ausführungsformen umfasst das Computersystem ein Sicherheitselement, welches einen geschützten Speicherbereich bereitstellt, in welchem der abgeleitete erste private kryptographische Schlüssel für das abhängige anonyme Konto gespeichert wird. Ausführungsformen können den Vorteil haben, dass der abgeleitete private kryptographische Schlüssel sicher auf dem Computersystem gespeichert werden kann.

Nach Ausführungsformen umfasst das Verfahren ferner ein Bereitstellen einer Identifikationsnummer für das abhängige Konto. Anhand der Identifikationsnummer kann das abhängige Konto identifiziert werden. Zugleich ist das Konto anonym, d.h. aus der Identifikationsnummer kann die Identität des Inhabers des Kontos bzw. des Nutzers des Computersystems nicht abgeleitet werden. Dem Konto sind beispielsweise keine weiteren personenbezogenen Daten des Inhabers des Kontos bzw. des Nutzers des Computersystems zugeordnet.

Nach Ausführungsformen wird die Identifikationsnummer für das abhängige Konto aus der Identifikationsnummer der Banknote abgeleitet. Beispielsweise kann es sich bei der zum Ableiten verwendeten Funktion um eine Einwegfunktion handeln. Beispielsweise können als Eingangswerte zum Ableiten der Identifikationsnummer für das abhängige Konto neben der Identifikationsnummer der Banknote weitere Werte verwendet werden. Beispielsweise können die Ableitungen durchnummeriert sein und jeweils die Ableitungsnummer als zusätzlicher Eingangswerte verwendet werden. Ausführungsformen können den Vorteil haben, dass ausgehend von der Identifikationsnummer der Banknote nachgeprüft werden kann, ob es sich bei dem abhängigen bzw. abhängigen Konto um ein von dem Banknotenkonto abhängiges Konto handelt. Umgekehrt ausgehend von der Identifikationsnummer des abhängigen Kontos nicht auf die Identifikationsnummer der Banknote geschlossen werden.

Nach Ausführungsformen handelt es sich bei der Identifikationsnummer für das abhängige Konto um den ersten öffentlichen kryptographischen Schlüssel des ersten abgeleiteten asymmetrischen Schlüsselpaars.

Nach Ausführungsformen wird die Identifikationsnummer für das abhängige Konto aus dem ersten öffentlichen kryptographischen Schlüssel des ersten abgeleiteten asymmetrischen Schlüsselpaars abgeleitet.

Nach Ausführungsformen handelt es sich bei der Identifikationsnummer für das abhängige Konto um eine Blockchain-Adresse.

Nach Ausführungsformen erfolgt das Ableiten der Identifikationsnummer für das abhängige Konto durch die Banknote und die abgeleitete Identifikationsnummer wird an das Computersystem gesendet. Beispielsweise wird die Identifikationsnummer für das abhängige Konto zusammen mit dem privaten kryptographischen Schlüssel für das Computersystem abgeleitet.

Nach Ausführungsformen erfolgt das Ableiten der Identifikationsnummer durch das Computersystem. Ausführungsformen können den Vorteil haben, dass der private kryptographische Schlüssel für das Computersystem zwar von der Banknote abgeleitet wird, die weitere Einrichtung des Kontos aber durch das entsprechende Computersystem erfolgt.

Nach Ausführungsformen umfasst das Verfahren ferner ein Zahlen mit dem Computersystem. Das Zahlen mit dem Computersystem umfasst:
- Empfangen einer Zahlungsanfrage für eine Zahlung mit dem Computersystem,
- Erzeugen eines zahlungsindividuellen zweiten Kryptogramms zur Freigabe der Zahlung mit dem Computersystem, wobei das zweite Kryptogramm aus der Identifikationsnummer des abhängigen Kontos und einem zweiten zahlungsindividuellen Code als Eingangswerte unter Verwendung des abgeleiteten ersten kryptographischen Schlüssels des abhängigen anonymen Kontos erzeugt wird,
- Senden einer das zahlungsindividuelle zweite Kryptogramm umfassenden zweiten Zahlungsfreigabe.

Ausführungsformen können den Vorteil haben, dass das Computersystem zum selbstständigen Ausführen von Transaktionen verwendet werden kann. Dabei wird insbesondere die Banknote nicht benötigt. Diese kann nach dem Ableiten des privaten kryptographischen Schlüssels für das Computersystem beispielsweise sicher verwahrt werden. Zum Ausführen der Zahlung ist die durch die Zahlungsfreigabe freigegebene Transaktion in ein Register einzutragen, welches beispielsweise von der die Banknote ausgebenden Zentralbank verwaltet wird. Beispielsweise sendet das Computersystem das von ihr erzeugte Kryptogramm an einen Server der Zentralbank oder an einen Server eines Zahlungsdienstleiters, welcher die Zahlung abwickelt. Bei dem Register kann es sich beispielsweise um eine Blockchain handeln. In diesem Fall handelt es sich bei dem anonymen Konto des Computersystems beispielsweise um eine Blockchain-Adresse und bei dem Kryptogramm beispielsweise um eine Signatur der Transaktion mit dem abgeleiteten kryptographischen Schlüssel als Signaturschlüssel. Das Computersystem kann das anonyme Konto zum bargeldlosen Zahlen verwenden. Dabei kann das Computersystem mit dem anonymen Konto als Ersatz für die Banknote mit dem Banknotenkonto verwendet werden, wobei die Banknote beispielsweise als Sicherheitsanker im aufbewahrt wird.

Nach Ausführungsformen umfasst das Verfahren ferner ein Zahlen mit der Banknote. Das Zahlen mit der Banknote umfasst:
- Empfangen einer Zahlungsanfrage für eine Zahlung mit der Banknote,
- Erzeugen eines zahlungsindividuellen dritten Kryptogramms zur Freigabe der Zahlung mit der Banknote, wobei das dritte Kryptogramm aus der Identifikationsnummer der Banknote und einem dritten zahlungsindividuellen Code als Eingangswerte unter Verwendung des banknotenindividuellen zweiten kryptographischen Schlüssels erzeugt wird,
- Senden einer das zahlungsindividuelle dritte Kryptogramm umfassenden dritten Zahlungsfreigabe.

Ausführungsformen können den Vorteil haben, dass auch die Banknote nach wie vor zum selbstständigen Ausführen von Transaktionen verwendet werden kann. Insbesondere kann die Banknote beispielsweise unabhängig dem Computersystem und dem abhängigen Konto zu Zahlungen verwendet werden. Zum Ausführen der Zahlung ist die durch die Zahlungsfreigabe freigegebene Transaktion in ein Register einzutragen, welches beispielsweise von der die Banknote ausgebenden Zentralbank verwaltet wird. Beispielsweise sendet die Banknote das von ihr erzeugte Kryptogramm an ein Terminal oder ein als Terminal agierendes Nutzercomputersystem, welches das entsprechende Kryptogramm an einen Server der Zentralbank oder an einen Server eines Zahlungsdienstleiters weiterleitet, welcher die Zahlung abwickelt. Bei dem Register kann es sich beispielsweise um eine Blockchain handeln. In diesem Fall handelt es sich bei dem anonymen Banknotenkonto beispielsweise um eine Blockchain-Adresse und bei dem Kryptogramm beispielsweise um eine Signatur der Transaktion mit dem kryptographischen Schlüssel der Banknote als Signaturschlüssel.

Nach Ausführungsformen umfasst das Verfahren ferner ein Revozieren des abhängigen Kontos. Nach Ausführungsformen wird zum Revozieren des abhängigen Kontos das Ableiten des abgeleiteten ersten privaten kryptographischen Schlüssels des zu revozierenden Kontos wiederholt und der abgeleitete erste private kryptographische Schlüssel zum Revozieren des zu revozierenden Kontos verwendet.

Ausführungsformen können den Vorteil haben, dass bei einer Kompromittierung des Computersystems, insbesondere bei einem Verlust, nach wie vor die Banknote zur Verfügung steht. Deren kryptographischer Schlüssel ermöglicht es das Ableiten des abgeleiteten ersten privaten kryptographischen Schlüssels zu wiederholen. Somit besitzt der Besitzer der Banknote, selbst wenn er keinen Zugriff mehr auf das Computersystem hat, nach wie vor eine Zugriffsmöglichkeit auf das abhängige anonyme Konto des Computersystems bzw. auf dessen abgeleiteten privaten kryptographischen Schlüssel.

Nach Ausführungsformen umfasst das Revozieren des abhängigen Kontos ferner:
- Erzeugen eines zahlungsindividuellen vierten Kryptogramms zu einer Freigabe einer Zahlung von dem zu revozierenden Konto an ein für das Revozieren des entsprechenden Kontos vorgesehenes Konto, wobei die Zahlung von dem Konto an sich selbst eine Revozierung des entsprechenden Kontos anzeigt,
- Senden einer das zahlungsindividuelle vierten Kryptogramm umfassenden vierten Zahlungsfreigabe.

Das entsprechende zahlungsindividuellen vierte Kryptogramm kann beispielsweise unter Verwendung des ersten privaten kryptographischen Schlüssels erzeugt werden. Liegt dieser erste private kryptographisch Schlüssel nicht mehr vor, so kann er beispielsweise durch ein Wiederholen des Ableitens unter Verwendung der Bankknote wiederhergestellt werden. Beispielsweise kann das zahlungsindividuelle vierte Kryptogramm unter Verwendung des banknotenindividuellen zweiten kryptographischen Schlüssels erzeugt werden. Liegt der erste private kryptographisch Schlüssel nicht mehr vor, so kann die entsprechende Zahlung beispielsweise von der Bankknote freigegeben werden. Beispielsweise ist hierfür eine Registrierung eines banknotenindividuellen zweiten öffentlichen kryptographischen Schlüssels, welcher mit dem banknotenindividuellen zweiten öffentlichen kryptographischen Schlüssel in Form eines privaten kryptographischen Schlüssels ein asymmetrisches Schlüsselpaar bildet, in dem zentralen Register notwendig. Bei dem zentralen Register handelt es sich beispielsweise um eine Blockchain.

Beispielsweise wird im Falle einer Blockchain zum Revozieren ein Smart Contract verwendet, in welchem festgelegt ist, dass eine entsprechende Zahlung ein Revozieren initiiert.

Nach Ausführungsformen handelt es sich bei dem für das Revozieren des zu revozierenden Kontos vorgesehenen Konto um das zu revozierende Konto selbst oder um ein für Revozierungszwecke von der die Banknote ausgebenden Zentralbank bereitgestelltes und verwaltetes Konto.

Ausführungsformen können den Vorteil haben, dass durch eine Zahlung von dem abhängigen Konto an sich selbst eine Revozierung des entsprechenden abhängigen Kontos durch den Kontoinhaber, welcher sich im Besitz des ersten privaten kryptographischen Schlüssels befindet, anzeigt werden kann. Ferner kann durch einen Eintrag der entsprechenden Transaktion in ein Register, wie etwa eine Blockchain, das Revozieren des entsprechenden Kontos in dem Register protokolliert werden. Somit kann unter Verwendung der Banknote, welche ein Ableiten des ersten privaten kryptographischen Schlüssels ermöglicht, alles, was für ein Revozieren des abhängigen Kontos notwendig ist, bereitgestellt werden. Ein solches Revozieren kann beispielsweise erfolgen, falls das abhängige Konto kompromittiert wurde und/oder falls das entsprechende Computersystem kompromittiert, etwa gestohlen, wurde. Ferner kann eine solche Zahlung von dem abhängigen Konto an sich selbst eine Transaktion des zum Zeitpunkt des Revozierens aktuelles Guthaben des entsprechenden Kontos an das Banknotenkonto derjenigen Banknote, von welcher das zu revozierende Konto abhängig ist, an ein Banknotenkonto einer weiteren Banknote, an ein weiteres abhängiges Konto, welches von derselben Banknote abhängig ist, oder an ein weiteres von einer weiteren Banknote abhängiges Konto initiieren. Beispielsweise kann eine solche Zahlung von dem abhängigen Konto an sich selbst initiieren, dass das zum Zeitpunkt des Revozierens aktuelle Guthaben des entsprechenden Kontos an ein banknotenunabhängiges Bankkonto, beispielsweise außerhalb des Registers transferiert wird. Beispielsweise wird das entsprechende Transferieren von einer das zentrale Register verwaltenden Instanz, beispielsweise einer die Banknote ausgebenden Zentralbank, ausgeführt. Beispielsweise verwendet die verwaltende Instanz, wie etwa die Zentralbank, im Falle einer Blockchain hierzu einen Smart Contract.

Beispielsweise umfasst die Zahlung von dem abhängigen Konto an sich einen zu zahlenden Betrag von Null. Beispielsweise umfasst die Zahlung von dem abhängigen Konto an sich einen zu zahlenden Betrag größer Null.

Alternativer Weise kann das vierte Kryptogramm eine Zahlung von dem zu revozierenden Konto an ein vorbestimmtes Konto der Zentralbank freigeben. Durch die entsprechende Zahlung wird das zu revozierende Konto revoziert und die Zahlung, welche beispielsweise das gesamte Guthaben des zu revozierenden Kontos zum Zeitpunkt des Revozierens umfasst, kann von der Zentralbank an ein anderes Konto weitergeleitet werden. Beispielsweise wird das Guthaben an eine hinterlegte IBAN- bzw. SEPA-Adresse weitergeleitet.

Nach Ausführungsformen umfasst das Revozieren des abhängigen Kontos ferner unter Verwendung der Banknote:
- Erzeugen eines zahlungsindividuellen fünften Kryptogramms zu einer Freigabe einer Zahlung von dem anonymen Banknotenkonto an das zu revozierende Konto, wobei die Zahlung von dem Banknotenkonto auf das zu revozierende Konto einen zu zahlenden Betrag von Null umfasst,
- Senden einer das zahlungsindividuelle fünften Kryptogramm umfassenden vierten Zahlungsfreigabe.

Ausführungsformen können den Vorteil haben, dass mit einer solchen Zahlung eines Betrags von Null von dem anonymen Banknotenkonto derjenigen Banknote, von welcher das zu revozierende Konto abhängig ist, an das zu revozierende abhängige Konto ein Revozieren des entsprechenden abhängigen Kontos initiiert werden kann. Beispielsweise reicht hierfür der banknotenindividuelle zweite kryptographische Schlüssel der Banknote aus. Beispielsweise wird im Falle einer Blockchain zum Revozieren ein Smart Contract verwendet, in welchem festgelegt ist, dass eine entsprechende Zahlung ein Revozieren initiiert.

Nach Ausführungsformen umfasst das Verfahren ferner ein Revozieren des der Banknote individuell zugeordneten anonymen Banknotenkontos unter Verwendung der Banknote. Ausführungsformen können den Vorteil haben, dass auch das Banknotenkonto revozierbar sein kann.

Nach Ausführungsformen umfasst das Revozieren des der Banknote individuell zugeordneten anonymen Banknotenkontos unter Verwendung der Banknote:
- Erzeugen eines zahlungsindividuellen sechsten Kryptogramms zur Freigabe einer Zahlung von dem zu revozierenden anonymen Banknotenkonto an sich selbst, wobei die Zahlung von dem Banknotenkonto an sich selbst eine Revozierung des entsprechenden Banknotenkontos anzeigt,
- Senden einer das zahlungsindividuelle sechste Kryptogramm umfassenden fünften Zahlungsfreigabe.

Eine Revozierung des Banknotenkontos kann durch eine entsprechende Zahlung von dem anonymen Banknotenkonto an sich selbst erfolgen. Ferner kann durch einen Eintrag der entsprechenden Transaktion in ein Register, wie etwa eine Blockchain, das Revozieren des anonymen Banknotenkonto in dem Register protokolliert werden.

Beispielsweise wird im Falle einer Blockchain zum Revozieren ein Smart Contract verwendet, in welchem festgelegt ist, dass eine entsprechende Zahlung ein Revozieren initiiert.

Beispielsweise umfasst die Zahlung von dem anonymen Banknotenkonto an sich einen zu zahlenden Betrag von Null. Beispielsweise umfasst die Zahlung von dem anonymen Banknotenkonto an sich einen zu zahlenden Betrag größer Null.

Alternativer Weise kann das fünfte Kryptogramm eine Zahlung von dem zu revozierenden Banknotenkonto an ein vorbestimmtes Konto der Zentralbank freigeben. Durch die entsprechende Zahlung wird das Banknotenkonto revoziert und die Zahlung, welche beispielsweise das gesamte Guthaben des Banknotenkontos umfasst, kann von der Zentralbank an ein anderes Konto weitergeleitet werden. Beispielsweise wird das Guthaben an eine hinterlegte IBAN- bzw. SEPA-Adresse weitergeleitet.

Nach Ausführungsformen umfasst ein Revozieren des der Banknote individuell zugeordneten anonymen Banknotenkontos automatisch ein Revozieren aller unter Verwendung der Banknote erstellten abhängigen Konten. Ausführungsformen können den Vorteil haben, dass mit dem Revozieren des anonymen Banknotenkontos zugleich alle abhängigen Konten revoziert werden können. Welche Banknoten von der Banknote des entsprechenden Banknotenkontos abhängig sind kann beispielsweise anhand des zentralen Registers der Transaktionen ermittelt werden, bei welchem es sich beispielsweise um eine Blockchain handelt. Beispielsweise kann ermittelt werden, an welche Konten initiale Zahlungen von dem entsprechenden anonymen Banknotenkonto ausgeführt wurden. Im Falle einer Blockchain können hierzu beispielsweise die Genesisblöcke bzw. Genesiseinträge der registrierten abhängigen Konten ausgewertet werden.

Beispielsweise wird bei einem Revozieren eines abhängigen Kontos das Guthaben des entsprechenden Kontos an das Banknotenkonto derjenigen Banknote transferiert, von welcher das abhängige Konto abhängig ist. Beispielsweise wird bei einem Revozieren eines abhängigen Kontos und/oder einem Banknotenkontos das Guthaben des entsprechenden Kontos an eine hinterlegte IBAN- bzw. SEPA-Adresse transferiert.

Nach Ausführungsformen umfasst das Verfahren ferner ein Wiederherstellen des abgeleiteten ersten privaten kryptographischen Schlüssels. Zum Wiederherstellen wird das Ableiten des ersten privaten kryptographischen Schlüssels des abhängigen Kontos wiederholt und der resultierende private kryptographische Schlüssel als wiederhergestellter erster privater kryptographischer Schlüssel zur Nutzung bereitgestellt.

Ausführungsformen können den Vorteil haben, dass eine Möglichkeit zu einem Wiederherstellen des abgeleiteten privaten kryptographischen Schlüssels, d.h. zu einer Key-Recovery, bereitgestellt wird. Ein Wiederherstellen des ersten privaten kryptographischen Schlüssels erfolgt beispielsweise, falls der bisher verwendete erste private kryptographische Schlüssel aufgrund eines Defekts, etwa eines Defektes des Computersystems, nicht mehr genutzt werden kann.

Ausführungsformen umfassen ferner eine Banknote, welche ein Sicherheitselement mit einem Prozessor und einem Speicher mit Programminstruktionen umfasst. In dem Speicher des Sicherheitselements ist eine Identifikationsnummer der Banknote gespeichert, welche ein von einer die Banknote ausgebenden Zentralbank verwaltetes und der entsprechenden Banknote individuell zugeordnetes anonymes Banknotenkonto identifiziert. In einem geschützten Speicherbereich des Speichers des Sicherheitselements ist ein banknotenindividueller zweiter kryptographischer Schlüssel gespeichert. Die Banknote umfasst ferner eine Kommunikationsschnittstelle. Der Prozessor ist dazu konfiguriert bei Ausführen der Programminstruktionen ein Verfahren zum Ableiten eines ersten privaten kryptographischen Schlüssels eines anonymen Kontos, welches von dem anonymen Banknotenkonto der Banknote abhängig ist, für ein Computersystem mit der Banknote auszuführen.

Das Verfahren umfasst:
- Empfangen einer Ableitungsanfrage zum Ableiten des ersten privaten kryptographischen Schlüssels für das abhängige anonyme Konto von dem Computersystem über die Kommunikationsschnittstelle,
- Initiieren eines Ableitens eines abgeleiteten ersten privaten kryptographischen Schlüssels für das abhängige anonyme Konto unter Verwendung einer Einwegfunktion und des banknotenindividuellen zweiten kryptographischen Schlüssels, wobei der abgeleitete erste private kryptographische Schlüssel zum Erzeugen von Kryptogrammen zur Freigabe von Zahlung von dem abhängigen Konto dient.

Nach Ausführungsformen ist die Banknote dazu konfiguriert jede der zuvor beschriebenen Ausführungsformen des Verfahrens zum Ableiten des privaten kryptographischen Schlüssels für das abhängige anonyme Konto auszuführen.

Ausführungsformen umfassen ferner ein System umfassend eine Banknote und ein Computersystem, welches einen Prozessor, einen Speicher mit Programminstruktionen und eine Kommunikationsschnittstelle umfasst. Der Prozessor ist dazu konfiguriert, bei Ausführen der Programminstruktionen ein Verfahren zum Ableiten eines ersten privaten kryptographischen Schlüssels eines anonymen Kontos, welches von einem einer Banknote individuell zugeordneten anonymen Banknotenkonto abhängig ist, für das Computersystem mit der Banknote auszuführen.

Das Verfahren umfasst:
- Senden einer Ableitungsanfrage zum Ableiten des ersten privaten kryptographischen Schlüssels für das abhängige anonyme Konto an die Banknote über die Kommunikationsschnittstelle,
- Empfangen einer Antwort auf die Ableitungsanfrage,
- Bereitstellen des unter Verwendung einer Einwegfunktion und des banknotenindividuellen zweiten kryptographischen Schlüssels der Banknote abgeleiteten ersten privaten kryptographischen Schlüssels für das abhängige anonyme Konto auf dem Computersystem, wobei zum Bereitstellen die empfangene Antwort verwendet wird,
- Speichern des bereitgestellten ersten privaten kryptographischen Schlüssels in einem geschützten Speicherbereich des Computersystems zum Erzeugen von Kryptogrammen zur Freigabe von Zahlung von dem abhängigen Konto.

Nach Ausführungsformen ist die Banknote dazu konfiguriert jede der zuvor beschriebenen Ausführungsformen des Verfahrens zum Ableiten des privaten kryptographischen Schlüssels für das abhängige anonyme Konto auszuführen.

Nach Ausführungsformen umfasst die Antwort der Banknote den von der Banknote unter Verwendung des banknotenindividuellen zweiten kryptographischen Schlüssels abgeleiteten ersten privaten kryptographischen Schlüssel, welcher auf dem Computersystem bereitgestellt wird.

Nach Ausführungsformen verwendet das Computersystem den von der Banknote empfangenen abgeleiteten ersten privaten kryptographischen Schlüssel zum Berechnen eines zugehörigen ersten öffentlichen kryptographischen Schlüssels.

Nach Ausführungsformen umfasst die Antwort der Banknote zusätzlich einen zu dem abgeleiteten ersten privaten kryptographischen Schlüssel zugehörigen ersten öffentlichen kryptographischen Schlüssel, welchen die Banknote zusätzlich zu dem abgeleiteten ersten privaten kryptographischen Schlüssel abgeleitet hat. Der abgeleitete erste private kryptographische Schlüssel wird in diesem Fall beispielsweise als Teil eines ersten abgeleiteten asymmetrisches Schlüsselpaar empfangen.

Nach Ausführungsformen umfasst die Antwort der Banknote einen von der Banknote aus dem banknotenindividuellen zweiten kryptographischen Schlüssel berechneten Eingangswert bzw. Seed für die Einwegfunktion zum Ableiten des ersten privaten kryptographischen Schlüssels. Das Bereitstellen des abgeleiteten ersten privaten kryptographischen Schlüssels umfasst beispielsweise ein verwenden des empfangenen Eingangswert zum Ableiten des ersten privaten kryptographischen Schlüssels mittels der Einwegfunktion durch das Computersystem.

Nach Ausführungsformen ist der Prozessor ferner dazu konfiguriert, bei Ausführen der Programminstruktionen ein Verfahren zum Zahlen mit dem Computersystem aufzuführen. Das Zahlen mit dem Computersystem umfasst:
- Empfangen einer Zahlungsanfrage für eine Zahlung mit dem Computersystem,
- Erzeugen eines zahlungsindividuellen zweiten Kryptogramms zur Freigabe der Zahlung mit dem Computersystem, wobei das zweite Kryptogramm aus der Identifikationsnummer des abhängigen Kontos und einem zweiten zahlungsindividuellen Code als Eingangswerte unter Verwendung des abgeleiteten ersten kryptographischen Schlüssels des abhängigen anonymen Kontos erzeugt wird,
- Senden einer das zahlungsindividuelle zweite Kryptogramm umfassenden zweiten Zahlungsfreigabe.

Nach Ausführungsformen handelt es sich bei dem Computersystem um ein mobiles tragbares Endgerät, beispielsweise ein Smartphone, eine Smartwatch, Smartglasses, ein Tablet oder ein Laptop.

Ausführungsformen umfassen ferner ein System zum Ableiten eines ersten privaten kryptographischen Schlüssels eines anonymen Kontos, welches anonymen Banknotenkonto abhängig ist, das einer Banknote nach einer der hierin beschrieben Ausführungsform individuell zugeordnet ist. Der erste private kryptographische Schlüssel wird unter Verwendung der Banknote abgeleitet und ist für ein Computersystem nach einer zuvor beschrieben Ausführungsformen bestimmt. Das System umfasst das Computersystem und die Banknote.

Nach Ausführungsformen ist das System dazu konfiguriert jede der zuvor beschriebenen Ausführungsformen des Verfahrens zum Ableiten des privaten kryptographischen Schlüssels für das abhängige anonyme Konto auszuführen.

Nach Ausführungsformen umfasst die Banknote beispielsweise eine visuelle Angabe einer die Banknote eindeutig identifizierenden Seriennummer. Nach Ausführungsformen umfasst die Banknote beispielsweise eine visuelle Angabe der Identifikationsnummer. Nach Ausführungsformen umfasst die Banknote beispielsweise eine visuelle Angabe eines der Banknote zugeordneten initialen Nominalwerts.

Beispielsweise definiert sich die im Umlauf befindliche und sowohl bargeldbasiert als auch bargeldlos transferierbare Geldmenge durch die Geldmenge bzw. der Summe der Nominalwerte, welche Banknotenkonten von Banknoten zugeordnet sind. Beispielsweise bleibt die im Umlauf befindliche Geldmenge gleich, falls die im Umlauf befindlichen Banknoten beibehalten werden. Das bedeutet beispielsweise, dass im Umlauf befindlichen Banknoten gleichbleiben können, sich aber in Folge von Transaktionen die den individuellen Banknoten zugeordneten Nominalwerte ändern können. Beispielsweise wäre es auch möglich die den Banknoten zugeordnete Geldmenge ohne die im Umlauf befindlichen Banknoten zu ändern, falls die Zentralbank Zahlungstransfers von Banknotenkonten zu anderen Konten, etwa in andere Systeme, wie z.B. dem GIRO SEPA System, und umgekehrt zulässt.

Da weder die Banknote noch deren Banknotenkonto einer rechtlichen oder natürlichen Peron zugeordnet sind, ermöglich die Banknote beispielsweise sowohl bargeldbasierte als auch bargeldlose anonyme Zahlungen, wie sie aktuell nur mit Bargeld möglich sind. Um Missbrauch vorzubeugen könnten beispielsweise zusätzlich Beschränkungen implementiert werden, welche transferierbare Geldmengen limitieren und/oder ab bestimmten Geldbeträgen zusätzliche Prüfmechanismen vorsehen. Entsprechende Prüfmechanismen könnten beispielsweise eine Freigabe der Transaktion durch die Zentralbank auf Basis einer Prüfung zusätzlicher als notwendig festgelegter Angaben zu der entsprechenden Transaktion erfordern.

Die Banknote und damit deren Nominalwert gemäß Banknotenkonto kann beispielsweise durch händische physische Übergabe weitergegeben werden, d.h. eine digitale Währung kann übergeben werden. Dafür ist beispielsweise kein persönliches Konto des Nutzers der Banknote, d.h. ein einer rechtlichen oder natürlichen Person zugeordnetes Konto, notwendig. Es kann beispielsweise Material und Aufwand gespart werden durch Reduzieren der rein analogen Währung. Insbesondere kann der Aufwand beim physischen Transfer und Transport von Banknoten reduziert werden. Eine solche Banknote kann beispielsweise aufgewertet und zur direkten Kontaktloszahlung genutzt werden, ohne oder nur mit beschränkter Kontrolle oder Nachverfolgen, da eine individuelle Banknote wie im Falle klassischen Bargelds jederzeit weitergeben werden kann.

Beispielsweise ist der aktuelle Nominalwert der Banknote zusätzlich in dem Speicher des Sicherheitselements hinterlegt. Ausschlaggeben für den tatsächlichen Nominalwert der Banknote ist deren Nominalwert gemäß Banknotenkonto. Beispielsweise kann der in der Banknote hinterlegte Nominalwert zu einer offline Bestimmung des aktuellen Nominalwerts verwendet werden. Beispielsweise wird der in der Banknote hinterlegte Nominalwert aktualisiert, wenn zum Abschluss einer Transaktion eine von der Zentralbank signierte Transaktionsbestätigung an die Banknote weitergeleitet wird. Beispielsweise verfügt das Sicherheitselement über einen Signaturprüfschlüssel zum Prüfen digitaler Signaturen der Zentralbank.

Der tatsächliche Nominalwert einer Banknote wird beispielsweise alleine von dem Nominalwert bzw. dem Guthaben des Banknotenkontos bestimmt, welches der Banknote zugeordnet ist. Um über das Guthaben des Banknotenkontos und damit den Nominalwert der Banknote verfügen zu können, ist der Besitz einer dem entsprechenden Banknotenkonto echten Banknote mit einem banknotenindividuellen kryptographischen Schlüssel notwendig.

Beispielsweise kann auf Basis des ermittelten aktuelle Nominalwerts entschieden werden, ob eine Bargeldzahlung oder eine bargeldlose Zahlung mit der Banknote erfolgen soll. Ist der aktuelle Nominalwert identisch mit dem zu zahlenden Betrag, erfolgt beispielsweise eine Bargeldzahlung, bei welcher die Banknote an den Zahlungsempfänger übergeben wird und das Eigentum an dieser an den Zahlungsempfänger übergeht. Ist der aktuelle Nominalwert größer als der zu zahlenden Betrag, erfolgt beispielsweise eine Bargeldlosezahlung. Bei der Bargeldlosezahlung wird beispielsweise eine entsprechende Zahlungsanfrage an die Banknote gesendet für eine Zahlung in Form einer Transaktion eines zu zahlenden Betrags von dem Banknotenkonto der Banknote an ein Konto, beispielsweise Banknotenkonto, eines Zahlungsempfängers. Die Banknote kann diese Transaktion mit einem zahlungsindividuellen Kryptogramm autorisieren.

Ist der aktuelle Nominalwert größer als der zu zahlenden Betrag, wäre es ebenso möglich, dass eine Bargeldzahlung erfolgt und der überzählige Betrag als Wechselgeld, beispielsweise in Form von Bargeld, etwa Banknoten mit passendem Nominalwert, von dem Zahlungsempfänger zurückgezahlt wird.

Beispielsweise kann der aktuelle Nominalwert jeden positiven Wert einschließlich Null annehmen. Das Banknotenkonto kann mithin beispielsweise nicht überzogen werden. Beispielsweise kann der aktuelle Nominalwert jeden Wert zwischen Null und einem vorgegebene Maximalnominalwert annehmen. Beispielsweise kann der aktuelle Nominalwert jeden Wert größer oder gleich einem vorgegebene Mindestnominalwert annehmen. Beispielsweise kann der aktuelle Nominalwert jeden Wert von einschließlich einem vorgegebene Mindestnominalwert bis einschließlich einem vorgegebene Maximalnominalwert annehmen.

Beispielsweise kann der Nominalwert der Banknote einen garantierten Mindestnominalwert und einen variablen Zusatznominalwertanteil umfassen. Der Mindestnominalwert kann beispielsweise nur in Form einer Bargeldzahlung mit Übergabe der Banknote gezahlt werden, während der variable Zusatznominalwertanteil im Zuge einer bargeldbasierten oder bargeldlosen Zahlungsabwicklung verwendet werden kann. Mit anderen Worten könnten mit der Banknote nur bargeldlose Zahlungen erfolgen, bei welchen der verbleidende Nominalwert der Banknote größer oder gleich dem Mindestnominalwert ist. Soll mit der Banknote ein Betrag gezahlt werden, welcher in einem verbleidenden Nominalwert resultieren würde, der kleiner dem Mindestnominalwert wäre, wird eine bargeldlose Zahlung unter Verwendung des Banknotenkontos beispielsweise blockiert. Mithin ist beispielsweise ein Mindestguthaben des Banknotenkontos in Form des garantierten Mindestnominalwerts festgelegt. In diesem Fall muss beispielsweise eine bargeldbasierte Zahlung erfolgen, bei welcher die Banknote übergeben wird. Ist der aktuelle Nominalwert der Banknote größer als der zu zahlende Betrag, so kann der Differenzbetrag beispielsweise in Form von Wechselgeld durch den Zahlungsempfänger rückerstattet werden.

Beispielsweise ist der initiale Nominalwert für die Banknote bzw. das Startguthaben des Banknotenkontos in einem Register der Zentralbank eingetragen und wird von dieser in einem von ihr verwalteten Zahlungssystem verbucht. Beispielsweise transferiert die Zentralbank im Zuge der Initialisierung der Banknote das Startguthaben von einem Konto der Zentralbank auf das Banknotenkonto der zu initialisierenden Banknote.

Beispielsweise sind die visuelle Gestaltung, die eingebrachten Sicherheitsmerkmale und/oder das Format der Banknote abhängig von deren initialem Nominalwert. Somit unterscheiden sich Banknoten mit unterschiedlichem initialem Nominalwert beispielsweise hinsichtlich ihrer visuellen Gestaltung, der eingebrachten Sicherheitsmerkmale und/oder des Formats voneinander. Banknoten mit identischem initialem Nominalwert weisen beispielsweise abgesehen von ein oder mehreren banknotenindividuellen Angaben, wie etwa Seriennummer, Angaben zum Ausstellungjahr etc., eine identische visuelle Gestaltung, identische Sicherheitsmerkmale und/oder Formate auf.

Beispielsweise umfasst die Banknote eine visuelle Angabe des Mindestnominalwerts. Beispielsweise ist der Mindestnominalwert für die Banknote bzw. das für das Banknotenkonto festgelegte Mindestguthaben in einem Register der Zentralbank eingetragen. Beispielsweise sind die visuelle Gestaltung, die eingebrachten Sicherheitsmerkmale und/oder das Format der Banknote abhängig von deren Mindestnominalwert. Somit unterscheiden sich Banknoten mit unterschiedlichen Mindestnominalwerten beispielsweise hinsichtlich ihrer visuellen Gestaltung, der eingebrachten Sicherheitsmerkmale und/oder des Formats voneinander. Banknoten mit identischen Mindestnominalwerten weisen beispielsweise abgesehen von ein oder mehreren banknotenindividuellen Angaben, wie etwa Seriennummer, Angaben zum Ausstellungjahr etc., eine identische visuelle Gestaltung, identische Sicherheitsmerkmale und/oder Formate auf.

Beispielsweise handelt es sich bei dem der Banknote zugeordneten initialen Nominalwert, welchen die Banknote als visuelle Angabe umfasst, um den gesamten Nominalwert, welcher der Banknote im Zuge ihrer Initialisierung von der Zentralbank auf das der Banknote zugeordnete Banknotenkonto transferiert wird. Beispielsweise handelt es sich bei dem gesamten der Banknote initial zugeordneten Nominalwert um den garantierten Mindestnominalwert und einen initialen Zusatznominalwertanteil. Der Zusatznominalwertanteil ist beispielsweise variable in Abhängigkeit von den Transaktionen, welche von dem und auf das Banknotenkonto der Banknote ausgeführt werden. Beispielsweise handelt es sich bei dem visuell angegebenen initialen Nominalwert um einen Anteil des gesamten Nominalwerts, welcher der Banknote im Zuge ihrer Initialisierung als Startguthaben auf dem Banknotenkonto zugeordnet wird. Beispielsweise handelt es sich bei dem entsprechenden Anteil um den Mindestnominalwert, wobei der tatsächliche gesamte Nominalwert initial größer sein kann, d.h. einen initialen Zusatznominalwertanteil umfassen kann. Beispielsweise ist der gesamte Nominalwert, welcher der Banknote im Zuge ihrer Initialisierung auf das Banknotenkonto transferiert wird, ein Mindestnominalwert der Banknote, welcher beispielsweise visuell auf der Banknote angegeben ist. In diesem Fall handelt es sich bei der visuellen Angabe des initialen Nominalwerts beispielsweise zugleich um eine visuelle Angabe des Mindestnominalwerts der Banknote. Beispielsweise unterscheidet sich der Mindestnominalwert von dem initialen Nominalwert. In diesem Fall umfasst die Banknote beispielsweise eine visuelle Angabe des Mindestnominalwerts zusätzlich zu der visuellen Angabe des initialen Nominalwerts.

Ein Hinzufügen eines variablen Zusatznominalwertanteils oder eine Erhöhung eines bestehenden variablen Zusatznominalwertanteils erfolgt beispielsweise durch eine Transaktion eines entsprechenden Betrags auf das Banknotenkonto der Banknote. Die Transaktion kann von einem anderen Konto stammen, beispielsweise einem Banknotenkonto einer anderen Banknote oder einem Konto der Zentralbank. Beispielsweise ist variable Zusatznominalwertanteil unbegrenzt erhöhbar. Beispielsweise ist der variable Zusatznominalwertanteil in Abhängigkeit von dem Mindestnominalwert und/oder dem initialen Nominalwert erhöhbar. Beispielsweise ist ein maximal zulässiger variabler Zusatznominalwertanteil für das Banknotenkonto der entsprechenden Banknote in einem von der Zentralbank verwalteten Register eingetragen. Beispielsweise beträgt der maximal zulässiger variabler Zusatznominalwertanteil der Banknote 100%, 200%, 300%, 400%, 500%, 600%, 700%, 800%, 900% oder 1000% des Mindestnominalwert der Banknote. Beispielsweise ist ein maximal zulässiger variable Zusatznominalwertanteil für alle von der Zentralbank ausgegebene Banknoten nach oben einheitlich begrenzt. Beispielsweise wird bei einer Transaktion an ein Banknotenkonto einer Banknote als Voraussetzung zum Ausführen der Transaktion geprüft, ob durch die Transaktion der maximal zulässige variable Zusatznominalwertanteil überschritten wird. Falls der maximal zulässige variable Zusatznominalwertanteil nicht überschritten wird, wird die Transaktion ausgeführt. Falls der maximal zulässige variable Zusatznominalwertanteil überschritten wird, wird die Transaktion nicht ausgeführt.

Die Banknote kann beispielsweise papier- und/oder kunststoffbasiert sein. Beispielsweise umfasst die Banknote ein oder mehrere Materialschichten. Als Materialien für die Materialschichten können beispielsweise Papier, Kunststoffe und/oder Metallfolien Verwendung finden. Ein Materialschicht kann auch Kombinationen mehreren dieser Materialen umfassen. Beispielsweise sind die Materialschichten zusammenlaminiert. Die Materialschichten können insbesondere elektronische Komponenten, etwa ein Sicherheitselement mit Prozessor und Speicher, eine Antenne, ein Display, eine Eingabevorrichtung und/oder Sensoren, umfassen oder in Kombination miteinander bilden. Die Banknote ist beispielsweise flexibel.

Die Banknote umfasst beispielsweise eine Mehrzahl von Sicherheitsmerkmale, welche es ermöglichen die Authentizität und Validität der Banknoten zu prüfen. Die Mehrzahl von Sicherheitsmerkmalen kann beispielsweise ein oder mehrere Level 1, Level 2 und/oder Level 3 Sicherheitsmerkmale umfassen. Level 1 Sicherheitsmerkmale sind Sicherheitsmerkmale, welche vom Menschen direkt erkannt und ohne weitere Hilfsmittel überprüft werden können. Level 2 Sicherheitsmerkmale sind maschinenlesbare Sicherheitsmerkmale, welche beispielsweise für kommerzielle Anforderungen zur Echtheitsprüfung von Banknoten verwendet werden. Level 3 Sicherheitsmerkmale sind Sicherheitsmerkmale, welche nur der ausgebenden Zentralbank bekannt. Zentralbanken verwenden solche geheim gehaltenen maschinenlesbaren Sicherheitsmerkmale, um die Integrität des Bargeldkreislaufs sicherzustellen und zu garantieren, nur echte Banknoten wieder in den Umlauf zu geben. Ferner verwenden Zentralbanken solche Level 3 Sicherheitsmerkmale, um echte Banknoten gegebenenfalls aus dem Umlauf zu nehmen und kontrolliert zu vernichten, falls die Umlauffähigkeit der entsprechenden Banknoten, beispielsweise aufgrund von Verschmutzung und/oder Verschleiß, nicht mehr ausreicht.

Die Sicherheitsmerkmale können beispielsweise taktile, akustische oder sichtbare Merkmale umfassen. Beispielsweise werden zur Herstellung der Banknote Materialien, wie etwa Sicherheitspapieren, mit einem charakteristischen haptischen Eindruck und/oder einem charakteristischen Klang beim Reiben und/oder Knüllen verwendet. Beispielsweise werden haptisch erfassbare Prägungen in die Banknote eingebracht. Beispielsweise werden visuell erfassbare Sicherheitsmerkmale, wie etwa Wasserzeichen, Durchsichtfenster, Durchsichtsregister, Passerdruckelemente, Folienelemente, Guillochen, Irisdruckelemente, Anti-Kopier-Raster, Melierfasern, Mikro-Perforationen, Mikroschriften, optisch variable Druckfarben, Perlglanzstreifen, Sicherheitsfaden und/oder Sonderfarben verwendet. Beispielsweise werden Sicherheitselemente wie etwa Metamerie-Farbkombinationen, Fluoreszierende Farben, diffraktive optische Elemente und/oder Scrambled-Indicia-Mikrodruckmuster verwendet.

Beispielsweise werden maschinenlesbare Sicherheitselemente verwendet, wie etwa Infraroteigenschaften der Druckfarbe, phosphoreszierende Farben, magnetische Elemente, Elemente mit charakteristischer elektrischer Leitfähigkeit und/oder Kopierschutzelemente, wie etwa ein digitales Wasserzeichen und/oder standardisierte Muster, beispielsweise eine EURion-Konstellation oder Omron-Ringe.

Beispielsweise umfasst die Banknote ein oder mehrere Sicherheitsmerkmale, welche nur der ausgebenden Zentralbank bekannt und/oder von dieser prüfbar sind, d.h. Level 3 Sicherheitsmerkmale, wie etwa das M-Feature der EZB.

Sicherheitsmerkmale, insbesondere Level 1 und Level 2 Sicherheitsmerkmale, können den Vorteil haben, dass sie es den Beteiligten ermöglichen eine Banknote ohne viel Aufwand auf ihre Echtheit, d.h. Authentizität und Validität, hin zu prüfen. Dies ermöglicht eine Verwendung der Banknote für Barzahlungen, welche eine Übergabe der Banknote von einem Zahlungspflichtigen an einen Zahlungsempfänger umfassen.

Unter einer "Kommunikationsschnittstelle" wird hier beispielsweise eine Schnittstelle verstanden, über die Daten empfangen und gesendet werden können, wobei die Kommunikationsschnittstelle kontaktbehaftet oder kontaktlos konfiguriert sein kann.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Eine kontaktlose Kommunikation mit der Banknote ist beispielsweise mittels Near Field Communication (NFC) möglich. Hierbei handelt es sich um eine auf der RFID-Technologie basierende Kommunikation zum kontaktlosen Austausch von Daten per elektromagnetischer Induktion mittels loser gekoppelter Spulen über kurze Strecken, von beispielsweise wenigen Zentimetern. NFC kann beispielsweise gemäß einer der Normen ISO 14443, 18092, 21481, ECMA 340, 352, 356, 362 bzw. ETSI TS 102 190 implementiert sein.

Die Kommunikationsschnittstelle der Banknote umfasst beispielsweise eine Antenne zur kontaktlosen Kommunikation. Die Antenne umfasst beispielsweise eine Induktionsspule. Die Induktionsspule kann ferner konfiguriert sein zur externen Energieversorgung der Banknote, beispielsweise mittels Energy Harvesting. Beispielsweise ist die Induktionsspule dazu konfiguriert, dass ein Terminal Energie in die Banknote einkoppelt.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" wird hier insbesondere ein nichtflüchtiger Speicher verstanden. Unter einem "nichtflüchtigen Speicher" wird hier beispielsweise ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Sicherheitselements möglich ist. Beispielsweise ist auf den geschützten Speicherbereich kein externer Zugriff möglich, d.h. Daten können hierher weder von außen eingebracht werden, noch nach außen ausgegeben werden. Beispielsweise können Daten über den Prozessor nach außen aus den geschützten Speicherbereich ausgelesen werden. Beispielsweise können Daten über den Prozessor von außen in den geschützten Speicherbereich eingebracht werden. Nach Ausführungsformen ist der Zugriff von dem bzw. über den mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln. Eine solche Prüfung kann beispielsweise auf einer elektronischen Signatur mit einem Signaturschlüssel beruhen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Verund/oder Entschlüsselung von Daten verwendet wird und an Dritte weitergegeben werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln und digitale mit dem privaten Schlüssel erstellte Signaturen zu prüfen. Ein privater Schlüssel ermöglicht es seinem Inhaber, mit dem öffentlichen Schlüssel verschlüsselte Daten zu entschlüsseln oder digitale Signaturen zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptographisches Verfahren, bei dem zu beliebigen Daten ein weiterer Datenwert, welcher als "Signatur" bezeichnet wird, berechnet wird. Bei einer Signatur kann es sich zum Beispiel um eine mit einem privaten kryptographischen Schlüssel verschlüsselten Hashwert der Ausgangsdaten handeln.

Unter einem Sicherheitselement wird hier beispielsweise eine elektronische Komponente verstanden, welche einen Prozessor und einen Speicher umfasst, und auf welche nur bestimmte vordefinierte Zugriffe ermöglicht werden. Beispielsweise können nur bestimmte Datenwerte, welche etwa in bestimmten Bereichen des Speichers abgelegt sind ausgelesen werden. Beispielsweise können in einem geschützten Speicherbereich abgelegt Datenwerte nicht ausgelesen werden. Beispielsweise ist zum Schreiben eines Datenwerts in den Speicher des Sicherheitselements eine digitale Signatur notwendig, deren Prüfschlüssel in dem Sicherheitselement hinterlegt ist. Beispielsweise besitzt nur der Prozessor Schreibrechte zum Schreiben von Daten in einen geschützten Speicherbereich.

Das Sicherheitselement stellt ferner beispielsweise kryptographische Kernroutinen in Form von kryptographischen Programminstruktionen mit kryptographischen Algorithmen für Signaturerstellung und/oder -prüfung, Schlüsselgenerierung, und/oder Zufallszahlengenerierung bereit und kann ferner als sicherer Speicher für kryptographische Schlüssel dienen.

Beispielsweise sind zumindest Teile des Sicherheitselements signiert. Vor einer Nutzung des Sicherheitselements wird geprüft, ob die Signatur bzw. die Signaturen, valide sind. Wenn eine der Signaturen nicht valide ist, wird die Nutzung des Sicherheitselements beispielsweise gesperrt.

Beispielsweise weist das Sicherheitselement physikalisch beschränkten Zugriffsmöglichkeiten. Zudem kann das Sicherheitselement I zusätzliche Maßnahmen gegen Missbrauch aufweisen, insbesondere gegen unberechtigte Zugriffe auf Daten im Speicher des Sicherheitselement. Beispielsweise umfasst ein Sicherheitselement Sensoren zur Überwachung des Zustands des Sicherheitselements sowie von dessen Umgebung, um Abweichungen vom Normalbetrieb zu erkennen, welche auf Manipulationsversuche hinweisen können. Entsprechende Sensortypen umfassen beispielweise einen Taktfrequenzsensor, einen Spannungssensor und/oder einen Lichtsensor. Taktfrequenzsensoren und Spannungssensoren erfassen beispielweise Abweichungen der Taktfrequenz, Temperatur und/oder Spannung nach oben oder unten von einem vordefinierten Normalbereich. Insbesondere kann ein Sicherheitselement nichtflüchtige Speicher mit einem geschützten Speicherbereich umfassen.

Beispielsweise umfassen die Mittel zum Schutz des Sicherheitselements gegen unbefugte Manipulationen mechanische Mittel, die z.B. das Öffnen des Sicherheitselements oder seiner Teile verhindern sollen, oder die bei dem Versuch eines Eingriffs in das Sicherheitselement dieses unbrauchbar machen, beispielsweise indem ein Datenverlust eintritt. Beispielsweise können hierzu zumindest Teile des Sicherheitselements in ein Material eingeschlossen, eingegossen und/oder einlaminiert sein, dessen versuchte Entfernung zu einer unvermeidlichen Zerstörung der entsprechenden Teile des Sicherheitselements führt.

Bei den visuellen Angaben handelt es sich beispielsweise um Informationen, welche in einer optisch lesbaren Form in die Banknote eingebracht sind. Beispielsweise sind diese Informationen auf die Banknote und/oder eine Materialschicht der Banknote aufgedruckt, eingeprägt, eingraviert, aus dieser ausgestanzt, ausgeschnitten oder auf eine sonstige optisch erfassbare Weise eingebracht. Diese visuellen Merkmale sind beispielsweise mit einem optischen Sensor, wie etwa einer Kamera, erfassbar.

Das Kryptogramm resultiert aus der Anwendung eines kryptographischen Algorithmus. Dabei werden beispielsweise die Identifikationsnummer der Banknote und ein zahlungsindividueller Code als Eingangswerte mit dem banknotenindividuellen kryptographischen Schlüssel verschlüsselt.

Nach Ausführungsformen ist die Identifikationsnummer ebenfalls in dem geschützten Speicherbereich des Speichers des Sicherheitselements gespeichert. Ausführungsformen können den Vorteil haben, dass die Identifikationsnummer ebenfalls vor effizient vor unberechtigten Zugriffen geschützt werden kann.

Nach Ausführungsformen umfasst die Banknote eine Mehrzahl von Sicherheitsmerkmalen. Ausführungsformen können den Vorteil haben, dass es unter Verwendung der Sicherheitsmerkmale, bei welchen es sich beispielsweise um Level 1, Level 2 und/oder Level 3 Sicherheitsmerkmale handelt, ermöglicht werden kann die Authentizität und Validität der Banknote zu prüfen. Nach Ausführungsformen umfassen ein oder mehrere Sicherheitsmerkmale der Mehrzahl von Sicherheitsmerkmalen eine Angabe der Seriennummer und/oder der Identifikationsnummer der Banknote. Ausführungsformen können den Vorteil haben, dass bei einem Erfassen der entsprechenden ein oder mehreren Sicherheitsmerkmale jeweils die Seriennummer und/oder der Identifikationsnummer der Banknote miterfasst werden kann. Als Bestandteil der entsprechenden Sicherheitsmerkmale kann anhand der Sicherheitsmerkmale nicht nur die Authentizität und Validität der Banknote an sich, sondern auch die Authentizität und Validität der Seriennummer und/oder der Identifikationsnummer der Banknote geprüft werden. Somit kann beispielsweise eine durch die entsprechenden Sicherheitsmerkmale gesicherte Verbindung bzw. Zuordnung der physischen Banknote und dem Banknotenkonto der Banknote bereitgestellt werden, welches beispielsweise unter Verwendung der Seriennummer und/oder der Identifikationsnummer der Banknote identifizierbar ist. Nach Ausführungsformen handelt es sich bei den ein oder mehreren Sicherheitsmerkmalen, welche eine Angabe der Seriennummer und/oder der Identifikationsnummer der Banknote umfassen, beispielsweise um Level 1, Level 2 und/oder Level 3 Sicherheitsmerkmale.

Nach Ausführungsformen umfasst die Banknote die visuelle Angabe der Seriennummer mehrfach über die Banknote verteilt. Ausführungsformen können den Vorteil haben, dass selbst bei einer teilweisen Beschädigung der Banknote, die Seriennummer erfasst werden kann. Beispielsweise sind Angaben der Seriennummer in Kombination mit und/oder als Bestandteil von mehreren Sicherheitsmerkmalen der Banknote in diese eingebracht. Dies könnte den Vorteil haben, dass solange genügend Sicherheitsmerkmale zur Bestätigung der Authentizität und Validität der Banknote vorliegen, die Seriennummer der Banknote erfasst werden kann.

Nach Ausführungsformen ist die Mehrzahl von Angaben der Seriennummer derart über die Banknote verteilt, dass sichergestellt werden kann, dass die Seriennummer der Banknote ermittelt werden kann, solange mehr als 50% der Banknote vorliegen. Ausführungsformen können den Vorteil haben, dass bei einem Verlust eines Teils der Banknote sichergestellt werden kann, dass solange mehr als 50% der Banknote vorliegen, was beispielsweise Voraussetzung für ein Ersetzen der Banknote ist, die vorliegenden mehr als 50% die Seriennummer der Banknote umfassen. Somit kann selbst bei einem teilweisen Verlust der Banknote sichergestellt, dass solange der verbliebene Teil bzw. die verbliebenen Teile der Banknote valide sind, die Seriennummer erfasst und der aktuelle Nominalwert der Banknote gemäß dem Banknotenkonto bestimmt werden kann.

Nach Ausführungsformen handelt es sich bei der Identifikationsnummer um eine Banknotenkontonummer des der Banknote individuell zugeordneten anonymen Banknotenkontos. Nach Ausführungsformen handelt es sich bei der Identifikationsnummer um eine unabhängig von der Seriennummer der Banknote erzeugte Nummer. Nach Ausführungsformen ist die unabhängig erzeugte Identifikationsnummer der Seriennummer der Banknote zugeordnet. Beispielsweise ist die Identifikationsnummer der Seriennummer unter Verwendung eines Eintrags in einem von der Zentralbank verwalteten Register zugeordnet, welcher die Identifikationsnummer der Seriennummer zuordnet.

Nach Ausführungsformen handelt es sich bei der Identifikationsnummer um die Seriennummer der Banknote. Nach Ausführungsformen handelt es sich bei der Identifikationsnummer um eine unter Verwendung der Seriennummer erzeugte Banknotenkontonummer des der Banknote individuell zugeordneten anonymen Banknotenkontos. Ausführungsformen können den Vorteil haben, dass anhand der von Angaben der Banknote, wie beispielsweise der Seriennummer der Banknote, das zugehörige Banknotenkonto identifiziert und somit der aktuelle Nominalwert der Banknote ermittelt werden kann.

Nach Ausführungsformen handelt es sich bei der Identifikationsnummer um eine Identifikationsnummer, welche der Banknotenkontonummer des der Banknote individuell zugeordneten anonymen Banknotenkontos, beispielsweise in einem Registereintrag eines von der ausgebenden Zentralbank verwalteten Registers, zugeordnet ist. Nach Ausführungsformen wird die Identifikationsnummer unabhängig von der Seriennummer der Banknote erzeugt und dieser, beispielsweise in einem Registereintrag eines von der ausgebenden Zentralbank verwalteten Registers, zugeordnet. Nach Ausführungsformen wird die Identifikationsnummer unabhängig von der Banknotenkontonummer des der Banknote individuell zugeordneten anonymen Banknotenkontos erzeugt und dieser, beispielsweise in einem Registereintrag eines von der ausgebenden Zentralbank verwalteten Registers, zugeordnet.

Ausführungsformen können den Vorteil haben, dass bei einer registerbasierten Zuordnung Zugriff auf das Register notwendig sein kann, um für eine Banknote das zugehörige Banknotenkonto ermitteln zu können. Bei einem von der ausgebenden Zentralbank verwalteten Register, ist es beispielsweise alleine der entsprechenden Zentralbank möglich das einer Banknote zugehörige Banknotenkonto zu ermitteln.

Nach Ausführungsformen umfasst der zahlungsindividuelle Code einen Zeitstempel und/oder eine Zufallszahl. Ausführungsformen können den Vorteil haben, dass das Kryptogramm für jede Zahlung effizient individualisiert werden kann. Ausführungsformen können den Vorteil haben, dass sichergestellt werden kann, dass Kryptogramm effizient individualisiert werden können. Mit anderen Worten kann so beispielsweise ausgeschlossen werden, dass für zwei verschiede Zahlungen mit derselben Banknote dasselbe Kryptogramm erzeugt wird, selbst bei Zahlung identischer Beträge an identische Zahlungsempfänger. Wird beispielsweise der Zentralbank ein Kryptogramm zur Autorisierung einer Zahlung vorgelegt, welches von der Zentralbank bereits verarbeitet wurde, folgt daraus, dass das vorgelegte Kryptogramm nicht(mehr) gültig ist.

Nach Ausführungsformen handelt es sich bei dem banknotenindividuellen kryptographischen Schlüssel um einen symmetrischen kryptographischen Schlüssel. Nach Ausführungsformen handelt es sich bei dem banknotenindividuellen kryptographischen Schlüssel um einen privaten kryptographischen Schlüssel eines banknotenindividuellen asymmetrischen Schlüsselpaars.

Nach Ausführungsformen handelt es sich bei der Seriennummer und/oder bei der Identifikationsnummer der Banknote um den einen öffentlichen kryptographischen Schlüssel des banknotenindividuellen asymmetrischen Schlüsselpaars der Banknote, um einen aus dem öffentlichen kryptographischen Schlüssel der Banknote abgeleitete Nummer und/der eine dem öffentlichen kryptographischen Schlüssel der Banknote zugeordneten Nummer. Eine entsprechende Zuordnung kann beispielsweise unter Verwendung eines entsprechenden Zuordnungseintrags in einem von der ausgebenden Zentralbank verwalteten Registers erfolgen.

Nach Ausführungsformen umfasst die Banknote eine visuelle Angabe des öffentlichen kryptographischen Schlüssels der Banknote, eines aus dem öffentlichen kryptographischen Schlüssel der Banknote abgeleiteten Werts und/oder eines dem öffentlichen kryptographischen Schlüssel der Banknote zugeordneten Werts. Eine entsprechende Zuordnung kann beispielsweise unter Verwendung eines entsprechenden Zuordnungseintrags in einem von der ausgebenden Zentralbank verwalteten Registers erfolgen.

Nach Ausführungsformen umfassen ein oder mehrere Sicherheitsmerkmale der Mehrzahl von Sicherheitsmerkmalen eine Angabe des öffentlichen kryptographischen Schlüssels der Banknote, eines aus dem öffentlichen kryptographischen Schlüssel der Banknote abgeleiteten Werts und/oder eines dem öffentlichen kryptographischen Schlüssel der Banknote zugeordneten Werts. Eine entsprechende Zuordnung kann beispielsweise unter Verwendung eines entsprechenden Zuordnungseintrags in einem von der ausgebenden Zentralbank verwalteten Registers erfolgen. Ausführungsformen können den Vorteil haben, dass bei einem Erfassen der entsprechenden ein oder mehreren Sicherheitsmerkmale jeweils der öffentliche kryptographische Schlüssel der Banknote, ein aus dem öffentlichen kryptographischen Schlüssel der Banknote abgeleiteter Wert und/oder ein dem öffentlichen kryptographischen Schlüssel der Banknote zugeordneter Wert miterfasst werden kann. Als Bestandteil der entsprechenden Sicherheitsmerkmale kann anhand der Sicherheitsmerkmale nicht nur die Authentizität und Validität der Banknote an sich, sondern auch die Authentizität und Validität des öffentlichen kryptographischen Schlüssels der Banknote, eines aus dem öffentlichen kryptographischen Schlüssel der Banknote abgeleiteten Werts und/oder eines dem öffentlichen kryptographischen Schlüssel der Banknote zugeordneten Werts geprüft werden. Somit kann beispielsweise eine durch die entsprechenden Sicherheitsmerkmale gesicherte Verbindung bzw. Zuordnung der physischen Banknote und dem Banknotenkonto der Banknote bereitgestellt werden, welches beispielsweise unter Verwendung des öffentlichen kryptographischen Schlüssels der Banknote, eines aus dem öffentlichen kryptographischen Schlüssel der Banknote abgeleiteten Werts und/oder eines dem öffentlichen kryptographischen Schlüssel der Banknote zugeordneten Werts identifizierbar ist. Nach Ausführungsformen handelt es sich bei den ein oder mehreren Sicherheitsmerkmalen, welche eine Angabe der Seriennummer und/oder der Identifikationsnummer der Banknote umfassen, beispielsweise um Level 1, Level 2 und/oder Level 3 Sicherheitsmerkmale.

Nach Ausführungsformen gibt die Zahlungsanfrage einen zu zahlenden Betrag an und der zu zahlende Betrag wird als zusätzlicher Eingangswert zum Erzeugen des zahlungsindividuellen Kryptogramms verwendet. Ausführungsformen können den Vorteil haben, dass bei der Individualisierung des Kryptogramms ferner der zu zahlenden Betrag berücksichtigt wird.

Nach Ausführungsformen umfasst die Zahlungsautorisierung ferner die Identifikationsnummer und/oder den zahlungsindividuellen Code in Klartext. Ausführungsformen können den Vorteil haben, dass die in Klartext bereitgestellte Identifikationsnummer und/oder der zahlungsindividuelle Code zur Prüfung der Validität des Kryptogramms verwendet werden können. Ferner kann unter Verwendung der Identifikationsnummer das Banknotenkonto identifiziert werden, von welchem die Zahlung erfolgen soll.

Nach Ausführungsformen umfasst die Zahlungsautorisierung ferner den zu zahlenden Betrag in Klartext. Ausführungsformen können den Vorteil haben, dass der in Klartext bereitgestellte Betrag zur Prüfung der Validität des Kryptogramms verwendet werden können. Ferner ist so der zu zahlende Betrag ohne zusätzliche kryptographische Verarbeitungsschritte ersichtlich.

Nach Ausführungsformen umfasst die Banknote eine Kommunikationsschnittstelle zur Kommunikation mit einem Terminal. Die Banknote empfängt die Zahlungsanfrage von dem Terminal über die Kommunikationsschnittstelle und/oder sendet die Zahlungsautorisierung über die Kommunikationsschnittstelle an das Terminal.

Nach Ausführungsformen umfasst die Banknote eine Nutzerschnittstelle zur Kommunikation mit einem Nutzer der Banknote, wobei die Banknote die Zahlungsanfrage von einem Nutzer über eine Eingabevorrichtung der Nutzerschnittstelle empfängt und/oder die Zahlungsautorisierung an die Nutzerschnittstelle zum Ausgeben über eine Anzeigevorrichtung der Nutzerschnittstelle sendet. Bei dem Terminal kann es sich beispielsweise um ein Terminal eines Verkäufers an einem Verkaufsort (engl.: "Point of Sale"/PoS), d.h. an dem Ort, an dem ein Verkauf vollzogen wird, handeln. Bei dem Terminal kann es sich ferner um ein Terminal handeln, welches an ein Nutzercomputersystem angeschlossen ist, über welches eine Zahlung mit der Banknote abgewickelt werden soll. Beispielsweise handelt es sich hierbei um eine Zahlungsabwicklung über ein Netzwerk, etwa das Internet, gegenüber einem Dienstanbieter, sei es ein Verkäufer oder ein Zahlungsdienstanbieter. Ebenso könnte das Terminal in Form eines mobilen tragbaren Kommunikationsgeräts, etwa einem Smartphone, eines Nutzers bereitgestellt werden. Der Nutzer könnte das mobile tragbare Kommunikationsgerät beispielsweise für eine Zahlungsabwicklung über ein Netzwerk, etwa das Internet, gegenüber einem Dienstanbieter nutzen, sei es ein Verkäufer oder ein Zahlungsdienstanbieter.

Nach Ausführungsformen umfasst die Banknote eine Nutzerschnittstelle zur Kommunikation mit einem Nutzer der Banknote, wobei die Banknote die Zahlungsanfrage von einem Nutzer über eine Eingabevorrichtung der Nutzerschnittstelle empfängt und/oder die Zahlungsautorisierung an die Nutzerschnittstelle zum Ausgeben über eine Anzeigevorrichtung der Nutzerschnittstelle sendet. Ausführungsformen können den Vorteil haben, dass die für den Nutzer sichtbar ist und/oder gesteuert wird, welche Daten in die Banknote eingegeben werden und welche Daten die Banknote ausgibt.

Die Eingabevorrichtung kann beispielsweise ein Touch-Pad umfassen. Die Anzeigevorrichtung kann beispielsweise ein Display umfassen. Die Eingabevorrichtung kann beispielsweise mit der Anzeigevorrichtung kombiniert sein, etwa in Form eines Touch-Displays. Der Nutzer gibt die Daten der Zahlungsanfrage beispielsweise unter Verwendung der Eingabevorrichtung in Banknote ein.

Beispielsweise wird dem Nutzer die Zahlungsanfrage und/oder die Zahlungsautorisierung auf der Anzeigevorrichtung der Banknote angezeigt. Eine Bestätigung der angezeigten Zahlungsanfrage und/oder Zahlungsautorisierung durch den Nutzer unter Verwendung der Eingabevorrichtung der Banknote ist beispielsweise Voraussetzung für ein Erzeugen der Zahlungsautorisierung.

Beispielsweise wird die Zahlungsautorisierung an die Anzeigevorrichtung der Banknote zum Anzeigen gesendet, etwa als alphanumerischer Zeichenfolg, Bar-Code, oder QR-Code. Die auf der Anzeigevorrichtung angezeigte Zahlungsautorisierung kann beispielsweise unter Verwendung eines optischen Sensors, etwa eines Sensors eines Terminals, gescannt bzw. eingelesen werden.

Nach Ausführungsformen ist in dem Speicher des Sicherheitselements ferner ein aktueller Nominalwert der Banknote gespeichert. Ausführungsformen können den Vorteil haben, dass der aktuelle Nominalwert aus der Banknote ausgelesen werden kann. Beispielsweise legt den tatsächlich verbindlichen Nominalwert der Banknote aber der Kontostand des zugehörigen Banknotenkontos fest.

Beispielsweise ist der aktuelle Nominalwert in dem geschützten Speicherbereich des Speichers des Sicherheitselements gespeichert. Beispielsweise ist der aktuelle Nominalwert nicht in dem geschützten Speicherbereich des Speichers des Sicherheitselements gespeichert. Beispielsweise ist der in dem Speicher des Sicherheitselements gespeicherte aktueller Nominalwert der Banknote von außen auslesbar. Beispielsweise ist der in dem Speicher des Sicherheitselements gespeicherte aktueller Nominalwert der Banknote nicht von außen auslesbar. Beispielsweise dient der in dem Speicher des Sicherheitselements gespeicherte aktueller Nominalwert der Banknote alleine einer internen Prüfung, etwa, ob ein zu zahlender Betrag kleiner gleich dem aktuellen Nominalwert der Banknote ist.

Nach Ausführungsformen ist ferner die Seriennummer der Banknote in dem Speicher des Sicherheitselements gespeichert.

Nach Ausführungsformen ist initial als aktueller Nominalwert der initiale Nominalwert der Banknote in dem Speicher des Sicherheitselements gespeichert. Ausführungsformen können den Vorteil haben, dass ausgehend von diesem initialen Nominalwert bei jeder erfolgreich abgewickelten Zahlung der gespeicherte Nominalwert angepasst wird und somit banknotenseitig der aktuelle Nominalwert nachverfolgt werden kann.

Nach Ausführungsformen ist der Prozessor ferner dazu konfiguriert bei Ausführen der Programminstruktionen den zu zahlenden Betrag mit dem gespeicherten aktuellen Nominalwert der Banknote abzugleichen und das zahlungsindividuelle Kryptogramm zur Freigabe bzw. Autorisierung der Zahlung nur unter der Voraussetzung zu erzeugen, dass der gespeicherte aktuelle Nominalwert größer oder gleich dem zu zahlenden Betrag ist. Ausführungsformen können den Vorteil haben, dass sichergestellt werden kann, dass der aktuelle Nominalwert für die auszuführende Zahlung ausreichend ist.

Nach Ausführungsformen ist der Prozessor ferner dazu konfiguriert bei Ausführen der Programminstruktionen ein Aktualisierungsverfahren zum Aktualisieren des gespeicherten aktuellen Nominalwerts der Banknote auszuführen. Das Aktualisierungsverfahren umfasst:
- Empfangen einer Aktualisierungsanfrage zum Aktualisieren des in dem Speicher des Sicherheitselements gespeicherten aktuellen Nominalwerts der Banknote, wobei die Aktualisierungsanfrage einen aktualisierten Nominalwert der Banknote zusammen mit einer kryptographisch gesicherten Bestätigung der ausgebenden Zentralbank für den aktualisierten Nominalwert umfasst,
- Prüfen der kryptographisch gesicherten Bestätigung unter Verwendung eines in dem Speicher des Sicherheitselements gespeicherten kryptographischen Prüfschlüssels,
- im Falle einer erfolgreichen Prüfung, Ersetzten des in dem Speicher des Sicherheitselements gespeicherten aktuellen Nominalwerts der Banknote mit dem empfangenen aktualisierten Nominalwert.

Ausführungsformen können den Vorteil haben, dass sichergestellt werden kann, dass der gespeicherte Nominalwert aktualisiert ist. Nach Ausführungsformen handelt es sich bei dem kryptographischen Prüfschlüssel um den banknotenindividuellen kryptographischen Schlüssel, beispielsweise um einen symmetrischen kryptographischen Schlüssel. Nach Ausführungsformen handelt es sich bei dem kryptographischen Prüfschlüssel um einen zusätzlichen zu dem banknotenindividuellen kryptographischen Schlüssel in dem Speicher des Sicherheitselements gespeicherten kryptographischen Prüfschlüssel, beispielsweise einen öffentlichen kryptographischen Schlüssel eines der Zentralbank zugeordneten asymmetrischen Schlüsselpaars. Der Signaturprüfschlüssel wird beispielsweise im Zuge der Herstellung der Banknote in dem Sicherheitselement hinterlegt.

Nach Ausführungsformen wird die Aktualisierungsanfrage in Antwort auf das Senden der Zahlungsautorisierung empfangen. Beispielsweise handelt es sich bei der Bestätigung der Zentralbank für den aktualisierten Nominalwert um eine Zahlungsbestätigung der Zentralbank. Beispielsweise handelt es sich bei dem aktualisierten Nominalwert um den bisherigen Nominalwert der Banknote abzüglich des gezahlten Betrags.

Nach Ausführungsformen wird die Aktualisierungsanfrage in Antwort auf einen Zahlungstransfer eines zusätzlichen Betrags auf das der Banknote individuell zugeordnete anonyme Banknotenkonto gesendet. Beispielsweise handelt es sich bei dem aktualisierten Nominalwert um den bisherigen Nominalwert der Banknote zuzüglich des zusätzlichen Betrags. Ausführungsformen können den Vorteil haben, dass auch Änderungen des Nominalwerts im Zuge eines Zahlungstransfer eines zusätzlichen Betrags auf das der Banknote berücksichtigt werden.

Nach Ausführungsformen ist für einen Zahlungstransfer eines zusätzlichen Betrags auf das Banknotenkonto der Banknote keine Autorisierung durch die entsprechende Banknote notwendig.

Nach Ausführungsformen ist für einen Zahlungstransfer eines zusätzlichen Betrags auf das Banknotenkonto der Banknote eine Autorisierung durch die entsprechende Banknote notwendig. Die Autorisierung erfolgt beispielweise analog zu der Autorisierung von Zahlungen mit der Banknote. Die Autorisierung umfasst beispielsweise:
- Empfangen einer Zahlungsanfrage für eine Zahlung auf das Banknotenkonto der Banknote,
- Erzeugen eines zahlungsindividuellen Kryptogramms zur Autorisierung der Zahlung auf das Banknotenkonto der Banknote, wobei das Kryptogramm aus der Identifikationsnummer der Banknote und einem zahlungsindividuellen Code als Eingangswerte unter Verwendung des banknotenindividuellen kryptographischen Schlüssels erzeugt wird,
- Senden einer das zahlungsindividuelle Kryptogramm umfassenden Zahlungsautorisierung.

Das zahlungsindividuelle Kryptogramm zur Autorisierung der Zahlungstransfers des zusätzlichen Betrags auf das Banknotenkonto der Banknote kann beispielsweise in analoger Weise zu dem zahlungsindividuellen Kryptogramm zur Autorisierung von Zahlungen mit der Banknote gebildet werden. Ausführungsformen können den Vorteil haben, dass sichergestellt werden kann, dass die Banknote Kenntnis von Zahlungen auf das Banknotenkonto und damit verbunden Änderungen des Nominalwerts der Banknote erhält.

Nach Ausführungsformen umfasst die kryptographisch gesicherte Bestätigung der ausgebenden Zentralbank den verschlüsselten aktualisierten Nominalwert der Banknote. Nach Ausführungsformen umfasst die kryptographisch gesicherte Bestätigung der ausgebenden Zentralbank den aktualisierten Nominalwert zusammen mit der Identifikationsnummer und/oder der Seriennummer der Banknote in verschlüsselter Form. Nach Ausführungsformen umfasst die kryptographisch gesicherte Bestätigung der ausgebenden Zentralbank den aktualisierten Nominalwert zusammen mit einem Zeitstempel in verschlüsselter Form. Nach Ausführungsformen wird zunächst eine Hashfunktion auf die zu verschlüsselnden Daten, beispielsweise aktualisierter Nominalwert, Identifikationsnummer, Seriennummer und/oder Zeitstempel, angewendet und der resultierende Hashwert verschlüsselt.

Nach Ausführungsformen wird die kryptographisch gesicherte Bestätigung ferner zusammen mit der Banknotenkontonummer, der Seriennummer der Banknote und/oder dem Zeitstempel empfangen. Nach Ausführungsformen umfasst die Aktualisierungsanfrage neben dem aktualisierten Nominalwert die Identifikationsnummer der Banknote, die Seriennummer der Banknote und/oder den Zeitstempel in Klartext. Nach Ausführungsformen wird die kryptographisch gesicherte Bestätigung zum Prüfen unter Verwendung des Prüfschlüssels entschlüsselt und ein der Hashwert mit einem, beispielsweise unter Verwendung der mitgesendeten Klartextdaten, berechneten Referenzhashwert verglichen. Bei einer Übereinstimmung ist die Prüfung erfolgreich.

Nach Ausführungsformen ist der aktualisierte Nominalwert unter Verwendung des banknotenindividuellen kryptographischen Schlüssels in Form eines symmetrischen kryptographischen Schlüssels verschlüsselt. Nach Ausführungsformen handelt es sich bei dem Prüfschlüssel um den banknotenindividuellen kryptographischen Schlüssel in Form eines symmetrischen kryptographischen Schlüssels, unter dessen Verwendung die kryptographisch gesicherte Bestätigung zum Prüfen entschlüsselt werden kann.

Nach Ausführungsformen ist der aktualisierte Nominalwert unter Verwendung des eines privaten kryptographischen Schlüssels eines der Zentralbank zugeordneten asymmetrischen Schlüsselpaars verschlüsselt, welcher als Signaturschlüssel dient. Nach Ausführungsformen handelt es sich bei dem Prüfschlüssel um einen in dem Speicher des Sicherheitselements gespeicherten öffentlichen kryptographischen Schlüssel des der Zentralbank zugeordneten asymmetrischen Schlüsselpaars, unter dessen Verwendung die kryptographisch gesicherte Bestätigung zum Prüfen entschlüsselt werden kann.

Nach Ausführungsformen empfängt die Banknote die Aktualisierungsanfrage von einem Terminal über die Kommunikationsschnittstelle und/oder sendet den in dem Speicher des Sicherheitselements gespeicherten aktuellen Nominalwert der Banknote über die Kommunikationsschnittstelle an das Terminal. Ausführungsformen können den Vorteil haben, dass das Terminal eine Kommunikationsverbindung für die Banknote zu der Zentralbank bzw. einem Server der Zentralbank bereitstellen kann.

Nach Ausführungsformen ist der Prozessor ferner dazu konfiguriert bei Ausführen der Programminstruktionen ein Ausgabeverfahren zum Ausgeben des gespeicherten aktuellen Nominalwerts der Banknote auszuführen. Das Ausgabeverfahren umfasst:
- Empfangen einer Ausgabeanfrage zum Ausgeben des in dem Speicher des Sicherheitselements gespeicherten aktuellen Nominalwerts der Banknote,
- in Antwort auf die Ausgabeanfrage, Senden des in dem Speicher des Sicherheitselements gespeicherten aktuellen Nominalwerts der Banknote.

Ausführungsformen können den Vorteil haben, dass der in der Banknote gespeicherte aktuelle Nominalwert direkt abgefragt werden kann und somit Kenntnis über diesen erhalten werden kann. Die Abfrage kann beispielsweise unter Verwendung eines Terminals oder, falls vorhanden, unter Verwendung einer Nutzerschnittstelle der Banknote erfolgen. Die Antwort wird beispielsweise an das Terminal oder an eine Anzeigevorrichtung der Nutzerschnittstelle zum Anzeigen gesendet.

Nach Ausführungsformen ist der gesendete aktuelle Nominalwert der Banknote mit dem banknotenindividuellen kryptographischen Schlüssel in Form eines privaten kryptographischen Schlüssels eines der Banknote zugeordneten asymmetrischen Schlüsselpaars signiert. Nach Ausführungsformen kann der Empfänger des signierten aktuelle Nominalwerts, beispielsweise ein Terminal wie etwa ein Terminal eines PoS, ein Nutzercomputersystem und/oder mobilen tragbaren Telekommunikationsgerät, die Signatur mit einem öffentlichen kryptographischen Schlüssel des der Banknote zugeordneten asymmetrischen Schlüsselpaars als Signaturprüfschlüssel prüfen.

Nach Ausführungsformen ist der gesendete aktuelle Nominalwert unsigniert. Beispielsweise wird eine Bestätigungsanfrage zum Bestätigen des empfangenen aktuellen Nominalwerts der Banknote an die Zentralbank gesendet.

Nach Ausführungsformen wird zusammen mit dem gespeicherten aktuellen Nominalwert der Banknote die Seriennummer und/oder die Identifikationsnummer der Banknote gesendet und dient dem Empfänger des aktuellen Nominalwerts als Identifikator der Banknote für eine Bestätigungsanfrage an die Zentralbank zum Bestätigen des empfangenen aktuellen Nominalwerts der Banknote.

Nach Ausführungsformen umfasst die Banknote eine Kommunikationsschnittstelle zur kontaktlosen Kommunikation mit einem mobilen tragbaren Telekommunikationsgerät. Die Banknote empfängt die Ausgabeanfrage von dem mobilen tragbaren Telekommunikationsgerät über die Kommunikationsschnittstelle und/oder sendet den in dem Speicher des Sicherheitselements gespeicherten aktuellen Nominalwerts der Banknote über die Kommunikationsschnittstelle an das mobile tragbare Telekommunikationsgerät.

Nach Ausführungsformen umfasst die Banknote eine Nutzerschnittstelle zur Kommunikation mit einem Nutzer der Banknote. Die Banknote empfängt die Ausgabeanfrage von einem Nutzer über eine Eingabevorrichtung der Nutzerschnittstelle und/oder sendet den in dem Speicher des Sicherheitselements gespeicherten aktuellen Nominalwerts der Banknote an die Nutzerschnittstelle zum Ausgeben über eine Anzeigevorrichtung der Nutzerschnittstelle.

Nach Ausführungsformen ist der Prozessor ferner dazu konfiguriert bei Ausführen der Programminstruktionen ein Ausgabeverfahren zum Ausgeben der in dem Speicher des Sicherheitselements gespeicherten Identifikationsnummer und/oder Seriennummer der Banknote auszuführen, wobei das Ausgabeverfahren umfasst:
- Empfangen einer Ausgabeanfrage zum Ausgeben der in dem Speicher des Sicherheitselements gespeicherten Identifikationsnummer und/oder Seriennummer der Banknote,
- in Antwort auf die Anfrage, Senden der in dem Speicher des Sicherheitselements gespeicherten Identifikationsnummer und/oder Seriennummer der Banknote.

Nach Ausführungsformen dient die Seriennummer und/oder die Identifikationsnummer der Banknote dem Empfänger als Identifikator der Banknote für eine Abfrage des aktuellen Nominalwerts der Banknote bei der ausgebenden Zentralbank. Ausführungsformen können den Vorteil haben, dass mit einem entsprechenden Identifikator die aktuellen Nominalwerte der Banknote bei der ausgebenden Zentralbank abgefragt und mithin in zuverlässiger Form Kenntnis von diesem erlangt werden kann.

Nach Ausführungsformen umfasst ein Verfahren zum Ausstellen einer Banknote:
- Herstellen der Banknote, wobei die Banknote ferner ein Sicherheitselement mit einem Prozessor und einem Speicher mit Programminstruktionen umfasst,
- Empfang einer Identifikationsnummer der Banknote über einen ersten kryptographisch gesicherten Kanal, wobei die Identifikationsnummer ein von einer die Banknote ausgebenden Zentralbank verwaltetes und der entsprechenden Banknote individuell zugeordnetes anonymes Banknotenkonto identifiziert,
- Speichern der empfangenen Identifikationsnummer in dem Speicher des Sicherheitselements,
- Empfang eines banknotenindividuellen kryptographischen Schlüssels über einen von dem ersten Kanal unabhängigen zweiten kryptographisch gesicherten Kanal,
- Speichern des empfangenen banknotenindividuellen kryptographischen Schlüssels in einem geschützten Speicherbereich des Speichers des Sicherheitselements.

Nach Ausführungsformen umfasst die hergestellte Banknote beispielsweise eine visuelle Angabe einer die Banknote eindeutig identifizierenden Seriennummer der Banknote aus einem vordefinierten Bereich von Seriennummern. Nach Ausführungsformen umfasst die hergestellte Banknote beispielsweise eine visuelle Angabe der Identifikationsnummer. Nach Ausführungsformen umfasst die hergestellte Banknote beispielsweise eine visuelle Angabe eines der Banknote zugeordneten initialen Nominalwerts.

Ausführungsformen können den Vorteil haben, dass die Banknote in sicherer Weise initialisiert werden kann, d.h. Identifikationsnummer und banknotenindividuellen kryptographischen Schlüssel eingebracht werden können.

Nach Ausführungsformen ist das Ausstellverfahren dazu konfiguriert jede der zuvor beschriebenen Ausführungsformen der Banknote auszustellen. Nach Ausführungsformen handelt es sich bei der unter Verwendung des Ausstellverfahrens ausgestellten Banknote um eine Banknote nach einer der zuvor beschriebenen Ausführungsformen.

Nach Ausführungsformen wird die Identifikationsnummer ebenfalls in dem geschützten Speicherbereich des Speichers des Sicherheitselements gespeichert. Ausführungsformen können den Vorteil haben, dass die Identifikationsnummer sicher gespeichert werden kann.

Nach Ausführungsformen umfasst das Verfahren ferner ein Speichern des initialen Nominalwerts der Banknote als aktuellen Nominalwert in dem Speicher des Sicherheitselements.

Nach Ausführungsformen umfasst das Verfahren ferner ein Speichern der Seriennummer der Banknote in dem Speicher des Sicherheitselements. Ausführungsformen können den Vorteil haben, dass der aktuelle Nominalwert und/oder die Seriennummer der Banknote von dieser in elektronsicher Form umfasst werden.

Nach Ausführungsformen umfasst das Verfahren ferner ein Speichern eines öffentlichen kryptographischen Schlüssels eines asymmetrischen Schlüsselpaars der ausgebenden Zentralbank. Nach Ausführungsformen wird der öffentlichen kryptographischen Schlüssel als Prüfschlüssel zum Prüfen von Signaturen der ausgebenden Zentralbank verwendet.

Nach Ausführungsformen umfasst das Verfahren ferner ein Senden einer Herstellungsbestätigung zu Bestätigung der Herstellung der Banknote an die ausgebende Zentralbank. Die Herstellungsbestätigung umfasst die Seriennummer und den initialen Nominalwert der hergestellten Banknote zum Speichern in einem ersten Register der ausgebenden Zentralbank. Der initiale Nominalwert gibt den aktuellen Nominalwert der Banknote bei der Ausstellung an. Die Identifikationsnummer der Banknote und der banknotenindividuelle kryptographische Schlüssel werden in Antwort auf das Senden der Herstellungsbestätigung zum Speichern in dem Sicherheitselement empfangen.

Ausführungsformen können den Vorteil haben, dass sichergestellt werden kann, dass die Herstellung der Banknote einhergeht mit einer zentralbankseitigen Initialisierung eines Banknotenkontos, welches der Banknote zugeordnet wird. Die Zuordnung erfolgt zentralbankseitig unter Verwendung der Seriennummer und des initialen Nominalwerts. Ferner werden die entsprechend zugeordnete Identifikationsnummer und der entsprechend zugeordnete banknotenindividuelle kryptographische Schlüssel der hergestellten Banknote zur Verfügung gestellt und die Zuordnung auch Banknotenseitig abzubilden.

Nach Ausführungsformen handelt es sich bei dem ersten Register um ein öffentlich zugängliches Register der Zentralbank. Nach Ausführungsformen dient die Seriennummer als ein Datenbankzugriffsschlüssel zum Auslesen des aktuellen Nominalwerts der Banknote aus dem ersten Register. Ausführungsformen können den Vorteil haben, dass der aktuelle Nominalwert einer Banknote allgemein zugänglich.

Nach Ausführungsformen werden die Identifikationsnummer und der banknotenindividuelle kryptographische Schlüssel in Antwort auf das Senden der Herstellungsbestätigung empfangen, nachdem die ausgebende Zentralbank die Identifikationsnummer und/oder den banknotenindividuellen kryptographischen Schlüssel in einem zweiten Register gespeicherte hat, welches die Identifikationsnummer und/oder den banknotenindividuellen kryptographischen Schlüssel der Seriennummer der Banknote zuordnet. Ausführungsformen können den Vorteil haben, dass die Verknüpfung bzw. Zuordnung zwischen physischer Banknote einerseits und digitalem Banknotenkonto andererseits durch eine entsprechende Eintragung in dem zweiten Register erfolgen kann.

Nach Ausführungsformen dient die Identifikationsnummer als ein Datenbankzugriffsschlüssel zum Auslesen der Seriennummer der Banknote und/oder des banknotenindividuellen kryptographischen Schlüssels aus dem zweiten Register. Nach Ausführungsformen dient die Seriennummer als ein Datenbankzugriffsschlüssel zum Auslesen der Identifikationsnummer der Banknote und/oder des banknotenindividuellen kryptographischen Schlüssels aus dem zweiten Register.

Nach Ausführungsformen sind die von der Zentralbank verwalteten Register, z.B. das erste und/oder das zweite Register als Blockchain implementiert. Nach Ausführungsformen handelt es sich bei der Identifikationsnummer der Banknote um eine Blockchain-Adresse der Banknote. Beispielsweise ist das Banknotenkonto unter Verwendung einer Blockchain bzw. als Blockchain-Adresse implementiert. Beispielsweise handelt es sich bei dem bei dem banknotenindividuellen kryptographischen Schlüssel um einen privaten kryptographischen Schlüssel eines banknotenindividuellen asymmetrischen Schlüsselpaars, welches ferner einen öffentlichen kryptographischen Schlüssel der Banknote umfasst, aus dem beispielsweise die Blockchain-Adresse der Banknote abgeleitet ist.

Unter einer "Blockchain" wird hier und im Folgenden eine geordnete Datenstruktur verstanden, welche eine Mehrzahl von miteinander verketteten Datenblöcken umfasst. Insbesondere wird unter einer Blockchain eine geordnete Datenstruktur verstanden, bei welcher jeder der Blöcke (außer dem ersten Block) einen Prüfwert, beispielsweise einen Hash-Wert, seines Vorgängerblocks umfasst und somit anhand jedes Blocks die Gültigkeit aller seiner Vorgängerblocks geprüft und ggf. bestätigt werden kann. Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchain wurde beispielsweise im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die darin beschriebene Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Zusätzliche Blöcke der Blockchain werden beispielsweise in einem rechenintensiven Prozess erzeugt, der auch als sogenanntes Mining bezeichnet wird. Diese zusätzlich erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d.h. Hashwerten, des vorangehenden Blocks im jeweils nachfolgenden Block ein hohes Maß an Sicherheit gegenüber nachträglichen Manipulationen bietet. Das Verketten der Blöcke kann dann unter Verwendung dieser Root-Hashwerte überprüft werden. Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner Einträge praktisch ausgeschlossen ist, da hierfür die Hashwerte aller nachfolgenden Blöcke in kurzer Zeit ebenfalls neu berechnet werden müssten.

Eine Blockchain kann beispielsweise auch in Form einer Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für weitere Teilnehmer, welche der ausgewählten Gruppe hinzugefügt werden sollen, ein öffentlicher Schlüssel in der Blockchain in einem Initialisierungseintrag hinterlegt werden. Anhand dieser öffentlichen Schlüssel kann geprüft werden, ob Signaturen von Blöcken und damit die entsprechenden Blöcke selbst gültig sind. Öffentliche Schlüssel ursprünglicher Teilnehmer der ausgewählten Gruppe können beispielsweise in einem Genesisblock der Blockchain hinterlegt sein.

Bei der vorliegenden von einer der Zentralbank verwalteten Blockchain handelt es sich beispielsweise um eine öffentliche Blockchain, welche auf Blockchain-Servern der Zentralbank verwaltet wird. Beispielsweise erfolgt ein Eintragen neuer Blöcke ausschließlich durch diese von der Zentralbank verwalteten Blockchain-Server. In diesem Fall können beispielsweise rechenintensiven Prozess bei Hinzufügen zusätzlicher Blöcke entfallen. Beispielsweise ist für ein hinzufügen zusätzlicher Blöcke lediglich eine Signatur mit einem der Zentralbank zugeordneten Signaturschlüssel notwendig.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer bzw. Blockchain-Server eine eindeutige Liste anderer Teilnehmer, welchen er als Gruppe vertraut. Jeder Teilnehmer kann zusätzliche Einträge vorschlagen, die in einen zusätzlichen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen zusätzlichen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtigt, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%, 90%, 95% oder 100%. Alle vorgeschlagenen Einträge, die dieses Kriterium erfüllen, werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Nach Ausführungsformen wird die Banknote auf einen Empfang einer Bestellung von einer die Banknote ausgebenden Zentralbank hin hergestellt. Nach Ausführungsformen wird eine Angabe des vordefinierten Bereichs von Seriennummern empfangen. Nach Ausführungsform wird eine Angabe des für die Banknote vorgesehenen initialen Nominalwerts empfangen.

Ausführungsformen umfassen ein Verfahren zum Verwenden einer Banknote. Die Banknote umfasst ein Sicherheitselement mit einem Prozessor und einem Speicher. In dem Speicher des Sicherheitselements ist eine Identifikationsnummer der Banknote gespeichert, welche ein von einer die Banknote ausgebenden Zentralbank verwaltetes und der entsprechenden Banknote individuell zugeordnetes anonymes Banknotenkonto identifiziert. In einem geschützten Speicherbereich des Speichers des Sicherheitselements ist ein banknotenindividueller kryptographischer Schlüssel gespeichert.

Das Verfahren zum Zahlen mit der Banknote umfasst:
- Empfangen einer Zahlungsanfrage für eine Zahlung mit der Banknote,
- Erzeugen eines zahlungsindividuellen Kryptogramms zur Autorisierung der Zahlung mit der Banknote, wobei das Kryptogramm aus der Identifikationsnummer der Banknote und einem zahlungsindividuellen Code als Eingangswerte unter Verwendung des banknotenindividuellen kryptographischen Schlüssels erzeugt wird,
- Senden einer das zahlungsindividuelle Kryptogramm umfassenden Zahlungsautorisierung.

Nach Ausführungsformen umfasst die Banknote beispielsweise eine visuelle Angabe einer die Banknote eindeutig identifizierenden Seriennummer der Banknote. Nach Ausführungsformen umfasst die Banknote beispielsweise eine visuelle Angabe der Identifikationsnummer. Nach Ausführungsformen umfasst die Banknote beispielsweise eine visuelle Angabe eines der Banknote zugeordneten initialen Nominalwerts.

Ausführungsformen können den Vorteil haben, dass die Banknote, wie bereits zuvor beschrieben, nicht zur für eine Bargeldzahlung, sondern zudem für eine bargeldlose Zahlung verwendet werden kann.

Nach Ausführungsformen handelt es sich bei der zum Zahlen verwendeten Banknote um eine Banknote nach einer der zuvor beschriebenen Ausführungsformen.

Nach Ausführungsformen gibt die Zahlungsanfrage einen zu zahlenden Betrag an. Das Verfahren zum Zahlen umfasst ferner ein Abgleichen des zu zahlenden Betrags mit einem in dem Speicher des Sicherheitselements gespeicherten aktuellen Nominalwert der Banknote. Das zahlungsindividuelle Kryptogramm zum Autorisieren der Zahlung wird nur unter der Voraussetzung erzeugt, dass der gespeicherte aktuelle Nominalwert der Banknote größer oder gleich dem zu zahlenden Betrag ist. Ausführungsformen können den Vorteil haben, dass sichergestellt werden kann, dass die Banknote über einen ausreichenden Nominalwert zur Ausführung der Zahlung verfügt.

Nach Ausführungsformen umfasst das Verfahren ferner zum Aktualisieren des gespeicherten aktuellen Nominalwerts der Banknote:
- Empfangen einer Aktualisierungsanfrage zum Aktualisieren des in dem Speicher des Sicherheitselements gespeicherten aktuellen Nominalwerts der Banknote, wobei die Aktualisierungsanfrage einen aktualisierten Nominalwert der Banknote zusammen mit einer kryptographisch gesicherten Bestätigung der Zentralbank für den aktualisierten Nominalwert umfasst,
- Prüfen der kryptographisch gesicherten Bestätigung unter Verwendung eines in dem Speicher des Sicherheitselements gespeicherten kryptographischen Prüfschlüssels,
- im Falle einer erfolgreichen Prüfung, Ersetzten des in dem Speicher des Sicherheitselements gespeicherten aktuellen Nominalwerts der Banknote mit dem empfangenen aktualisierten Nominalwert.

Ausführungsformen können den Vorteil haben, dass sichergestellt werden kann, dass die Banknote über Kenntnis des ihr zugeordneten aktuellen Nominalwert gemäß Banknotenkonto verfügt.

Nach Ausführungsformen umfasst das Verfahren ferner zum Ausgeben des gespeicherten aktuellen Nominalwerts der Banknote:
- Empfangen einer Ausgabeanfrage zum Ausgeben des in dem Speicher des Sicherheitselements gespeicherten aktuellen Nominalwerts der Banknote,
- in Antwort auf die Anfrage, Senden des in dem Speicher des Sicherheitselements gespeicherten aktuellen Nominalwerts der Banknote.

Ausführungsformen können den Vorteil haben, dass der in der Banknote gespeicherte aktuelle Nominalwert direkt abgefragt werden kann und somit Kenntnis über diesen erhalten werden kann. Die Abfrage kann beispielsweise unter Verwendung eines Terminals oder, falls vorhanden, unter Verwendung einer Nutzerschnittstelle der Banknote erfolgen. Die Antwort wird beispielsweise an das Terminal oder an eine Anzeigevorrichtung der Nutzerschnittstelle zum Anzeigen gesendet.

Nach Ausführungsformen ist in dem Speicher des Sicherheitselements ferner die Seriennummer der Banknote gespeichert, welche zusammen mit dem gespeicherten aktuellen Nominalwert der Banknote gesendet wird und dem Empfänger des aktuellen Nominalwerts als Identifikator der Banknote für eine Bestätigungsanfrage an die Zentralbank zum Bestätigen des empfangenen aktuellen Nominalwerts der Banknote dient.

Ausführungsformen können den Vorteil haben, dass der ausgegebene aktuelle Nominalwert der Banknote durch die Zentralbank bestätigt werden kann.

Ausführungsformen umfassen ein Verfahren zur Zahlungsabwicklung unter Verwenden eines Terminals. Die Zahlung erfolgt mit einer Banknote, welche eine Kommunikationsschnittstelle zur Kommunikation mit dem Terminal und ein Sicherheitselement mit einem Prozessor und einem Speicher umfasst. In dem Speicher des Sicherheitselements ist eine Identifikationsnummer der Banknote gespeichert, welche ein von einer die Banknote ausgebenden Zentralbank verwaltetes und der entsprechenden Banknote individuell zugeordnetes anonymes Banknotenkonto identifiziert. In einem geschützten Speicherbereich des Speichers des Sicherheitselements ist ein banknotenindividueller kryptographischer Schlüssel gespeichert. Das Terminal umfasst einen Prozessor, einen Speicher und eine Kommunikationsschnittstelle zu Kommunikation mit der Banknote.

Das Verfahren zur Abwicklung eines Zahlungstransfers durch das Terminal umfasst:
- Senden einer Zahlungsanfrage an die Banknote,
- Empfangen eines zahlungsindividuellen Kryptogramms zur Autorisierung der Zahlung mit der Banknote, wobei das Kryptogramm aus der Identifikationsnummer der Banknote und einem zahlungsindividuellen Code als Eingangswerte unter Verwendung des banknotenindividuellen kryptographischen Schlüssels erzeugt ist,
- Weiterleiten des zahlungsindividuellen Kryptogramms mit einer Angabe des zu zahlenden Betrags an die ausgebende Zentralbank für eine Validierung des zahlungsindividuellen Kryptogramms, eine Registerprüfung, ob der aktuelle Nominalwert der Banknote größer oder gleich dem zu zahlenden Betrag ist, und einer Ausführung des Zahlungstransfers,
- falls der Zahlungstransfer auf eine erfolgreiche Validierung und Registerprüfung durch die Zentralbank hin erfolgreich ausgeführt ist, Empfangen einer Bestätigung über den erfolgreichen Zahlungstransfer.

Nach Ausführungsformen umfasst die Banknote beispielsweise eine visuelle Angabe einer die Banknote eindeutig identifizierenden Seriennummer der Banknote. Nach Ausführungsformen umfasst die Banknote beispielsweise eine visuelle Angabe der Identifikationsnummer. Nach Ausführungsformen umfasst die Banknote beispielsweise eine visuelle Angabe eines der Banknote zugeordneten initialen Nominalwerts.

Ausführungsformen können den Vorteil haben, dass die Banknote, wie bereits zuvor beschrieben, nicht zur für eine Bargeldzahlung, sondern zudem für eine bargeldlose Zahlung verwendet werden kann.

Nach Ausführungsformen handelt es sich bei der zur Zahlungsabwicklung verwendeten Banknote um eine Banknote nach einer der zuvor beschriebenen Ausführungsformen.

Ausführungsformen können den Vorteil haben, dass die Zentralbank, neben ihrer Rolle als die Banknote ausgebende Institution, zusätzlich gegenüber der Banknote und/oder dem Terminal bzw. einem das verwenden Zahlungsempfänger Dienstleitungen im Bereich des Zahlungsverkehrs bzw. der Zahlungsabwicklung bereitstellt und mithin als eine klassische Bank bzw. eine Geschäftsbank auftritt.

Unter einer Zentralbank wird hier eine nationale oder supranationale Institution verstanden, welche über das Monopolrecht verfügt, Münzen und Banknoten als gesetzliche Zahlungsmittel auszugeben. Ferner kann eine Zentralbank geld- und währungspolitische Aufgaben wahrnehmen. Beispielsweise hält eine Zentralbank die Währungsreserve eines Währungsraumes, beispielsweise reguliert sie die Geldmenge, beispielsweise beeinflusst sie die Geldschöpfung durch Kreditvergabe der Geschäftsbanken und/oder refinanziert diese Geschäftsbanken und den Staat. Beispielsweise emittiert die Zentralbank die Banknoten und bringen diese in Umlauf.

Bei dem Terminal kann es sich beispielsweise um ein Terminal eines Verkäufers an einem Verkaufsort (engl.: "Point of Sale"/PoS), d.h. an dem Ort, an dem ein Verkauf vollzogen wird, handeln. Bei dem Terminal kann es sich ferner um ein Terminal handeln, welches an ein Nutzercomputersystem angeschlossen ist, über welches eine Zahlung mit der Banknote abgewickelt werden soll. Beispielsweise handelt es sich hierbei um eine Zahlungsabwicklung über ein Netzwerk, etwa das Internet, gegenüber einem Dienstanbieter, sei es ein Verkäufer oder ein Zahlungsdienstanbieter. Ebenso könnte das Terminal in Form eines mobilen tragbaren Kommunikationsgeräts, etwa einem Smartphone, eines Nutzers bereitgestellt werden. Der Nutzer könnte das mobile tragbare Kommunikationsgerät beispielsweise für eine Zahlungsabwicklung über ein Netzwerk, etwa das Internet, gegenüber einem Dienstanbieter nutzen, sei es ein Verkäufer oder ein Zahlungsdienstanbieter.

Nach Ausführungsformen werden mit dem zahlungsindividuellen Kryptogramm ferner die Seriennummer und/oder Identifikationsnummer der Banknote an die ausgebende Zentralbank gesendet. Ausführungsformen können den Vorteil haben, dass die Zentralbank das Kryptogramm einer Banknote bzw. einem Banknoten Konto zuordnen kann. Die Seriennummer und/oder Identifikationsnummer der Banknote werden beispielsweise in Klartext an die ausgebende Zentralbank gesendet.

Nach Ausführungsformen wird die Seriennummer und/oder Identifikationsnummer der Banknote zusammen mit dem zahlungsindividuellen Kryptogramm empfangen.

Nach Ausführungsformen wird mit dem zahlungsindividuellen Kryptogramm ferner der zahlungsindividuelle Code empfangen und mit dem zahlungsindividuellen Kryptogramm an die ausgebende Zentralbank gesendet. Ausführungsformen können den Vorteil haben, dass zahlungsindividuelle Code zur Validierung des Kryptogramms verwendet werden kann. Der zahlungsindividuelle Code wird beispielsweise in Klartext an die ausgebende Zentralbank gesendet.

Nach Ausführungsformen verfügt die ausgebende Zentralbank über einen Prüfschlüssel zum Prüfen der Validität des zahlungsindividuellen Kryptogramms. Bei dem banknotenindividuellen kryptographischen Schlüssel handelt es sich beispielsweise um einen symmetrischen kryptographischen Schlüssel und bei dem Prüfschlüssel um denselben einen symmetrischen kryptographischen Schlüssel. Bei dem banknotenindividuellen kryptographischen Schlüssel handelt es sich beispielsweise um einen privaten kryptographischen Schlüssel und bei dem Prüfschlüssel um einen dem privaten kryptographischen Schlüssel der Banknote zugeordneten öffentlichen kryptographischen Schlüssel desselben asymmetrischen Schlüsselpaars.

Nach Ausführungsformen verwendet die ausgebende Zentralbank die Identifikationsnummer der Banknote zum Ermitteln der Seriennummer der Banknote, beispielsweise durch eine Registerabfrage, beispielsweise des zweiten Registers.

Nach Ausführungsformen verwendet die ausgebende Zentralbank die Identifikationsnummer und/oder die Seriennummer zum Ermitteln des aktuellen Nominalwerts der Banknote. Beispielsweise umfasst das Ermitteln Registerabfragen, beispielsweise des ersten und/oder zweiten Registers.

Nach Ausführungsformen wird ferner eine Identifikationsnummer eines Empfängerkontos zum Empfangen des zu zahlenden Betrags an die ausgebende Zentralbank gesendet. Ausführungsformen können den Vorteil haben, dass die Zentralbank die Zahlung von der Banknote bzw. dem der Banknote zugeordneten Banknotenkonto an das Empfängerkonto ausführen kann.

Nach Ausführungsformen verwendet die ausgebende Zentralbank die Identifikationsnummer des Empfängerkontos, um den zu zahlenden Betrag auf eine erfolgreiche Validierung des zahlungsindividuellen Kryptogramms und eine erfolgreiche Registerprüfung erfolgreiche hin von dem durch die ausgebende Zentralbank verwalteten und der entsprechenden Banknote individuell zugeordneten anonymen Banknotenkontos an das Empfängerkonto zu transferieren. Beispielsweise könne so Zahlungen von einem Banknotenkonto an ein anderes ausgeführt werden.

Nach Ausführungsformen ist die Bestätigung des Zahlungstransfers kryptographisch gesichert und das Verfahren umfasst ferner ein Prüfen der Bestätigung unter Verwendung eines kryptographischen Prüfschlüssels. Nach Ausführungsformen handelt es sich bei dem kryptographischen Prüfschlüssel zum Prüfen der Bestätigung des Zahlungstransfers beispielsweise einen öffentlichen kryptographischen Schlüssel eines der Zentralbank zugeordneten asymmetrischen Schlüsselpaars.

Nach Ausführungsformen umfasst die Bestätigung des Zahlungstransfers eine Angabe des aktualisierten Nominalwerts der Banknote zusammen mit einer kryptographisch gesicherten Bestätigung der Zentralbank für den aktualisierten Nominalwert. Ausführungsformen können den Vorteil haben, dass mit der Bestätigung des Zahlungstransfers zugleich eine Bestätigung über den aktualisierten Nominalwert bereitgestellt und beispielsweise an die Banknote zum Aktualisieren des gespeicherten Nominalwerts weitergeleitet werden kann.

Nach Ausführungsformen aktualisiert die ausgebende Zentralbank den Nominalwert der Banknote in einem Register. Nach Ausführungsformen handelt es sich bei dem aktualisierten Nominalwert um den bisherigen Nominalwert der Banknote abzüglich des gezahlten Betrags. Beispielsweise kann anhand Registers, etwa des ersten Registers, der Nominalwert einer Banknote eingesehen werden.

Nach Ausführungsformen umfasst das Verfahren ferner ein Senden einer Aktualisierungsanfrage zum Aktualisieren des in dem Speicher des Sicherheitselements gespeicherten aktuellen Nominalwerts der Banknote. Die Aktualisierungsanfrage umfasst den aktualisierten Nominalwert der Banknote zusammen mit der kryptographisch gesicherten Bestätigung der Zentralbank für den aktualisierten Nominalwert. Ausführungsformen können den Vorteil haben, dass die Banknote so zum Aktualisieren des gespeicherten Nominalwerts veranlasst werden kann.

Nach Ausführungsformen ersetzt die Banknote den in dem Speicher des Sicherheitselements gespeicherten aktuellen Nominalwerts mit dem empfangenen aktualisierten Nominalwert unter der Voraussetzung, dass die Prüfung der kryptographisch gesicherten Bestätigung unter Verwendung eines in dem Speicher des Sicherheitselements gespeicherten kryptographischen Prüfschlüssels erfolgreich ist. Nach Ausführungsformen handelt es sich bei dem kryptographischen Prüfschlüssel um den banknotenindividuellen kryptographischen Schlüssel, beispielsweise um einen symmetrischen kryptographischen Schlüssel. Nach Ausführungsformen handelt es sich bei dem kryptographischen Prüfschlüssel um einen zusätzlich zu dem banknotenindividuellen kryptographischen Schlüssel gespeicherten kryptographischen Prüfschlüssel, beispielsweise einen öffentlichen kryptographischen Schlüssel eines der Zentralbank zugeordneten asymmetrischen Schlüsselpaars.

Nach Ausführungsformen umfasst die kryptographisch gesicherte Bestätigung den verschlüsselten aktualisierten Nominalwert. Nach Ausführungsformen ist der aktualisierte Nominalwert zusammen mit der Identifikationsnummer oder der Seriennummer der Banknote verschlüsselt. Nach Ausführungsformen ist der aktualisierte Nominalwert zusammen mit einem Zeitstempel verschlüsselt. Nach Ausführungsformen wurde zunächst eine Hashfunktion auf die zu verschlüsselnden Daten angewendet und der resultierende Hashwert verschlüsselt. Ausführungsformen können den Vorteil haben, dass die Übertragung des aktualisierten Nominalwerts so in kryptographisch gesicherter Weise erfolgen und eindeutig der Banknote zugeordnet werden kann. Mittels des Zeitstempels kann zudem sichergestellt werden, dass es sich tatsächlich um einen aktuellen Nominalwert bzw. einen Nominalwert handelt, welcher aktueller als ein gespeicherter Nominalwert ist. Beispielsweise speichert die Banknote den aktuellen Nominalwert zusammen mit einem dem Nominalwert zugeordneten Zeitstempel. Beispielsweise ersetzt die Banknote bei einem Ersetzen des Nominalwerts durch einen aktualisierten Nominalwert im Zuge einer Aktualisierung auch den bisher gespeicherten Zeitstempel durch einen aktualisierten Zeitstempel, welcher dem aktualisierten Nominalwert zugeordnet ist. Beispielsweise prüft die Banknote vor einem Aktualisieren des gespeicherten Nominalwerts, ob ein Zeitstempel eines zum Aktualisieren bereitgestellten Nominalwerts tatsächlich aktueller als der gespeicherte Zeitstempel des bisherigen Nominalwerts ist. Somit kann sichergestellt werden, dass es sich bei dem zum Aktualisieren verwendet Zeitstempel tatsächlich um einen aktuelleren Zeitstempel handelt.

Nach Ausführungsformen wird die kryptographisch gesicherte Bestätigung ferner zusammen mit der Identifikationsnummer der Banknote, der Seriennummer der Banknote und/oder dem Zeitstempel empfangen. Ausführungsformen können den Vorteil haben, dass die kryptographisch gesicherte Bestätigung eindeutig der Banknote zugeordnet werden kann.

Nach Ausführungsformen umfasst die Banknote eine Mehrzahl von Sicherheitsmerkmalen. Das Verfahren umfasst als Voraussetzung für das Senden der Zahlungsanfrage ein erfolgreiches Erfassen und Validieren von ein oder mehreren vordefinierenden Sicherheitsmerkmalen der Mehrmals von Sicherheitsmerkmalen der Banknote. Ausführungsformen können den Vorteil haben, dass die Banknote anhand der Sicherheitsmerkmale auf ihre Authentizität und Validität geprüft werden kann.

Nach Ausführungsformen wird eine Mehrzahl von Banknoten empfangen. Für jede der Banknoten wird jeweils ein aktueller Nominalwert ermittelt. Aus der Mehrzahl von empfangenen Banknoten wird ein Satz von Banknoten ausgewählt und einbehalten, deren aufsummierte aktuelle Nominalwerte einen Betrag ergeben, der kleiner als ein zu zahlender Betrag ist. Ein verbleibender Differenzbetrag zwischen dem zu zahlenden Betrag und dem aufsummierten Betrag des Satzes von ausgewählten Banknoten ist kleiner als ein aktueller Nominalwert einer weiteren Banknote der Mehrzahl von Banknoten, welche nicht von dem Satz von ausgewählten Banknoten umfasst ist. Die Zahlungsanfrage zur Zahlung des Differenzbetrags wird an die weitere Banknote gesendet.

Ausführungsformen können den Vorteil haben, dass eine Kombination aus bargeldbasierter und bargeldloser Zahlung ermöglicht werden könnte. Für den einbehaltenen Satz von Banknoten ergibt sich keine Notwendigkeit von Zahlungsautorisierung und/oder Zahlungen unter Verwendung der Banknotenkonten der entsprechenden Banknoten. Die Zahlung mit diesen Banknoten erfolgt vielmehr durch Übergabe der Banknoten, wie bei Bargeldzahlungen üblich. Falls der zu zahlende Betrag nicht aufgeht, d.h. die Summe der Nominalwerte der Banknoten des einbehaltenen Satzes von Banknoten kleiner als der zu zahlender Betrag ist und keine weitere Banknote vorliegt, deren Nominalwert dem Differenzbetrag entspricht, erfolgt die Zahlung des Differenzbetrags bargeldlos unter Verwendung einer weiteren Banknote, deren Nominalwert größer als der entsprechende Differenzwert ist. Alternativ kann die Zahlung des Differenzbetrags auch durch einbehalten der weiteren Banknote erfolgen und der überzählig bezahlte Betrag rückerstattet werden. Beispielsweise durch eine Transaktion von einem Konto, z.B. Banknotenkonto, des Zahlungsempfängers an ein Banknotenkonto einer nicht einbehaltenen Banknote, welche im Eigentum des Zahlungspflichtigen verbleibt. Nach Ausführungsformen werden alle nicht einbehaltenen Banknoten zurückgegebenen.

Nach Ausführungsformen umfassen die Banknoten der Mehrzahl von Banknoten jeweils eine Mehrzahl von Sicherheitsmerkmalen. Das Verfahren umfasst beispielsweise für jede der Banknoten jeweils eine Gültigkeitsprüfung. Die Gültigkeitsprüfung der Banknoten umfasst beispielsweise jeweils ein erfolgreiches Erfassen und Validieren von ein oder mehreren vordefinierenden Sicherheitsmerkmalen der Mehrmals von Sicherheitsmerkmalen der entsprechenden Banknote. Ausführungsformen können den Vorteil haben, dass die Authentizität und Validität aller Banknoten sichergestellt werden kann, insbesondere der einbehaltenen Banknoten.

Nach Ausführungsformen wird ein Verfahren zum Ersetzen einer beschädigten Banknote bereitgestellt. Die Banknote umfasst die visuelle Angabe der Seriennummer mehrfach über die Banknote verteilt. Weist die Banknote eine Beschädigung auf, umfasst das Ersetzen der Banknote durch die die beschädigte Banknote ausgebende Zentralbank:
- Prüfen eines Beschädigungsgrads der Banknote,
- falls der Beschädigungsgrads der Banknote einen vordefinierten zulässigen maximalen Beschädigungsgrad nicht überschreitet, Erfassen der Seriennummer und/oder Identifikationsnummer der Banknote,
- Initialisieren einer Sperrung der der erfassten Seriennummer und/oder Identifikationsnummer zugeordneten Registereinträge,
- Ermitteln eines aktuellen Nominalwerts der Banknote unter Verwendung erfassten Seriennummer und/oder Identifikationsnummer,
- Auszahlen des aktuellen Nominalwerts der beschädigten Banknote.

Ausführungsformen können den Vorteil haben, dass im Falle einer Beschädigung der tatsächliche Nominalwert der Banknote ersetzt werden kann. Dieser tatsächliche Nominalwert kann deutlich von dem initialen Nominalwert der Banknote und/oder einem Mindestnominalwert der Banknote abweichen. Nach Ausführungsformen ist dafür, dass der Beschädigungsgrads der Banknote einen vordefinierten zulässigen maximalen Beschädigungsgrad nicht überschreitet, erforderlich, dass mehr als 50% der Banknote vorliegen und/oder die Banknote ein oder mehrere für ein Ersetzen notwendige valide Sicherheitsmerkmale umfasst.

Nach Ausführungsformen handelt es sich bei der ersetzten Banknote um eine Banknote nach einer der zuvor beschriebenen Ausführungsformen. Nach Ausführungsformen wird die beschädigte Banknote einbehalten.

Nach Ausführungsformen umfasst das Erfassen der Seriennummer ein Lesen der visuellen Angabe der Seriennummer unter Verwendung eines Sensors des Terminals. Nach Ausführungsformen umfasst das Erfassen der Seriennummer ein Empfangen der unter Verwendung der Kommunikationsschnittstelle der Banknote gesendeten Seriennummer unter Verwendung der Kommunikationsschnittstelle des Terminals.

Nach Ausführungsformen umfasst das Erfassen der Identifikationsnummer ein Empfangen der unter Verwendung der Kommunikationsschnittstelle der Banknote gesendeten Seriennummer unter Verwendung der Kommunikationsschnittstelle des Terminals.

Nach Ausführungsformen umfasst das Auszahlen des aktuellen Nominalwerts der beschädigten Banknote ein Bereitstellen ein oder mehrerer Banknoten als Ersatz, deren aktuelle Nominalwerte in der Summe dem aktuellen Nominalwert der beschädigten Banknote entsprechen. Nach Ausführungsformen handelt es sich bei den ein oder mehreren Banknoten als Ersatz um Banknoten nach einer der zuvor beschriebenen Ausführungsformen. Nach Ausführungsformen umfasst das Auszahlen des aktuellen Nominalwerts der beschädigten Banknote eine Transaktion eines Betrags in Höhe des aktuellen Nominalwerts von dem Bankkonto der beschädigten Banknote oder einem Bankkonto der die beschädigte Banknote ausgebenden Zentralbank an ein von einem Besitzer der beschädigten Banknote angegebenes Bankkonto. Beispielsweise ist das angegebene Banknotenkonto einer anderen Banknote des Besitzers der beschädigten Banknoten, dem Besitzer der beschädigten Banknote persönlich oder einer anderen von dem Besitzer der beschädigten Banknoten gewählten Institution zugeordnet.

Nach Ausführungsformen umfasst die Beschädigung eine Beschädigung des Sicherheitselements, sodass das Sicherheitselement keine zahlungsindividuellen Kryptogramme mehr bereitstellen kann. Beispielsweise ist der Prozessor, der Speicher und/oder eine Kommunikationsschnittstelle des Sicherheitselements beschädigt. Beispielsweise fehlt das Sicherheitselement.

Nach Ausführungsformen ist die Mehrzahl von visuellen Angaben der Seriennummer derart über die Banknote verteilt, dass sichergestellt werden kann, dass die Seriennummer und damit das Banknotenkonto der Banknote ermittelt werden kann, solange mehr als 50% der Banknote vorliegen. Nach Ausführungsformen ist die Mehrzahl von Sicherheitselementen derart über die Banknote verteilt, dass sichergestellt werden kann, dass für ein Ersetzen notwendige valide Sicherheitsmerkmale vorliegen, solange mehr als 50% der Banknote unbeschädigt vorliegen.

Nach Ausführungsformen umfasst das Ersetzen der Banknote durch die die beschädigte Banknote ausgebenden Zentralbank ferner einen Sperreintrag in einem von der ausgebenden Zentralbank verwalteten Sperrregister. Durch den Sperreintrag wird das Banknotenkonto der Banknote gesperrt. Im Falle eines Sperreintrag für das Banknotenkonto der Banknote durch die Zentralbank kann beispielweise sichergestellt werden, dass kein Geld von dem gesperrten Bankkonto auf ein anderes Konto, beispielsweise Banknotenkonto, transferiert werden kann, d.h. dass keine Zahlungen gesendet werden können, und/oder dass kein Geld von einem anderen Konto, beispielsweise Banknotenkonto, auf das gesperrte Bankkonto transferiert werden kann, d.h. dass keine Zahlungen empfangen werden können.

Beispielsweise umfasst das Sperren des Banknotenkontos der beschädigten Banknote eine Transaktion eines noch verbleibenden Restbetrags auf dem Bankkonto der beschädigten Banknote an ein Konto der Zentralbank, beispielsweise ein Banknotenkonto einer andern sich im Besitz der Zentralbank befindenden Banknote. Dies kann den Vorteil haben, dass im Zuge eines Ersetzens einer beschädigten kein Restbetrag auf dem gesperrten Konto verbleibt.

Ausführungsformen könnten den Vorteil haben, dass bei einem Ersetzen der Banknote nicht der Prozessor und/oder das Sicherheitselement der beschädigten Banknote zurückgehalten und mit diesem nach dem Auszahlen des (letzten) aktuellen Nominalwerts der beschädigten Banknote weiterhin Zahlungen getätigt, d.h. Kryptogramme ausgegeben werden können. Ferner kann beispielsweise verhindert werden, dass versehentlich Zahlungen auf das Banknotenkonto der beschädigten Bankknote erfolgen, nachdem der (letzte) aktuellen Nominalwert bereits ausgezahlt und die beschädigte Banknote einbehalten wurde.

Beispielsweise wird bei einer Transaktion von einem Banknotenkonto einer Banknote als Voraussetzung zum Ausführen der Transaktion von der Zentralbank geprüft, ob das entsprechende Banknotenkonto gesperrt ist, d.h. ein Speereintrag vorliegt. Falls das Banknotenkonto nicht gesperrt ist, wird die Transaktion ausgeführt. Falls das Banknotenkonto gesperrt ist, wird die Transaktion nicht ausgeführt.

Beispielsweise wird bei einer Transaktion auf ein Banknotenkonto einer Banknote als Voraussetzung zum Ausführen der Transaktion von der Zentralbank geprüft, ob das entsprechende Banknotenkonto gesperrt ist, d.h. ein Speereintrag vorliegt. Falls das Banknotenkonto nicht gesperrt ist, wird die Transaktion ausgeführt. Falls das Banknotenkonto gesperrt ist, wird die Transaktion nicht ausgeführt.

Im Weiteren werden Ausführungsformen der Erfindung mit Bezugnahme auf die Zeichnungen näher erläutert. Es zeigen:
- Figuren 1: schematische Blockdiagramme exemplarischer Banknoten,
- Figur 2: ein schematisches Blockdiagramm eines exemplarischen Systems mit einer exemplarischen Banknote,
- Figur 3: ein schematisches Flussdiagramm eines exemplarischen Verfahrens zum Ausstellen von Banknoten,
- Figur 4: ein schematisches Flussdiagramm eines exemplarischen Verfahrens zur Zahlungsabwicklung mit einem Terminal,
- Figur 5: ein schematisches Flussdiagramm eines exemplarischen Verfahrens zur Bestätigung eines aktuellen Nominalwerts einer Banknote,
- Figur 6: ein schematisches Blockdiagramm eines exemplarischen Verfahrens zum Verwenden von Banknoten,
- Figur 7: ein schematisches Flussdiagramm exemplarischer Verfahren zum Verwenden einer Banknote,
- Figur 8: ein schematisches Flussdiagramm eines exemplarischen Verfahrens zum Aktualisieren eines Nominalwerts einer Banknote,
- Figur 9: ein schematisches Flussdiagramm eines exemplarischen Verfahrens zum Ausgeben eines Nominalwerts einer Banknote,
- Figur 10: ein schematisches Flussdiagramm eines exemplarischen Verfahrens zum Ausstellen einer Banknote,
- Figur 11: ein schematisches Flussdiagramm eines exemplarischen Verfahrens zur Zahlungsabwicklung mit einem Terminal,
- Figur 12: ein schematisches Flussdiagramm eines exemplarischen Verfahrens zur Zahlungsabwicklung mit einer Mehrzahl von Banknoten,
- Figuren 13: schematische Blockdiagramme exemplarischer Banknoten,
- Figur 14: ein schematisches Blockdiagramm eines exemplarischen Systems mit einer exemplarischen Banknote,
- Figur 15: ein schematisches Flussdiagramm eines exemplarischen Verfahrens zum Ableiten eines privaten kryptographischen Schlüssels,
- Figur 16: ein schematisches Flussdiagramm eines exemplarischen Verfahrens zum Ableiten eines privaten kryptographischen Schlüssels,
- Figur 17: ein schematisches Flussdiagramm eines exemplarischen Verfahrens zum Ableiten eines privaten kryptographischen Schlüssels,
- Figur 18: ein schematisches Flussdiagramm eines exemplarischen Verfahrens zum Ableiten eines privaten kryptographischen Schlüssels,
- Figur 19: ein schematisches Flussdiagramm eines exemplarischen Verfahrens zur Zahlungsabwicklung mit einem abgeleiteten privaten kryptographischen Schlüssel.

Elemente der nachfolgenden Ausführungsformen, die einander entsprechen, werden mit denselben Bezugszeichen gekennzeichnet.

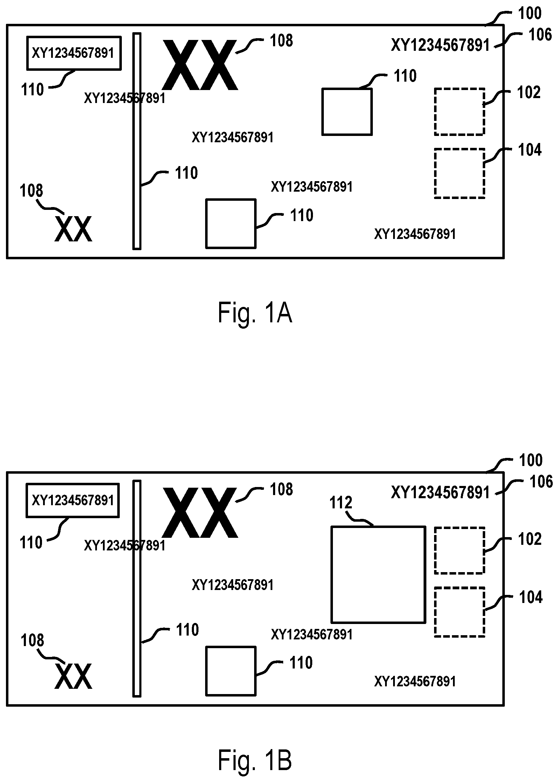

Figuren 1, d.h. Figuren 1A und 1B, zeigen exemplarische Banknoten 100. Die in Figur 1A gezeigte Banknote 100 umfasst eine Mehrzahl von Sicherheitsmerkmalen 110, welche die Authentizität und Validität der Banknote 100 belegen. Die Sicherheitsmerkmale 110 sind über die Banknote 100 verteilt angeordnet. Beispielsweise sind die Sicherheitsmerkmale 110 so über die Banknote 100 verteilt angeordnet, dass solange mehr als 50% der Banknote in unbeschädigtem Zustand vorliegen, die Authentizität und Validität der Banknote 100 nachgewiesen werden kann. Die Banknote 100 umfasst ferner eine visuelle Angabe der Seriennummer 106 der Banknote 100, welche beispielsweise auf die Banknote 100 aufgedruckt ist. Beispielsweise umfasst die Banknote 100 eine Mehrzahl von visuellen Angaben der Seriennummer 106, welche über die Banknote 100 verteilt angeordnet sind, etwa in Mikroschrift. Beispielsweise ist die Seriennummer 106 so über die Banknote 100 verteilt angeordnet, dass solange mehr als 50% der Banknote in unbeschädigtem Zustand vorliegen, die Seriennummer 106 der Banknote 100 bestimmt werden kann. Die Seriennummer 106 dient beispielsweise der Identifikation der Banknote 100 und kann einem aktuellen Nominalwert der Banknote, etwa dem Kontostand eines Banknotenkontos und/oder einer Identifikationsnummer des Banknotenkontos der Banknote 100 zugeordnet sein. So kann unter Verwendung der Seriennummer 106 der Banknote 100 beispielsweise der aktuelle Nominalwert der Banknote 100 bestimmt werden.

Ferner umfasst die Banknote ein oder mehrere visuelle Angaben eines initialen Nominalwerts 108 der Banknote 100. Bei dem initialen Nominalwerts 108 handelt es sich beispielsweise um einen Mindestnominalwert der Banknote 100. Beispielsweise umfasst die Banknote 100 ein oder mehrere visuelle Angaben eines von dem initialen Nominalwert 108 verschiedenen Mindestnominalwerts zusätzlich zu der Angabe des initialen Nominalwerts 108. Beispielsweise umfasst die Banknote 100 die ein oder mehreren visuellen Angaben des Mindestnominalwerts anstelle von visuellen Angaben eines von dem Mindestnominalwert verschiedenen initialen Nominalwert 108. Zusätzlich umfasst die Banknote ein Sicherheitselement 102 mit einem Prozessor und einem Speicher. In dem Speicher des Sicherheitselements 102 ist eine Identifikationsnummer der Banknote 100 gespeichert. Die Identifikationsnummer identifiziert ein von einer die Banknote 100 ausgebenden Zentralbank verwaltetes und der entsprechenden Banknote 100 individuell zugeordnetes anonymes Banknotenkonto. In einem geschützten Speicherbereich des Speichers ist ein banknotenindividueller kryptographischer Schlüssel gespeichert, beispielsweise in Form eines symmetrischen oder eines privaten kryptographischen Schlüssels. Den banknotenindividuellen kryptographischen Schlüssel verwendet die Banknote 100 zum Erzeugen von zahlungsindividuellen Kryptogrammen zum Freigeben bzw. Autorisieren von bargeldlosen Zahlungen mit der Banknote 100. Bei solchen bargeldlosen Zahlungen handelt es sich um Transaktion von dem Banknotenkonto der Banknote 100 an ein Konto eines Zahlungsempfängers, z.B. ein weiteres Banknotenkonto einer weiteren Banknote. Die Kryptogramme werden jeweils aus der Identifikationsnummer der Banknote 100 und einem zahlungsindividuellen Code als Eingangswerte unter Verwendung des banknotenindividuellen kryptographischen Schlüssels erzeugt. Der zahlungsindividuelle Code umfasst die individuelle Zahlung charakterisierende Angaben, wie etwa eine Zeitangabe, eine Angabe des zu zahlenden Betrags und/oder eine Angabe des Empfängers/Empfängerkontos. Ferner verwendet die Banknote 100 den banknotenindividuellen kryptographischen Schlüssel zum Ableiten eines privaten kryptographischen Schlüssels eines anonymen Kontos für ein Computersystem. Beispielsweise verwendet die Banknote hierzu eine Einwegfunktion, etwa eine KDF-Funktion. Alternativer Weise leitet die Banknote 100 beispielsweise einen Eingangswert zum Berechnen des privaten kryptographischen Schlüssels aus dem banknotenindividuellen kryptographischen Schlüssel ab. Ferner kann die Banknote 100 dazu konfiguriert sein, einen dem privaten kryptographischen Schlüssel zugeordneten öffentlichen kryptographischen Schlüssel zu berechnen. Alternativer Weise kann der zugeordnete öffentliche kryptographische Schlüssel auch von einem den privaten kryptographischen Schlüssel empfangenden Computersystem berechnet werden.

Ferner umfasst die Banknote eine Kommunikationsschnittstelle 104 zum Kommunizieren mit einem Terminal, insbesondere zu einem kontaktlosen Kommunizieren. Über die Kommunikationsschnittstelle 104 empfängt die Banknote 100 beispielsweise Zahlungsanfragen und sendet beispielsweise Zahlungsautorisierungen mit zahlungsindividuellen Kryptogrammen. Ferner könnten die Banknote 100 visuelle Angaben der Identifikationsnummer der Banknote 100 umfassen.

Figur 1B zeigt eine exemplarische Banknote 100, welche der exemplarischen Banknote 100 aus Figur 1A entspricht. Zusätzlich umfasst die Banknote 100 in Figur 1B eine Nutzerschnittstelle 112. Die Nutzerschnittstelle 112 umfasst beispielsweise eine Eingabe- und/oder eine Ausgabevorrichtung der Banknote 100. Beispielsweise umfasst die Nutzerschnittstelle 112 ein Touchpad zur Eingabe von Daten, etwa Transaktionsdaten, in die Banknote 100 und/oder ein Display zur Anzeige von Daten, etwa Transaktionsdaten, welche die Banknote 100 verarbeiten soll oder verarbeitet hat. Beispielsweise umfasst die Nutzerschnittstelle 112 ein Touch-Display, mit welchem sowohl Daten von dem Nutzer eingegeben werden können, als auch dem Nutzer Daten angezeigt werden können.

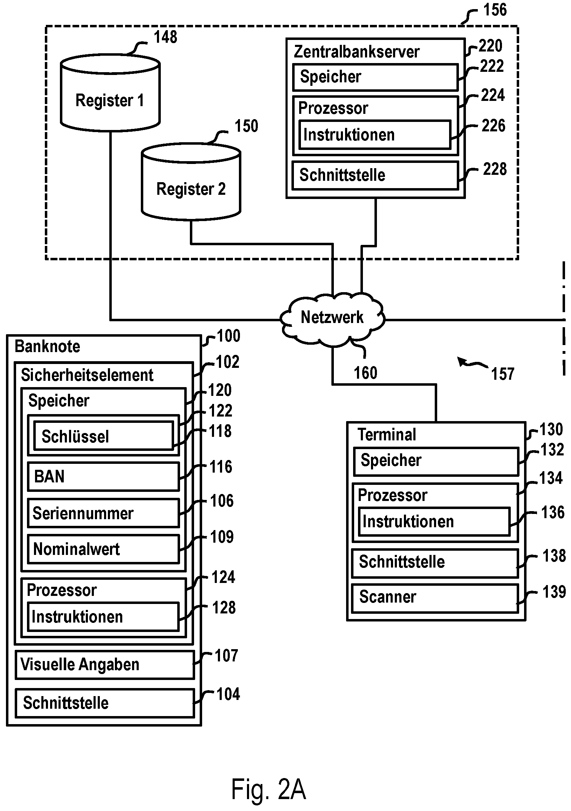

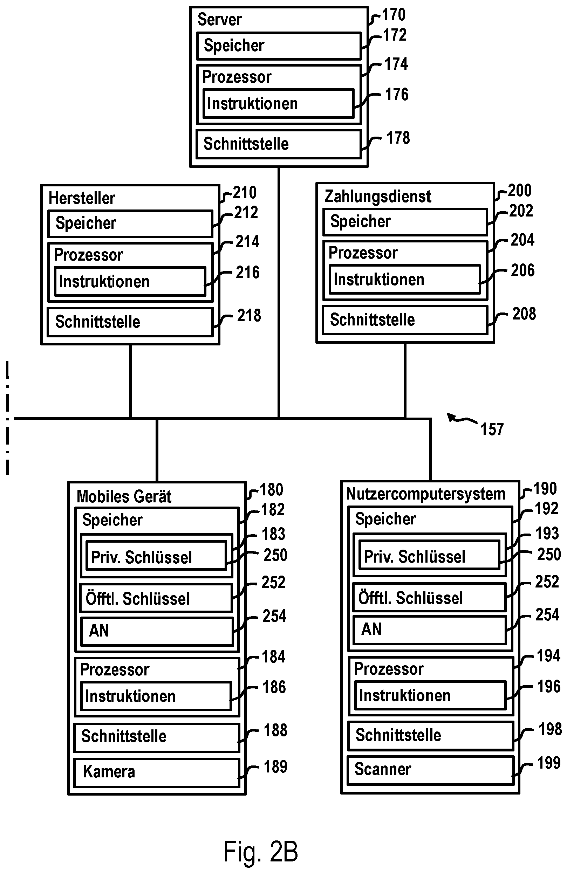

Figur 2 zeigt ein exemplarisches System 157 mit einer exemplarischen Banknote 100. Die Banknote 100 umfasst ein Sicherheitselement 102 mit einem Prozessor 124 und einem Speicher 120. Der Prozessor 124 für Programminstruktionen 128 aus. Diese Programminstruktionen 128 umfassen beispielsweise kryptographische Programminstruktionen zum Erzeugen zahlungsindividueller Kryptogramme. Ferner können die kryptographischen Programminstruktionen beispielsweise dazu konfiguriert sein, kryptographische Schlüssel zu erzeugen. In dem Speicher 120 ist eine Identifikationsnummer 116 eines Banknotenkontos der Banknote 100 ("banknote account number"/BAN) gespeichert. Ferner ist in dem Speicher 120 beispielsweise die Seriennummer der106 der Banknote 100 und/oder ein aktueller Nominalwert 109 Banknote 100 der gespeichert. In einem geschützten Speicherbereich 122 des Speichers 120 ist ein banknotenindividueller kryptographischer Schlüssel 118 der Banknote zum Erzeugen zahlungsindividueller Kryptogramme gespeichert. Ferner umfasst die Banknote 100 beispielsweise eine Kommunikationsschnittstelle 104 zur Kommunikation mit externen Geräten, wie etwa einer einem Terminal 130. Die Kommunikationsschnittstelle 104 ist beispielsweise für eine kontaktlose Nahfeldkommunikation konfiguriert. Zusätzlich umfasst die Banknote 100 visuelle Angaben 107, etwa der Seriennummer 106 und/oder Identifikationsnummer 116. Ferner kann die Banknote 100 beispielsweise ferner eine Nutzerschnittstelle mit einer Eingabe- und/oder Ausgabevorrichtung zum Eingeben und/oder Anzeigen von Daten umfassen, wie etwa Transaktionsdaten.

Die Banknote 100 kommuniziert unter Verwendung der Kommunikationsschnittstelle 104 beispielsweise ferner mit einem Computersystem, wie etwa einem mobilen Endgerät 180 oder einem Nutzercomputersystem 190. Die Banknote 100 ist dazu konfiguriert für das entsprechende Computersystem 180, 190 einen aus dem banknotenindividuellen kryptographischen Schlüssel 118 der Banknote 100 abgeleiteten privaten kryptographischen Schlüssels 250 eines anonymen Kontos bereitzustellen. Hierzu leitet die Banknote 100 beispielsweise aus dem banknotenindividuellen kryptographischen Schlüssel 250, etwa unter Verwendung einer Einwegfunktion, ab. Bei der Einwegfunktion handelt es sich beispielsweise um eine KDF-Funktion. Alternativer Weise leitet die Banknote 100 beispielsweise einen Eingangswert zum Berechnen des privaten kryptographischen Schlüssels 250 aus dem banknotenindividuellen kryptographischen Schlüssel 118 ab. Ferner kann die Banknote 100 dazu konfiguriert sein, einen dem privaten kryptographischen Schlüssel 250 zugeordneten öffentlichen kryptographischen Schlüssel 252 zu berechnen. Alternativer Weise kann der zugeordnete öffentliche kryptographische Schlüssel 252 auch von dem den privaten kryptographischen Schlüssel 250 empfangenden Computersystem 180, 190 berechnet werden.

Die Banknote 100 kommuniziert unter Verwendung der Kommunikationsschnittstelle 104 beispielsweise ferner mit einem Terminal 130. Das Terminal 130 ist beispielsweise ein Zahlungsterminal eines PoS. Das Terminal 130 umfasst einen Prozessor 134 zum Ausführen von Programminstruktionen 136 und einen Speicher 132. Ferner umfasst das Terminal 130 eine Kommunikationsschnittstelle 137 zur Kommunikation mit der Banknote 100. Zusätzlich umfasst das Terminal 130 eine Kommunikationsschnittstelle 139 zur Kommunikation über ein Netzwerk 160, wie etwa das Internet. Das Terminal 130 ist beispielsweise zu einer Zahlungsabwicklung mit der Banknote 100 konfiguriert. Hierzu sendet das Terminal 130 beispielsweise eine Zahlungsanfrage an die Banknote 100 und empfängt eine Zahlungsautorisierung mit einem zahlungsindividuellen Kryptogramm von der Banknote 100, welche das Terminal 130 über das Netzwerk 160 an einen Zentralbankserver 220 eines Zentralbanksystems 156 zum Ausführen in Form einer Transaktion von dem der Banknote 100 zugeordneten Banknotenkonto an ein Empfängerkonto des Empfängers der Zahlung. Ferner kann das Terminal beispielsweise Sensor 139 umfassen. Der Sensor 139 ist beispielsweise dazu konfiguriert visuelle Angabe 107 der Banknote 100 zu erfassen, wie etwa die Seriennummer 106. Ferner kann der Sensor 139 beispielsweise zum Erfassen von Sicherheitsmerkmalen der Banknote 100 konfiguriert sein, um deren Authentizität und Validität zu prüfen. In dem Speicher 132 ist beispielsweise ein Identifikator bzw. eine Identifizierungsnummer eines Kontos gespeichert, welche das Terminal 130 als Empfängerkonto zum Empfangen von Zahlungen verwendet.

Das Terminal 130 kommuniziert beispielsweise über einen Remoteserver 170 mit dem Zentralbankserver 220. Der Server 170 umfasst beispielsweise einen Speicher 172, einen Prozessor 174 zum Ausführen von Programminstruktionen 176 und eine Kommunikationsschnittstelle 178 zur Kommunikation über das Netzwerk 160. Beispielsweise stellt der Server 170 dem Terminal 130 den Identifikator eines als Empfängerkonto verwendeten Kontos oder Banknotenkontos zur Verfügung. Beispielsweise leitet der Server 170 über das Terminal 130 empfangene Zahlungsautorisierungen an den Zentralbankserver 220 weiter. Beispielsweise leitet der Server 170 von dem Zentralbankserver 220 empfangene Zahlungsbestätigungen an das Terminal 130 weiter.

Das System 157 umfasst ferner einen Zentralbankserver 220 mit einem Speicher 222 und einem Prozessor 224 zum Ausführen von Programminstruktionen 226. Ferner umfasst der Zentralbankserver 220 beispielsweise eine Kommunikationsschnittstelle 228 zur Kommunikation über das Netzwerk 160. Der Zentralbankserver 220 ist beispielsweise dazu konfiguriert Autorisierungsanfragen mit zahlungsindividuellen Kryptogrammen zur Autorisierung von Zahlungen unter Verwendung von Banknotenkonten von Banknoten 100 zu prüfen und, im Falle erfolgreicher Prüfungen, die autorisierten Zahlungen auszuführen. Sind die Zahlungen ausgeführt, sendet der Zentralbankserver 220 beispielsweise Zahlungsbestätigungen. Die Zahlungsbestätigungen umfassen beispielsweise Angaben zu aus den Zahlungen resultierenden aktuellen Nominalwerten der Banknoten. Ferner ist der Zentralbankserver 220 beispielsweise dazu konfiguriert im Zuge einer Herstellung einer Banknote 100 ein banknotenindividuelles Banknotenkonto für die entsprechende Banknote 100 einzurichten und/oder ein eingerichtetes Banknotenkonto zu sperren, etwa falls eine beschädigte Banknote von der Zentralbank aus dem Verkehr genommen wird. Ferner kann der Zentralbankserver 220 oder ein anderes mit dem Zentralbankserver in Kommunikationsverbindung stehendes Computersystem des Zentralbanksystems einen Sensor zum Prüfen von Sicherheitsmerkmalen beschädigter Banknote umfassen. Falls die Prüfung der Sicherheitsmerkmalen sowie des Beschädigungsgrads der Banknote ergibt, dass es sich um eine valide Banknote handelt, ersetzt die Zentralbank die beschädigte Banknote. Hierzu ermittelt der Zentralbankserver 220 beispielsweise den aktuellen Nominalwert der beschädigten Banknote unter Verwendung einer entsprechenden Anfrage die von der Zentralbank verwalteten Register 148, 150, zahlt den aktuellen Nominalwert aus und sperrt das Banknotenkonto der beschädigten Banknote. Beispielsweise erfolgt ein Sperreintrag in ein der mehren der Register 148, 150.

Das Zentralbanksystem 156 umfasst ferner die Register 148, 150. Das Register 148 umfasst beispielsweise Zuordnungen der Seriennummern der einzelnen Banknoten 100 zu der jeweiligen Identifikationsnummern des Banknotenkontos der entsprechenden Banknote. Ferner kann das Register den Identifikationsnummern der Banknotenkontos der einzelnen Banknoten 100 jeweils einen kryptographischen Prüfschlüssel zum Prüfen von Kryptogrammen der entsprechenden Banknote 100 zuordnen. Das Register 150 ist beispielsweise als eine Look-Up-Tabelle konfiguriert, und umfasst beispielsweise Zuordnungen von aktuellen Nominalwerten der Banknoten 100 zu den Seriennummern der einzelnen Banknoten 100. Beispielsweise kann unter Verwendung des Registers 150 ein aktueller Nominalwert einer Banknote 100 mit der Seriennummer der entsprechenden Banknote 100 als Datenbankzugriffsschlüssel abgefragt werden. Ferner kann das Zentralbanksystem 156 ein Buchungssystem zum Ausführen von Transaktionen unter Verwendung des Banknotenkontos der von der Zentralbank ausgegeben Banknoten 100 umfassen.

Anstelle des Terminals 130 kann zur Zahlungsabwicklung auch ein mobiles tragbares Endgerät bzw. Kommunikationsgerät 180 oder ein Nutzercomputersystem 190, etwa zur Zahlungsabwicklung über das Internet, verwendet werden. Dabei kann das mobile Kommunikationsgerät 180 oder der Nutzercomputersystem 190 beispielsweise als lokaler PoS dienen. Beispielsweise erfolgt die Zahlungsabwicklung unter Verwendung des Remoteserver 170. Beispielsweise erfolgt die Zahlungsabwicklung unter Verwendung eines Servers 200 eines Zahlungsdienstanbieters bzw. eines Finanzdienstleisters, welcher als PsP fungiert.

Das mobile Kommunikationsgerät 180, etwa ein Smartphone, umfasst beispielsweise einen Speicher 182 und einen Prozessor 184 zum Ausführen von Programinstruktionen 186. Ferner umfasst das mobile Kommunikationsgerät 180 beispielsweise eine Kommunikationsschnittstelle 187 zur Kommunikation mit der Banknote 100 sowie eine Kommunikationsschnittstelle 188 zur Kommunikation über das Netzwerk 160. Beispielsweise umfasst das mobile Kommunikationsgerät 180 eine Kamera zum Erfassen von visuellen Angaben 107 der Banknote 100, wie etwa der Seriennummer 106 der Banknote 100. Das mobile Kommunikationsgerät 180 ist beispielsweise dazu konfiguriert eine Zahlungsanfrage, etwa von dem Server 170 oder dem Zahlungsdienstserver 200, an die Banknote 100 und eine Zahlungsautorisierung der Banknote 100 mit einem zahlungsindividuellen Kryptogramm an den Server 170 oder den Zahlungsdienstserver 200 weiterzuleiten. Beispielsweise kann das mobile Kommunikationsgerät 180 dazu konfiguriert sein, direkt oder unter Vermittlung eines Servers wie dem Server 170 oder dem Zahlungsdienstserver 200 den aktuellen Nominalwert der Banknote 100 zu ermitteln und etwa einem Nutzer unter Verwendung einer Nutzerschnittstelle 181 anzuzeigen. Die Nutzerschnittstelle 181 umfasst beispielsweise eine Eingabe- und eine Ausgabevorrichtung zur Kommunikation des Nutzers mit dem mobilen Kommunikationsgerät 180. Die Eingabevorrichtung umfasst beispielsweise eine Tastatur. Die Ausgabevorrichtung umfasst beispielsweise ein Display. Beispielsweise sind Eingabe- und Ausgabevorrichtung in Form eines Touch-Displays miteinander kombiniert.

Ferner kann das mobile Kommunikationsgerät 180 einen aus dem banknotenindividuellen kryptographischen Schlüssel 118 abgeleiteten privaten kryptographischen Schlüssel 250 eines anonymen Kontos umfassen. Der private kryptographische Schlüssel 250 ist beispielsweise in einem geschützten Speicherbereich 183 des Speichers 182 gespeichert. Ferner kann der Speicher 182 beispielsweise einen dem privaten kryptographischen Schlüssel 250 zugeordneten öffentlichen kryptographischen Schlüssel 252 umfassen. Zudem kann in dem Speicher 182 eine Identifikationsnummer 254 des anonymen Kontos ("account number"/AN) gespeichert sein. Beispielsweise berechnet das mobile Kommunikationsgerät 180 den öffentlichen kryptographischen Schlüssel 252 unter Verwendung des von der Banknote bereitgestellten privaten kryptographischen Schlüssels 250.

Das Nutzercomputersystem 190 umfasst beispielsweise einen Speicher 192und einen Prozessor 194 zum Ausführen von Programinstruktionen 196. Ferner umfasst das Nutzercomputersystem 190 beispielsweise eine Kommunikationsschnittstelle 197 zur Kommunikation mit der Banknote 100 sowie eine Kommunikationsschnittstelle 198 zur Kommunikation über das Netzwerk 160. Beispielsweise umfasst das Nutzercomputersystem 190 einen Sensor, wie etwa eine Kamera, zum Erfassen von visuellen Angaben 107 der Banknote 100, wie etwa der Seriennummer 106 der Banknote 100. Das Nutzercomputersystem 190 ist beispielsweise dazu konfiguriert eine Zahlungsanfrage, etwa von dem Server 170 oder dem Zahlungsdienstserver 200, an die Banknote 100 und eine Zahlungsautorisierung der Banknote 100 mit einem zahlungsindividuellen Kryptogramm an den Server 170 oder den Zahlungsdienstserver 200 weiterzuleiten. Beispielsweise kann das Nutzercomputersystem 190 dazu konfiguriert sein, direkt oder unter Vermittlung eines Servers wie etwa dem Server 170 oder dem Zahlungsdienstserver 200 den aktuellen Nominalwert der Banknote 100 gemäß dem der Banknote 100 zugeordneten Banknotenkonto zu ermitteln und einem Nutzer unter Verwendung einer Nutzerschnittstelle 191 anzuzeigen. Die Nutzerschnittstelle 191 umfasst beispielsweise eine Eingabe- und eine Ausgabevorrichtung zur Kommunikation des Nutzers mit dem mobilen Kommunikationsgerät 190. Die Eingabevorrichtung umfasst beispielsweise eine Tastatur und/oder Maus. Die Ausgabevorrichtung umfasst beispielsweise ein Display. Beispielsweise sind Eingabe- und Ausgabevorrichtung in Form eines Touch-Displays miteinander kombiniert.

Ferner kann das Nutzercomputersystem 190 einen aus dem banknotenindividuellen kryptographischen Schlüssel 118 abgeleiteten privaten kryptographischen Schlüssel 250 eines anonymen Kontos umfassen. Der private kryptographische Schlüssel 250 ist beispielsweise in einem geschützten Speicherbereich 193 des Speichers 192 gespeichert. Ferner kann der Speicher 192 beispielsweise einen dem privaten kryptographischen Schlüssel 250 zugeordneten öffentlichen kryptographischen Schlüssel 252 umfassen. Zudem kann in dem Speicher 192 eine Identifikationsnummer 254 des anonymen Kontos ("account number"/AN) gespeichert sein. Beispielsweise berechnet das Nutzercomputersystem 190 den öffentlichen kryptographischen Schlüssel 252 unter Verwendung des von der Banknote bereitgestellten privaten kryptographischen Schlüssels 250.

Der Server 200 des Zahlungsdienstanbieters ist beispielsweise dazu konfiguriert eine Zahlungsabwicklung unter Verwendung der Banknote 100 und einem lokalen Gerät zur Kommunikation mit der Banknote 100, wie etwa dem Terminal 130, mobilen Kommunikationsgerät 180 oder dem Nutzercomputersystem 190, zu ermöglichen. Der Zahlungsdienstserver 200 umfasst beispielsweise einen Speicher 202, einen Prozessor 204 zum Ausführen von Programminstruktionen 206 und eine Kommunikationsschnittstelle 208 zur Kommunikation über das Netzwerk 160. Beispielsweise stellt der Zahlungsdienstserver 200 dem lokalen Gerät Transaktionsdaten einer auszuführenden Transaktion, wie etwa einen Identifikator eines Empfängerkontos und/oder Angaben zu dem zu zahlenden Betrag zur Verfügung. Beispielsweise leitet der Zahlungsdienstserver 200 über das lokale Gerät empfangene Zahlungsautorisierungen an den Zentralbankserver 220 weiter. Beispielsweise leitet der Zahlungsdienstserver 200 von dem Zentralbankserver 220 empfangene Zahlungsbestätigungen an das lokale Gerät weiter.

Das System 157 umfasst beispielsweise ferner einen Herstellercomputersystem 210, welches im Zuge der Herstellung der Banknote 100 zum Einsatz kommt. Das Herstellercomputersystem 210 umfasst beispielsweise einen Speicher 212 und einen Prozessor 214 zum Ausführen von Programminstruktionen 216. Ferner umfasst das Herstellercomputersystem 210 beispielsweise eine Kommunikationsschnittstelle 221 zur Kommunikation mit der Banknote 100. Beispielsweise sendet das Herstellercomputersystem 210 im Zuge der Initialisierung der der Banknote von dem Zentralbankserver 220 empfangene banknotenindividuelle Daten unter Verwendung der Kommunikationsschnittstelle 217 zur Speicherung an die Banknote 100, wie etwa die Identifikationsnummer 116 oder den kryptographischen Schlüssel 118. Ferner umfasst das Herstellercomputersystem 210 beispielsweise einen Sensor 219 zum Prüfen der Banknote 100. Unter Verwendung des Sensor 219 wird beispielsweise eine Qualitätskontrolle der Banknote 100 durchgeführt. Besteht die Banknote 100 die Qualitätskontrolle wird beispielsweise eine Herstellungsbestätigung von dem Herstellercomputersystem 210 unter Verwendung einer Kommunikationsschnittstelle 218 zur Kommunikation mit einem Computersystem der Zentralbank, wie etwa den Zentralbankserver 220, an die Zentralbank gesendet. Die Herstellungsbestätigung umfasst beispielsweise die Seriennummer 106 und/oder zur Initialisierung der Banknote 100 dem Zentralbanksystem 156 und zum Einrichten eines Banknotenkontos für die hergestellte Banknote 100

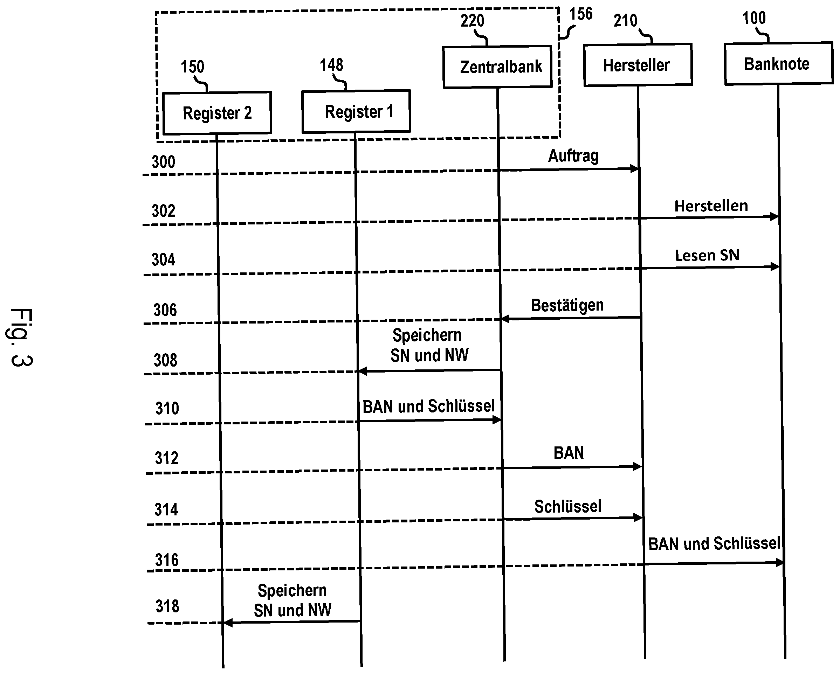

Figur 3 zeigt ein schematisches Flussdiagramm eines exemplarischen Verfahrens zum Ausstellen von Banknoten 100. In Schritt 300 sendet die Zentralbank 220 einen Auftrag zur Herstellung von Banknoten 100 an einen Hersteller 210, z.B. einer Druckerei. Der Auftrag gibt beispielsweise einen Bereich von Seriennummern vor. Der Bereich von Seriennummern gibt Seriennummern vor, welche für die herzustellenden Banknoten 100 zu verwenden sind. Beispielsweise gibt der Auftrag ferner initiale Nominalwerte für die herzustellenden Banknoten 100 vor. Beispielsweise gibt der Auftrag einen Mindestnominalwert und/oder einen variablen Zusatznominalwertanteil vor. In Schritt 302 stellt der Hersteller 210 die Banknoten 100 gemäß dem empfangenen Auftrag her. Die hergestellten Banknoten 100 umfassen beispielsweise jeweils ein Sicherheitselement mit einem Prozessor. Ferner umfassen die hergestellten Banknoten 100 beispielsweise jeweils eine visuelle Angabe einer der Seriennummern aus dem vorgegebenen Bereich von Seriennummern, welche der jeweiligen Banknote im Zuge des Herstellungsprozesses zugeordnet wurde. In Schritt 304 liest der Hersteller 210 jeweils die visuelle Angabe der Seriennummern der hergestellten Banknoten 100. Beispielsweise sind in den Speichern der Banknoten 100 zusätzlich die Seriennummern der Banknoten 100 gespeichert. Beispielsweise liest der Hersteller 210 zusätzlich jeweils die Seriennummer aus den Speichern der Banknoten 100 aus. Ferner umfassen die hergestellten Banknoten 100 beispielsweise jeweils visuelle Angaben eines initialen Nominalwerts und/oder eines Mindestnominalwerts. Beispielsweise liest der Hersteller 210 jeweils die visuellen Angaben des initialen Nominalwertes und/oder des Mindestnominalwerts der hergestellten Banknoten 100. Beispielsweise sind in den Speichern der Banknoten 100 zusätzlich die initialen Nominalwerte, Mindestnominalwerte und/oder variablen Zusatznominalwertanteile, welche den entsprechenden Banknoten 100 zugeordnet sind, gespeichert. Beispielsweise liest der Hersteller 210 zusätzlich jeweils den initialen Nominalwert, Mindestnominalwert und/oder variablen Zusatznominalwertanteil aus den Speichern der Banknoten 100 aus. In Schritt 306 wird eine Herstellungsbestätigung an die Zentralbank 220 gesendet, welche die hergestellten Banknoten 100 identifiziert. Beispielsweise gibt die Herstellungsbestätigung die Seriennummern der hergestellten Banknoten 100 an. Beispielsweise gibt die Herstellungsbestätigung die initialen Nominalwerte der hergestellten Banknoten 100 an. Beispielsweise gibt die Herstellungsbestätigung Mindestnominalwerte und/oder variable Zusatznominalwertanteile der initialen Nominalwerte an.

In Schritt 308 speichert die Zentralbank 220 die Seriennummern der hergestellten Banknoten in einem ersten Register bzw. Datenbank 148. Beispielsweise speichert die Zentralbank ferner für die hergestellten Banknoten 100 jeweils den zugeordneten Nominalwert, Mindestnominalwert und/oder variable Zusatznominalwertanteil des initialen Nominalwerts. In Schritt 310 erzeugt das erste Register 148 bzw. das das erste Register 148 verwaltende Zentralbanksystem 156 für jede der hergestellten Banknoten 100, deren Seriennummern in dem ersten Register 148 gespeichert werden jeweils eine Identifikationsnummer, welche ein der Zentralbank 220 verwaltetes und der entsprechenden Banknote 100 individuell zugeordnetes anonymes Banknotenkonto identifiziert. Bei der Identifikationsnummer handelt es sich mithin um eine "banknote account number" (BAN). Die Seriennummer wird beispielsweise zum Identifizieren der Banknote verwendet, die Identifikationsnummer wird beispielsweise zum Identifizieren des Banknotenkonto für eine Zahlungsabwicklung verwendet. Beispielsweise wird die Seriennummer jeweils als ein Seed zu erzeugen der Identifikationsnummer für die entsprechende Banknote verwendet. Beispielsweise wird ferner ein Seed der Zentralbank 220 zum Erzeugen der Identifikationsnummer verwendet. Bei dem Seed der Zentralbank handelt es sich beispielsweise um ein Geheimnis der Zentralbank 220, wie etwa eine Zufallszahl, ein symmetrischer kryptographischer Schlüssel oder ein privater kryptographischer Schlüssel. Ferner erzeugt das erste Register 148 bzw. das das erste Register 148 verwaltende Zentralbanksystem 156 für jede der hergestellten Banknoten 100 jeweils einen banknotenindividuellen kryptographischen Schlüssel. Bei diesem banknotenindividuellen kryptographischen Schlüssel handelt es sich beispielsweise um einen banknotenindividuellen symmetrischen kryptographischen Schlüssel oder um einen privaten kryptographischen Schlüssel eines banknotenindividuellen asymmetrischen Schlüsselpaars. Die BAN sowie der banknotenindividuelle werden von dem ersten Register 148 intern an einen Server der Zentralbank 220 weitergeleitet.

In Schritt 312 wird ein erster kryptographisch gesicherter Kanal zwischen einem Server der Zentralbank 220 und einem Computersystem des Herstellers 210 aufgebaut. Über diesen ersten kryptographisch gesicherten Kanal wird die BAN von der Zentralbank 220 an den Hersteller 210 gesendet. Bei dem ersten kryptographisch gesicherten Kanal handelt es beispielsweise um einen Ende-zu-Ende-verschlüsselte Kommunikationsverbindung zwischen der Zentralbank 220 und dem Hersteller 210. Verschlüsselt ist die Verbindung beispielsweise mit einem ersten symmetrischen Sitzungsschlüssel. In Schritt 314 wird ein zweiter kryptographisch gesicherter Kanal zwischen dem Server der Zentralbank 220 und dem Computersystem des Herstellers 210 aufgebaut. Über diesen zweiten kryptographisch gesicherten Kanal wird der banknotenindividuelle kryptographische Schlüssel der Banknote von der Zentralbank 220 an den Hersteller 210 gesendet. Bei dem zweiten kryptographisch gesicherten Kanal handelt es beispielsweise um einen Ende-zu-Ende-verschlüsselte Kommunikationsverbindung zwischen der Zentralbank 220 und dem Hersteller 210. Verschlüsselt ist die Verbindung beispielsweise mit einem zweiten symmetrischen Sitzungsschlüssel.

In Schritt 316 speichert der Hersteller 210 die BAN und den banknotenindividuellen kryptographischen Schlüssel in einem Speicher des Sicherheitselements der jeweiligen Banknote. Dabei wird der banknotenindividuelle kryptographische Schlüssel beispielsweise in eine geschützten Speicherbereich des Speichers des Sicherheitselements. Ferner registriert das erste Register 148 in Schritt 318 die die Seriennummern der hergestellten Banknoten in einem zweiten Register bzw. Datenbank 150. Beispielsweise speichert die Zentralbank ferner für die hergestellten Banknoten 100 jeweils den zugeordneten Nominalwert, Mindestnominalwert und/oder variable Zusatznominalwertanteil des initialen Nominalwerts in dem zweiten Register 150. Dabei dient die Seriennummer beispielsweise als Datenbankzugriffsschlüssel zum Zugreifen auf die in dem zweiten Register 150 gespeicherten Angaben zum Nominalwert der entsprechenden Banknote. Bei dem zweiten Register handelt es sich beispielsweise um ein öffentlich zugängliches Register, welches beispielsweise als Lookup-Tabellen (LUT) bzw. Umsetzungstabellen konfiguriert sein. Das zweite Register erlaubtes beispielsweise jedermann mit der Seriennummer einer Banknote den aktuellen Nominalwert der entsprechenden Banknote, etwa über das Internet, nachzuschlagen.

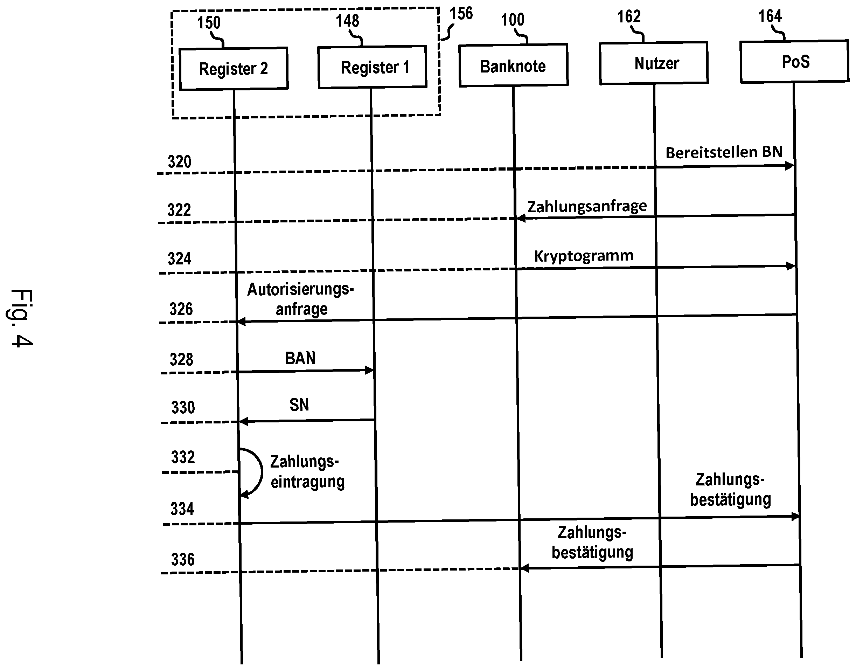

Figur 4 zeigt ein schematisches Flussdiagramm eines exemplarischen Verfahrens zur Zahlungsabwicklung mit einem Terminal eines PoS ("Point of Sale") 164. In Schritt 320 stellt der Nutzer 162 eine Banknote 100 für eine bargeldlose Zahlung bereit. In Schritt 322 erstellt der PoS 164 eine Zahlungsanfrage zur Zahlung eines bestimmten Betrags und sendet die Zahlungsanfrage an die Banknote 100. In Schritt 324 erzeugt die Banknote 100 bzw. das Sicherheitselement der Banknote 100 ein zahlungsindividuelles Kryptogramm zur Autorisierung der Zahlung. Das Kryptogramms wird beispielsweise aus der Identifikationsnummer der Banknote und einem zahlungsindividuellen Code als Eingangswerte unter Verwendung des banknotenindividuellen kryptographischen Schlüssels erzeugt. Der zahlungsindividuelle Code umfasst beispielsweise eine Zeitstempel. Ferner kann der zahlungsindividuelle Code bzw. das Kryptogramm als weitere Eingangswerte den zu zahlenden Betrag und eine Identifikationsnummer eines Kontos des Zahlungsempfängers, auf welchen der Betrag gezahlt werden soll. Beispielsweise wird zur Erzeugung des Kryptogramms auf die Eingangswerte eine Hashunktion oder eine andere Einwegfunktion angewendet und das Ergebnis mit dem banknotenindividuellen kryptographischen Schlüssel verschlüsselt. Alternativ könnten die Eingangswerte auch ohne Anwendung einer Einwegfunktion mit dem banknotenindividuellen kryptographischen Schlüssel verschlüsselt werden. Die Banknote 100 sendet eine das zahlungsindividuelle Kryptogramm umfassende Zahlungsautorisierung an den PoS 164. Die Zahlungsautorisierung umfasst neben dem Kryptogramm beispielsweise die zur Erstellung des Kryptogramms verwendeten Eingangswerte in verschlüsselter Form oder in Klartext, d.h. in unverschlüsselter Form. In Schritt 326 sendet der PoS 164 eine Autorisierungsanfrage zum Validieren der Zahlungsautorisierung der Banknote 100 an das Zentralbanksystem 156. In Schritt 328 extrahiert das Zentralbanksystem 156 die BAN aus der Zahlungsautorisierung. Falls die Zahlungsautorisierung die BAN in verschlüsselter Form umfasst entschlüsselt das Zentralbanksystem 156 beispielsweise die BAN. Hierzu verfügt das Zentralbanksystem 156 im Falle eines symmetrischen banknotenindividuellen kryptographischen Schlüssels beispielsweise über symmetrischen den banknotenindividuellen kryptographischen Schlüssel. Im Falle eines privaten kryptographischen Schlüssels eines banknotenindividuellen asymmetrischen Schlüsselpaars verfügt das Zentralbanksystem 156 beispielsweise über einen zugehörigen öffentlichen kryptographischen Schlüssel des banknotenindividuellen asymmetrischen Schlüsselpaars.

Das Zentralbanksystem 156 sendet die BAN an das erste Register 148 zum Validieren, dass es sich bei der BAN um eine gültige in dem ersten Register 148 eingetragene BAN eines existierenden Banknotenkontos der Banknote handelt. Ferner wird das Kryptogramm auf seien Validität geprüft, d.h. es wird geprüft, ob es mit dem banknotenindividuellen kryptographischen Schlüssel der zu der BAN gehörenden Banknote 100 verschlüsselt wurde. Beispielsweise umfasst das erste Register 148 hierzu neben der BAN einen Prüfschlüssel zum Prüfen des banknotenindividuellen kryptographischen Schlüssels. Bei dem Prüfschlüssel handelt es sich beispielsweise um einen symmetrischen oder öffentlichen kryptographischen Schlüssel zum Entschlüsseln von Verschlüsselungen, welche mit dem banknotenindividuellen kryptographischen Schlüssel erstellt wurden. In Schritt 330 bestätigt das erste Register 148, falls es sich um eine gültige BAN handelt die BAN, und stellt die der BAN zugehörige Seriennummer der entsprechenden Banknote 100 zur Verfügung. Die Seriennummer wird verwendet, um in dem zweiten Register 150 den aktuellen Nominalwert der Banknote nachzuschlagen. Fall der in dem zweiten Register 150 gespeicherte aktuelle Nominalwert der Banknote 100, bei welchem es sich um das Guthaben auf dem Banknotenkonto der Banknote 100 handelt, ausreichend für die Zahlung ist, erfolgt in Schritt 332 die Zahlung. Dazu transferiert die Zentralbank den zu zahlenden Betrag von dem Banknotenkonto der Banknote 100 an ein, beispielsweise in der Zahlungsautorisierung identifiziertes Empfängerkonto. Ferner wird der aktuelle Nominalwert in dem zweiten Register 150 aktualisiert, d.h. um den gezahlten Betrag reduziert. Bei diesem aktualisierten Nominalwert der Banknote handelt es sich beispielsweise um den aktualisierten Kontostand bzw. das aktualisierte Guthaben auf dem Banknotenkonto der Banknote 100. In Schritt 334 sendet das Zentralbanksystem 156 eine Zahlungsbestätigung an den PoS 164. Die Zahlungsbestätigung umfasst beispielsweise den aktualisierten Nominalwert der Banknote 100. Ferner ist die Zahlungsbestätigung beispielsweise mit einem Signaturschlüssel des Zentralbanksystems 156 signiert. In Schritt 336 wird die Zahlungsbestätigung von dem PoS beispielsweise an die Banknote 100 weitergeleitet. Die Banknote 100 prüft beispielsweise die Signatur des Zentralbanksystems 156 bzw. der Zentralbank 220 mit einem Signaturprüfschlüssel. Der Signaturprüfschlüssel zum Prüfen von Signatur des Zentralbanksystems 156 bzw. der Zentralbank 220 wird beispielsweise bei der Herstellung in der Banknote 100 bzw. in dem Speicher des Sicherheitselements der Banknote 100 hinterlegt. Bei dem Signaturschlüssel handelt es sich beispielsweise um einen privaten kryptographischen Schlüssel eines asymmetrischen Schlüsselpaars des Zentralbanksystems 156, während des sich bei dem Signaturprüfschlüssel beispielsweise um einen öffentlichen kryptographischen Schlüssel des entsprechenden asymmetrischen Schlüsselpaars handelt. Falls die Signaturprüfung erfolgreich ist, ersetzt die Banknote 100 den in dem Speicher des Sicherheitselements gespeicherten Nominalwert beispielsweise durch den aktualisierten Nominalwert gemäß der Zahlungsbestätigung des Zentralbanksystems 156.

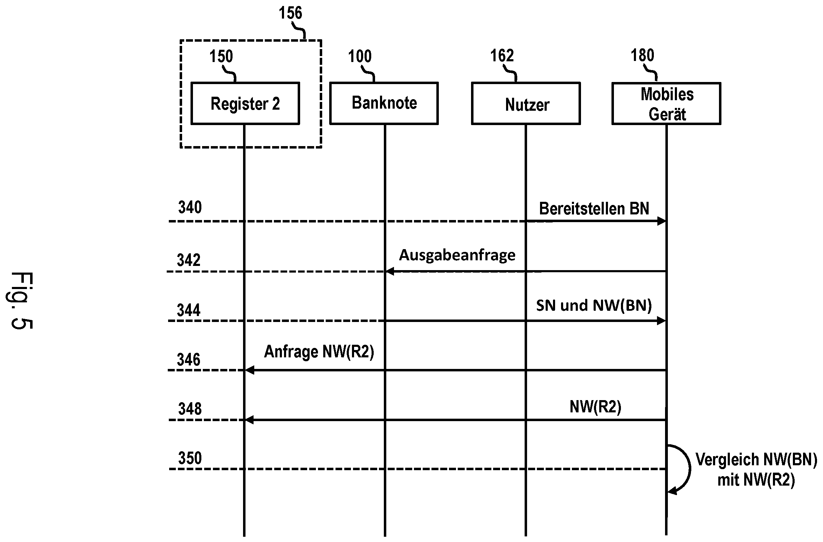

Figur 5 zeigt ein schematisches Flussdiagramm eines exemplarischen Verfahrens zur Bestätigung eines aktuellen Nominalwerts 109 einer Banknote 100. In Schritt 340 stellt der Nutzer 162 eine Banknote 100 einem mobilen tragbaren Kommunikationsgerät 180, z.B. einem Smartphone, zum Ermitteln des aktuellen Nominalwerts der entsprechenden Banknote 100 bereit. Beispielsweise verwendet der Nutzer hierzu eine auf dem mobilen Kommunikationsgerät 180 installierte App, in welcher er eine Verifikation des in der Bankknote gespeicherten Nominalwerts anfragt. In Schritt 342 sendet das mobile Kommunikationsgerät 180 daraufhin eine Ausgabeanfrage zum Ausgeben des in dem Speicher des Sicherheitselements der Banknote 100 gespeicherten aktuellen Nominalwerts sowie beispielsweise der Seriennummer der Banknote als Identifikator der Banknote 100. In Schritt 344 sendet die Banknote 100 in Antwort den gespeicherten Nominalwert NW(BN) und die Seriennummer der Banknote 100 an das mobile Kommunikationsgerät 180. Die Seriennummer kann auch unter Verwendung der visuellen Angabe derselben mit einem optischen Sensor des mobilen Kommunikationsgerät 180, wie etwa einer Kamera erfasst werden. In Schritt 346 sendet das mobile Kommunikationsgerät 180 ferner eine Anfrage nach dem in dem zweite Register 150 für die Seriennummer der Banknote 100 gespeicherten aktuellen Nominalwert an das Zentralbanksystem 156. In Schritt 348 empfängt das mobilen Kommunikationsgerät 180 in Antwort den in dem zweiten Register 150 für die Banknote 100 gespeicherten aktuellen Nominalwert NW(R2). In Schritt 350 vergleicht das mobile Kommunikationsgerät 180 die beiden Nominalwerte NW(BN) und NW(R2) miteinander. Falls diese beide Werte übereinstimmen, bestätigt das mobile Kommunikationsgerät 180 den in der Banknote 100 gespeicherten Nominalwert als aktuell und zeigt diesen beispielsweise auf einer Anzeigevorrichtung, wie etwa einem Display, für den Nutzer 162 an. Falls die beiden Werte nicht übereinstimmen, leitet das mobile Kommunikationsgerät 180 den in dem zweiten Register 150 gespeicherten aktuellen Nominalwert NW(R2) beispielsweise an die Banknote 100 zum Aktualisieren des dort gespeicherten Nominalwerts weiter. Zum Nachweis der Authentizität des Nominalwert NW(R2) ist dieser von dem Zentralbanksystem 156 beispielsweise mit einem Signaturschlüssel signiert.

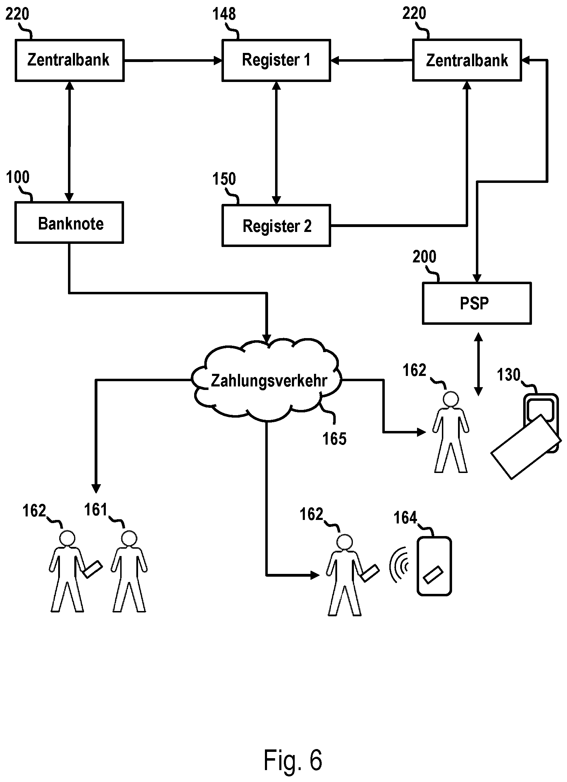

Figur 6 zeigt ein schematisches Blockdiagramm exemplarischer Verfahren zum Verwenden von Banknoten 100. Die Zentralbank 220 gibt die Banknoten 100 aus. Die Zentralbank 220 erzeugt in Zuge der Initialisierung der Banknoten 100 eine Identifikationsnummer für die Banknote 100, welche ein von der Zentralbank verwaltetes und der entsprechenden Banknote 100 individuell zugeordnetes anonymes Banknotenkonto identifiziert. Ferner erzeugt die Zentralbank beispielsweise einen banknotenindividuellen kryptographischen Schlüssel für die Banknoten 100. Identifikationsnummer und kryptographischer Schlüssel werden der Banknote 100 beispielsweise von der Zentralbank 220 bereitgestellt und in dem Sicherheitselement der Banknote 100 gespeichert. Beispielsweise kann der einen banknotenindividuellen kryptographischen Schlüssel auch von der Banknote 100 selbst erzeugt werden, etwa als privater kryptographischer Schlüssel eines asymmetrischen Schlüsselpaars der der Banknote 100. In diesem Fall kann der Zentralbank 220 beispielsweise ein zugehöriger öffentlicher kryptographischer Schlüssel des asymmetrischen Schlüsselpaars als Prüfschlüssel zum Prüfen von Kryptogrammen der Banknote zur Verfügung gestellt werden. Dem von der Identifikationsnummer identifizierten Banknotenkonto der Banknote 100 wird ein initialer Nominalwert der Banknote 100 als Guthaben gutgeschrieben. Dies erfolgt beispielsweise durch die Zentralbank. Die initialen Nominalwerte werden beispielsweise von der Zentralbank bei der Herstellung der Banknoten 100 vorgegeben. Die Gutschrift der initialen Nominalwerte auf den Banknotenkonten bzw. die Initialisierung der Banknoten erfolgt beispielsweise auf ein Erzeugen der zugehörigen Identifikationsnummer durch die Zentralbank hin. Die Identifikationsnummern werden beispielsweise jeweils für eine bestimmte Seriennummer einer hergestellten Banknote erzeugt. Die Identifikationsnummer, Seriennummern und/oder banknotenindividuellen Prüfschlüssel zum Prüfen von Kryptogrammen der entsprechenden Banknoten werden in einem ersten von der Zentralbank 220 verwalteten Register 148 gespeichert. In einem zweiten der Zentralbank 220 verwalteten Register 150 werden die aktuellen Nominalwerte, d.h. die aktuellen Guthaben der Banknotenkonten, gespeichert. Die Zuordnung zu den Banknoten 100 erfolgt beispielsweise anhand der Seriennummern der Banknoten 100, welche als Datenbankzugriffsschlüssel für das zweite Register 150 dienen.

Sind die Banknoten 100 hergestellt gelangen sie in den freien Zahlungsverkehr 165. Sie können als Barzahlungsmittel von einem Nutzer 162 an eine Zahlungsempfänger 161 übergebe werden. Mit der Übergabe geht nicht nur das Eigentum an der Banknote 100, sondern auch an dem der Banknote 100 zugeordneten Guthaben auf dem Banknotenkonto, d.h. dem aktuellen Nominalwert der Banknote, an den Zahlungsempfänger 161 über. Ferner kann der Nutzer 162 die Banknote 100 zur Zahlung mittels eines mobilen tragbaren Kommunikationsgeräts 180, wie etwa einem Smartphone, verwenden. Beispielsweise können Zahlungen über das Internet abgewickelt werden, bei welchen das mobile Kommunikationsgerät 180 als lokales Terminal fungiert. Beispielsweise können Zahlungen von dem Banknotenkonto auf andere Konten gesendet bzw. veranlasst werden. Beispielsweise können Zahlungen von dem Banknotenkonto auf andere Banknotenkonten gesendet bzw. veranlasst werden. Ferner können mittels des mobile Kommunikationsgerät 180 beispielsweise die Banknote 100 und/oder ein auf der Banknote gespeicherter aktueller Nominalwert verifiziert werden. Schließlich kann die Banknote 100 beispielsweise zum Zahlen an einem Terminal 130, beispielsweise eines PoS, verwendet werden. Zur Autorisierung einer Zahlung erzeugt die Banknote 100 ein zahlungsindividuelles Kryptogramm unter Verwendung des banknotenindividuellen kryptographischen Schlüssels. Das Terminal kann beispielsweise mit einem Zahlungsdienstleister 200 (engl. "ayment-Service-Provider"/PSP) kommunizieren, welcher beispielsweise die Zahlungsabwicklung unter Verwendung des Kryptogramms vornimmt. Der Zahlungsdienstleister 200 leitet das Kryptogramm zur Zahlungsabwicklung beispielsweise an die Zentralbank 220 weiter, welche das Kryptogramm unter Verwendung des ersten Registers 148 prüft. Ist das Kryptogramm valide und der Nominalwert der Banknote 100 gemäß dem zweiten Register 150 ausreichend für die Zahlung verbucht die Zentralbank 220 die Zahlung und bestätigt diese gegenüber dem Zahlungsdienstleister 200. Die Zahlungsbestätigung wird beispielsweise von dem Zahlungsdienstleiser 200 über das Terminal 130 an die Banknote 100 weitergeleitet. Die Zahlungsbestätigung umfasst beispielsweise den aus der Zahlung resultierenden aktuellen Nominalwert der Banknote 100. Die Banknote 100 kann unter Verwendung des von der Zahlungsbestätigung bereitgestellten aktuellen Nominalwert den in der Banknote 100 gespeicherten bisherigen Nominalwert aktualisieren. Maßgeblich für den tatsächlichen Nominalwert einer Banknote 100 ist im vorliegenden Fall beispielsweise der Kontostand bzw. das Guthaben des Banknotenkontos der Banknote 100.

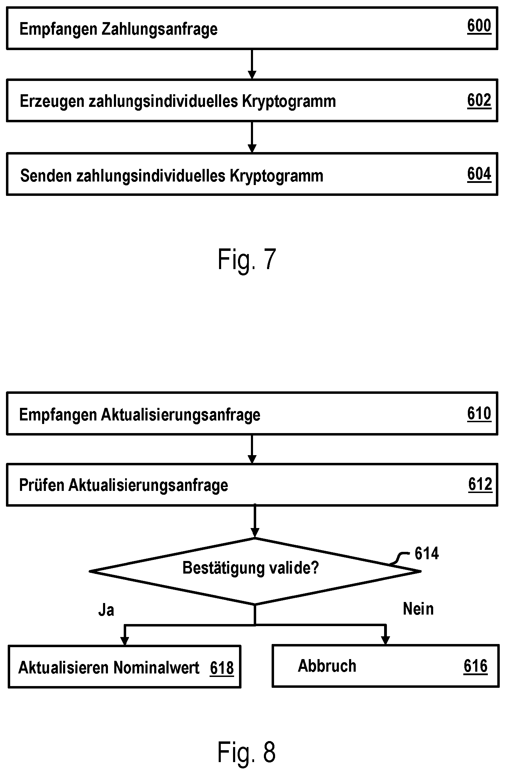

Figur 7 zeigt ein schematisches Flussdiagramm eines exemplarischen Verfahrens zum Verwenden einer Banknote. Die Banknote umfasst eine visuelle Angabe einer die Banknote eindeutig identifizierenden Seriennummer eines initialen Nominalwerts der Banknote. Die Banknote umfasst ein Sicherheitselement mit einem Prozessor und einem Speicher. In dem Speicher des Sicherheitselements ist eine Identifikationsnummer der Banknote gespeichert, welche ein von einer die Banknote ausgebenden Zentralbank verwaltetes und der entsprechenden Banknote individuell zugeordnetes anonymes Banknotenkonto identifiziert. In einem geschützten Speicherbereich des Speichers des Sicherheitselements ist ferner ein banknotenindividueller kryptographischer Schlüssel gespeichert.

In Block 600 wird eine Zahlungsanfrage für eine Zahlung mit der Banknote empfangen. In Block 602 wird ein zahlungsindividuelles Kryptogramm zur Autorisierung der Zahlung mit der Banknote erzeugt. Die Identifikationsnummer der Banknote und ein zahlungsindividueller Code dienen dabei als Eingangswerte, aus welchen unter Verwendung des banknotenindividuellen kryptographischen Schlüssels das Kryptogramm erzeugt wird. Block 604 wird eine das zahlungsindividuelle Kryptogramm umfassenden Zahlungsautorisierung gesendet.

Figur 8 zeigt ein schematisches Flussdiagramm eines exemplarischen Verfahrens zum Aktualisieren eines Nominalwerts einer Banknote. In Block 610 empfängt die Banknote eine Aktualisierungsanfrage zum Aktualisieren eines aktuellen Nominalwerts der Banknote, welcher in einem Speicher eines Sicherheitselements der Banknote gespeicherte ist. Die Aktualisierungsanfrage umfasst einen aktualisierten Nominalwert der Banknote zusammen mit einer kryptographisch gesicherten Bestätigung der Zentralbank für den aktualisierten Nominalwert. In Block 612 prüft die Banknote die Aktualisierungsanfrage. In Block 614 ermittelt die Banknote im Zuge des Prüfens der Aktualisierungsanfrage, ob die kryptographisch gesicherte Bestätigung valide ist. Hierzu verwendet die Banknote einen in dem Speicher des Sicherheitselements gespeicherten kryptographischen Prüfschlüssel. Falls eine entsprechende Bestätigung fehlt oder invalide ist, wird das Verfahren in Block 616 abgebrochen. Falls die entsprechende Bestätigung valide ist, wird in Block 618 der in dem Speicher des Sicherheitselements gespeicherte aktuelle Nominalwert der Banknote mit dem empfangenen aktualisierten Nominalwert ersetzt.

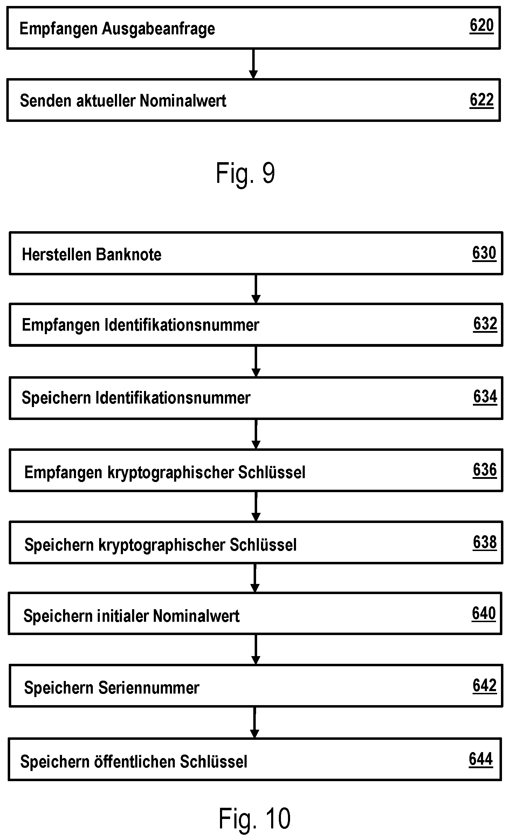

Figur 9 zeigt ein schematisches Flussdiagramm eines exemplarischen Verfahrens zum Ausgeben eines Nominalwerts einer Banknote. In Block 620 empfängt die Banknote eine Ausgabeanfrage zum Ausgeben des in dem Speicher des Sicherheitselements gespeicherten aktuellen Nominalwerts der Banknote. In Antwort auf die Anfrage, sendet die Banknote in Block 622 den in dem Speicher des Sicherheitselements gespeicherten aktuellen Nominalwerts der Banknote.

Figur 10 zeigt ein schematisches Flussdiagramm eines exemplarischen Verfahrens zum Ausstellen einer Banknote. In Block 630 wird die Banknote hergestellt, Die hergestellte Banknote umfasst eine visuelle Angabe einer die Banknote eindeutig identifizierenden Seriennummer der Banknote aus einem vordefinierten Bereich von Seriennummern sowie einen der Banknote zugeordneten initialen Nominalwert. Ferner umfasst die Banknote ein Sicherheitselement mit einem Prozessor und einem Speicher mit Programminstruktionen. In Block 632 wird eine Identifikationsnummer der Banknote über einen ersten kryptographisch gesicherten Kanal empfangen. Diese Identifikationsnummer identifiziert ein von einer die Banknote ausgebenden Zentralbank verwaltetes und der entsprechenden Banknote individuell zugeordnetes anonymes Banknotenkonto. In Block 634 wird die empfangenen Identifikationsnummer in dem Speicher des Sicherheitselements gespeichert. In Block 636 wird ein banknotenindividueller kryptographischer Schlüssel über einen von dem ersten Kanal unabhängigen zweiten kryptographisch gesicherten Kanal empfangen. In Block 638 wird der empfangene banknotenindividuelle kryptographische Schlüssel in einem geschützten Speicherbereich des Speichers des Sicherheitselements gespeichert. In Block 640 wird der initiale Nominalwert der Banknote als aktuellen Nominalwert in dem Speicher des Sicherheitselements gespeichert. In Block 642 wird die Seriennummer der Banknote in dem Speicher des Sicherheitselements gespeichert. In Block 644 wird ein öffentlicher kryptographischer Schlüssel eines asymmetrischen Schlüsselpaars der ausgebenden Zentralbank in dem Speicher der Banknote gespeichert.

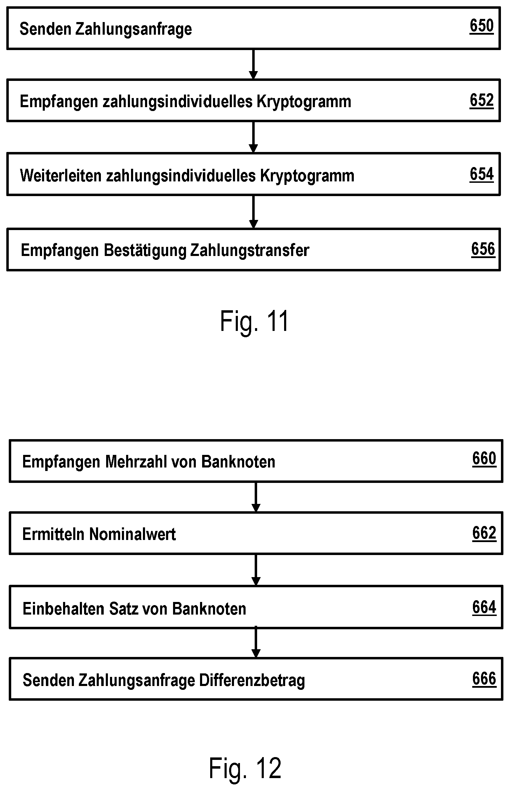

Figur 11 zeigt ein schematisches Flussdiagramm eines exemplarischen Verfahrens zur Zahlungsabwicklung mit einem Terminal. Diese Zahlung erfolgt mit einer Banknote, welche eine visuelle Angabe einer die Banknote eindeutig identifizierenden Seriennummer der Banknote und eines der Banknote zugeordneten initialen Nominalwerts umfasst. Ferner umfasst die Banknote eine Kommunikationsschnittstelle zur Kommunikation mit dem Terminal und ein Sicherheitselement mit einem Prozessor und einem Speicher umfasst. In dem Speicher des Sicherheitselements ist eine Identifikationsnummer der Banknote gespeichert. Diese Identifikationsnummer identifiziert ein anonymes Banknotenkonto, welches von einer die Banknote ausgebenden Zentralbank verwaltet wird und der entsprechenden Banknote individuell zugeordnet ist. In einem geschützten Speicherbereich des Speichers des Sicherheitselements ist ein banknotenindividueller kryptographischer Schlüssel gespeichert. Das Terminal umfasst einen Prozessor, einen Speicher und eine Kommunikationsschnittstelle zur Kommunikation mit der Banknote.

In Block 650 sendet das Terminal eine Zahlungsanfrage an die Banknote. In Block 652 empfängt das Terminal ein zahlungsindividuelles Kryptogramm zur Autorisierung der Zahlung mit der Banknote. Das Kryptogramm ist aus der Identifikationsnummer der Banknote und einem zahlungsindividuellen Code als Eingangswerte unter Verwendung des banknotenindividuellen kryptographischen Schlüssels erzeugt. In Block 654 leitet das Terminal das zahlungsindividuelle Kryptogramm mit einer Angabe des zu zahlenden Betrags an die ausgebende Zentralbank weiter für eine Validierung des zahlungsindividuellen Kryptogramms. Ferner ist prüft die Zentralbank in einem Register, ob der aktuelle Nominalwert der Banknote größer oder gleich dem zu zahlenden Betrag ist. Fallen alle Prüfungen seitens der Zentralbank positiv aus, wir der Zahlungstransfer ausgeführt. Falls der Zahlungstransfer auf eine erfolgreiche Validierung und Registerprüfung durch die Zentralbank erfolgreich ausgeführt ist, empfängt das Terminal Block 656 eine Bestätigung über den erfolgreichen Zahlungstransfer.

Figur 12 zeigt ein schematisches Flussdiagramm eines exemplarischen Verfahrens zur Zahlungsabwicklung mit einer Mehrzahl von Banknoten. In Block 660 wird eine Mehrzahl von Banknoten empfangen. In Block 662 wird für jede der Banknoten jeweils ein aktueller Nominalwert ermittelt. In Block 664 wird aus der Mehrzahl von empfangenen Banknoten ein Satz von Banknoten ausgewählt und einbehalten, deren aufsummierte aktuelle Nominalwerte einen Betrag ergeben, der kleiner als ein zu zahlender Betrag ist. In Block 666 wird eine Zahlungsanfrage zur Zahlung eines verbleibenden Differenzbetrags an eine weitere Banknote der Mehrzahl von Banknoten gesendet, welche nicht von dem Satz von ausgewählten Banknoten umfasst ist. Der verbleibende Differenzbetrag zwischen dem zu zahlenden Betrag und dem aufsummierten Betrag des Satzes von ausgewählten Banknoten ist dabei kleiner als ein aktueller Nominalwert der weiteren Banknote.

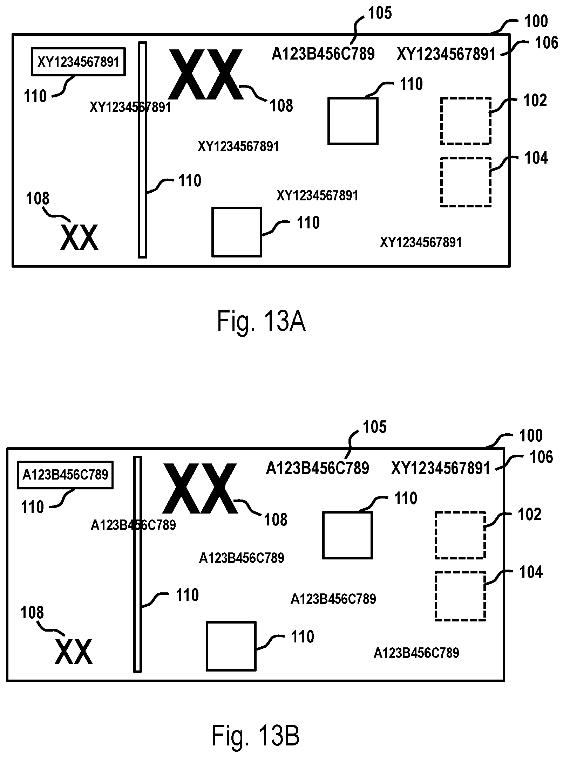

Figuren 13, d.h. Figuren 13A und 13B, zeigen exemplarische Banknoten 100. Figur 13A zeigt eine exemplarische Banknote 100, welche der exemplarischen Banknote 100 aus Figur 1A entspricht. Zusätzlich umfasst die Banknote 100 in Figur 13A zusätzlich zu der visuellen Angabe der Seriennummer 106 eine visuelle Angabe, welche die Blockchain-Adresse der Banknote 100 identifiziert. Bei der zusätzlichen Angabe handelt es sich beispielsweise um einen öffentlichen kryptographischen Schlüssel 105, aus welchem die Blockchain-Adresse der Banknote 100 ableitbar ist, und/oder um die Blockchain-Adresse der Banknote 100. Figur 1D zeigt eine exemplarische Banknote 100, welche der exemplarischen Banknote 100 aus Figur 1C entspricht. Im Fall der Banknote in Figur 1D umfasst die Banknote 100 eine Mehrzahl von zusätzlichen visuellen Angaben, welche eine Blockchain-Adresse der Banknote 100 identifizieren, wie etwa den öffentlichen kryptographischen Schlüssel 105. Diese zusätzlichen visuellen Angaben sind beispielsweise über die Banknote 100 verteilt angeordnet, etwa in Mikroschrift. Beispielsweise sind die zusätzlichen visuellen Angaben so über die Banknote 100 verteilt angeordnet, dass solange mehr als 50% der Banknote in unbeschädigtem Zustand vorliegen, die Blockchain-Adresse der Banknote 100 identifiziert werden kann.

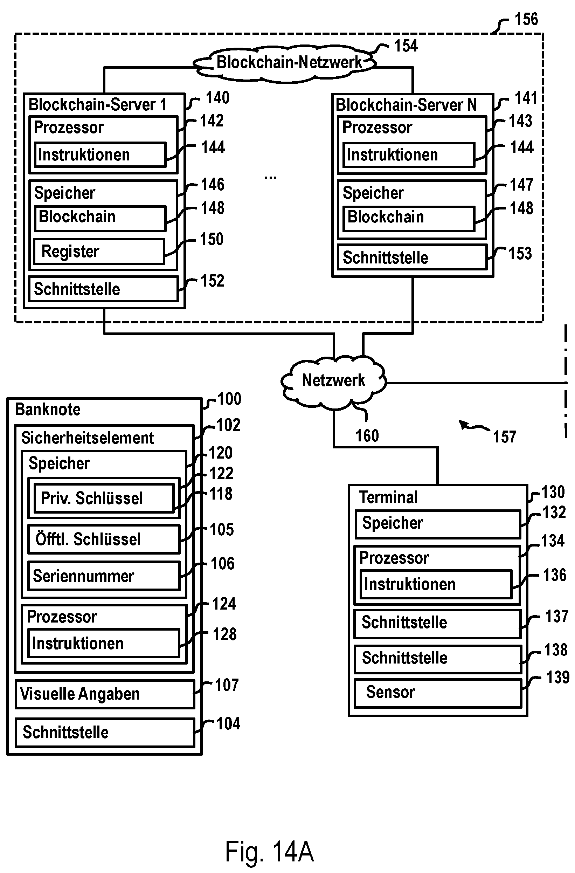

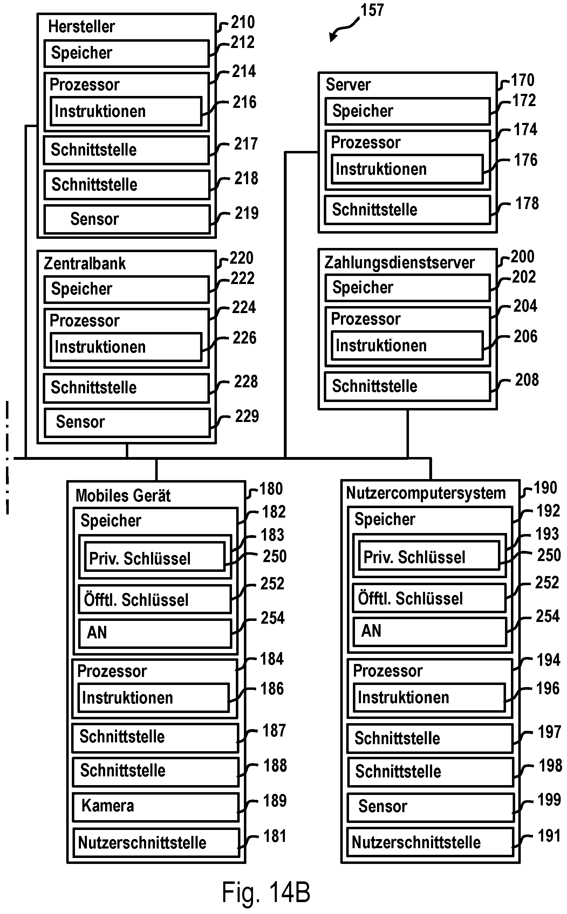

Figur 14 zeigt ein exemplarisches System 157 mit einer exemplarischen Banknote 100. Die Banknote 100 umfasst ein Sicherheitselement 102 mit einem Prozessor 124 und einem Speicher 120. Der Prozessor 124 für Programminstruktionen 128 aus. Diese Programminstruktionen 128 umfassen beispielsweise kryptographische Programminstruktionen zum Erzeugen eines asymmetrischen Schlüsselpaars 105, 118 der Banknote 100 und zum Signieren von Transaktionsfreigaben mit einem privaten kryptographischen Schlüssel 118 des asymmetrischen Schlüsselpaars. Ferner können die kryptographischen Programminstruktionen beispielsweise dazu konfiguriert sein, aus dem öffentlichen kryptographischen Schlüssel 105 eine Blockchain-Adresse der Banknote 110 abzuleiten. In dem Speicher 120 ist der öffentliche kryptographische Schlüssel 105 des asymmetrischen Schlüsselpaars gespeichert. Ferner ist in dem Speicher 120 beispielsweise die Seriennummer der106 der Banknote 100 gespeichert. In einem geschützten Speicherbereich 122 des Speichers 120 ist der privaten kryptographischen Schlüssel 118 des asymmetrischen Schlüsselpaars gespeichert. Ferner umfasst die Banknote 100 beispielsweise eine Kommunikationsschnittstelle 104 zur Kommunikation mit externen Geräten, wie etwa einer einem Terminal 130. Die Kommunikationsschnittstelle 104 ist beispielsweise für eine kontaktlose Kommunikation konfiguriert. Zusätzlich umfasst die Banknote 100 visuelle Angaben 107, etwa der Seriennummer 106 und/oder des öffentlichen kryptographischen Schlüssels 105. Ferner kann die Banknote 100 beispielsweise ferner eine Nutzerschnittstelle mit einer Eingabe- und/oder Ausgabevorrichtung zum Eingeben und/oder Anzeigen von Daten umfassen, wie etwa Transaktionsdaten.

Die Banknote 100 kommuniziert unter Verwendung der Kommunikationsschnittstelle 104 beispielsweise ferner mit einem Computersystem, wie etwa einem mobilen Endgerät 180 oder einem Nutzercomputersystem 190. Die Banknote 100 ist dazu konfiguriert für das entsprechende Computersystem 180, 190 einen aus dem banknotenindividuellen kryptographischen Schlüssel 118 der Banknote 100 abgeleiteten privaten kryptographischen Schlüssels 250 eines anonymen Kontos bereitzustellen. Hierzu leitet die Banknote 100 beispielsweise aus dem banknotenindividuellen kryptographischen Schlüssel 250, etwa unter Verwendung einer Einwegfunktion, ab. Bei der Einwegfunktion handelt es sich beispielsweise um eine KDF-Funktion. Alternativer Weise leitet die Banknote 100 beispielsweise einen Eingangswert zum Berechnen des privaten kryptographischen Schlüssels 250 aus dem banknotenindividuellen kryptographischen Schlüssel 118 ab. Ferner kann die Banknote 100 dazu konfiguriert sein, einen dem privaten kryptographischen Schlüssel 250 zugeordneten öffentlichen kryptographischen Schlüssel 252 zu berechnen. Alternativer Weise kann der zugeordnete öffentliche kryptographische Schlüssel 252 auch von dem den privaten kryptographischen Schlüssel 250 empfangenden Computersystem 180, 190 berechnet werden.

Die Banknote 100 kommuniziert unter Verwendung der Kommunikationsschnittstelle 104 beispielsweise mit einem Terminal 130. Das Terminal 130 ist beispielsweise ein Zahlungsterminal eines PoS. Das Terminal 130 umfasst einen Prozessor 134 zum Ausführen von Programminstruktionen 136 und einen Speicher 132. Ferner umfasst das Terminal 130 eine Kommunikationsschnittstelle 137 zur Kommunikation mit der Banknote 100. Zusätzlich umfasst das Terminal 130 eine Kommunikationsschnittstelle 139 zur Kommunikation über ein Netzwerk 160, wie etwa das Internet. Das Terminal 130 ist beispielsweise zu einer Zahlungsabwicklung mit der Banknote 100 konfiguriert. Hierzu sendet das Terminal 130 beispielsweise eine Zahlungsanfrage an die Banknote 100 und empfängt eine signierte Transaktionsfreigabe von der Banknote 100, welche das Terminal 130 über das Netzwerk 160 an einen Blockchain-Server 140, 141 zur Eintragung der durch die signierte Transaktionsfreigabe autorisierten Transaktion in die Blockchain 148. Der Blockchain-Server 140, 141 gehört beispielsweise zu einem Blockchain-Netzwerk 154. Ferner kann das Terminal beispielsweise Sensor 139 umfassen. Der Sensor 139 ist beispielsweise dazu konfiguriert visuelle Angabe 107 der Banknote 100 zu erfassen, wie etwa die Seriennummer 106 und/oder den öffentlichen kryptographischen Schlüssel 105. Ferner kann der Sensor 139 beispielsweise zum Erfassen von Sicherheitsmerkmalen der Banknote 100 konfiguriert sein, um deren Authentizität und Validität zu prüfen. In dem Speicher 132 ist beispielsweise eine Blockchain-Adresse gespeichert, welche das Terminal 130 als Empfängeradresse zum Empfangen von Zahlungen verwendet.

Das Terminal 130 kommuniziert beispielsweise über einen Remoteserver 170 mit den Blockchain-Servern 140, 141. Der Server 170 umfasst beispielsweise einen Speicher 172, einen Prozessor 174 zum Ausführen von Programminstruktionen 176 und eine Kommunikationsschnittstelle 178 zur Kommunikation über das Netzwerk 160. Beispielsweise stellt der Server 170 dem Terminal 130 die als Empfängeradresse zu verwendende Blockchain-Adresse zur Verfügung. Beispielsweise leitet der Server 170 über das Terminal 130 empfangene signierte Transaktionsfreigaben an die Blockchain-Servern 140, 141 weiter. Beispielsweise leitet der Server 170 von den Blockchain-Servern 140, 141 empfangene Transaktionsbestätigungen und/oder Eintragungsbestätigungen an das Terminal 130 weiter.

Das System 157 umfasst ferner ein oder mehrere Blockchain-Server 140, 141. Die Blockchain-Server 140, 141 sind beispielsweise Teil eines Blockchain-Netzwerks 154 bzw. bilden Blockchain-Knoten eines Blockchain-Netzwerks 154. Die Blockchain-Server 140, 141 und/oder das Blockchain-Netzwerks 154 werden beispielsweise von einer die Banknote ausgebenden Zentralbank verwaltet. Handelt es sich bei der Zentralbank um eine Zentralbank, welcher mehrere Länder angehören, umfasst das Blockchain-Netzwerks 154 beispielsweise ein oder mehrere Blockchain-Server 140, 141 pro Land. Beispielsweise sind die Blockchain-Server 140, 141 und/oder das Blockchain-Netzwerks 154 von einem Zentralbanksystem 156 umfasst. Der Blockchain-Server 140 umfasst beispielsweise einen Speicher, einen Prozessor 142 zum Ausführen von Programminstruktionen 144 und eine Kommunikationsschnittstelle 152 zur Kommunikation über das Netzwerk 160. In dem Speicher 146 ist beispielsweise eine Kopie der Blockchain 148 und/oder ein Register 150 gespeichert. Bei dem Register 150 handelt es sich beispielsweise um ein in regelmäßigen Intervallen geupdatetes Register, welches für die Blockchain-Adressen der Blockchain 148 jeweils einen aktuellen Nominalwert umfasst. Die aktuellen Nominalwerte werden aus den Bilanzen der in der Blockchain 148 gespeicherten Transaktionen für die entsprechenden Blockchain-Adressen berechnet. Das Register 150 stellt beispielsweise eine "Fast Blockchain" bereit, in welcher die vorberechneten Bilanzergebnisse für die Blockchain-Adressen als aktuelle Nominalwerte der entsprechenden Blockchain-Adressen bereitgestellt werden. Eine Verwendung eines solchen Registers kann den Vorteil haben, dass aktuelle Nominalwerte schneller bestimmt werden können, da diese bereits vorliegen und nicht erst berechnet werden müssen. Das Register 150 kann beispielsweise von einer virtuellen Maschine (VM) des Blockchain-Servers 140 verwaltet werden.

Der Blockchain-Server 140 kann dazu konfiguriert sein, auf Anfrage der Zentralbank Banknoten bzw. Blockchain-Adressen von Banknoten in der Blockchain 148 zu registrieren und/oder zu sperren. Der Blockchain-Server 140 kann dazu konfiguriert, auf Anfrage Auskunft über aktuelle Nominalwerte von Banknoten gemäß den in der Blockchain 148 gespeicherten Transaktionen unter Verwendung der Blockchain-Adressen der entsprechenden Banknoten zu erteilen. Beispielsweise verwendet der Blockchain-Server 140 zum Erteilen entsprechender Auskünfte das Register 150. Das Blockchain-Netzwerk 154 kann beispielsweise ein oder mehrere weitere Blockchain-Server 141 umfassen. Die weiteren Blockchain-Server 141 umfassen beispielsweise jeweils einen Speicher 147, einen Prozessor 143 zum Ausführen von Programminstruktionen 145 und eine Kommunikationsschnittstelle 153 zur Kommunikation über das Netzwerk 160. In den Speichern 147 ist beispielsweise jeweils eine Kopie der Blockchain 148 gespeichert. Die Blockchain-Server 141 sind beispielsweise dazu konfiguriert, auf Anfrage der Zentralbank Banknoten bzw. Blockchain-Adressen von Banknoten in der Blockchain 148 zu registrieren und/oder zu sperren.

Anstelle des Terminals 130 kann zur Zahlungsabwicklung auch ein mobiles tragbares Kommunikationsgerät 180 oder ein Nutzercomputersystem 190, etwa zur Zahlungsabwicklung über das Internet, verwendet werden. Dabei kann das mobile Kommunikationsgerät 180 oder der Nutzercomputersystem 190 beispielsweise als lokaler PoS dienen. Beispielsweise erfolgt die Zahlungsabwicklung unter Verwendung des Remoteserver 170. Beispielsweise erfolgt die Zahlungsabwicklung unter Verwendung eines Servers 200 eines Zahlungsdienstanbieters bzw. eines Finanzdienstleisters.

Das mobile Kommunikationsgerät 180, etwa ein Smartphone, umfasst beispielsweise einen Speicher 182 und einen Prozessor 184 zum Ausführen von Programinstruktionen 186. Ferner umfasst das mobile Kommunikationsgerät 180 beispielsweise eine Kommunikationsschnittstelle 187 zur Kommunikation mit der Banknote 100 sowie eine Kommunikationsschnittstelle 188 zur Kommunikation über das Netzwerk 160. Beispielsweise umfasst das mobile Kommunikationsgerät 180 eine Kamera zum Erfassen von visuellen Angaben 107 der Banknote 100, wie etwa der Seriennummer 106 oder den öffentlichen kryptographischen Schlüssel 105 der Banknote 100. Das mobile Kommunikationsgerät 180 ist beispielsweise dazu konfiguriert eine Zahlungsanfrage, etwa von dem Server 170 oder dem Zahlungsdienstserver 200, an die Banknote 100 und eine von der Banknote 100 signierte Transaktionsfreigabe an den Server 170 oder den Zahlungsdienstserver 200 weiterzuleiten. Beispielsweise ist das mobile Kommunikationsgerät 180 ferner dazu konfiguriert, etwa unter Verwendung der Kamera 189, die Blockchain-Adresse der Banknote 100 zu ermitteln und die Zahlungsanfrage an die Banknote 100 um die Blockchain-Adresse als Ausgangsadresse der Zahlung zu ergänzen. Ferner kann das mobile Kommunikationsgerät 180 dazu konfiguriert sein, direkt oder unter Vermittlung eines Servers wie dem Server 170 oder dem Zahlungsdienstserver 200 den aktuellen Nominalwert der Banknote 100 gemäß der Blockchain 148 zu ermitteln und einem Nutzer unter Verwendung einer Nutzerschnittstelle 181 anzuzeigen. Die Nutzerschnittstelle 181 umfasst beispielsweise eine Eingabe- und eine Ausgabevorrichtung zur Kommunikation des Nutzers mit dem mobilen Kommunikationsgerät 180. Die Eingabevorrichtung umfasst beispielsweise eine Tastatur. Die Ausgabevorrichtung umfasst beispielsweise ein Display. Beispielsweise sind Eingabe- und Ausgabevorrichtung in Form eines Touch-Displays miteinander kombiniert.

Ferner kann das mobile Kommunikationsgerät 180 einen aus dem banknotenindividuellen kryptographischen Schlüssel 118 abgeleiteten privaten kryptographischen Schlüssel 250 eines anonymen Kontos umfassen. Der private kryptographische Schlüssel 250 ist beispielsweise in einem geschützten Speicherbereich 183 des Speichers 182 gespeichert. Ferner kann der Speicher 182 beispielsweise einen dem privaten kryptographischen Schlüssel 250 zugeordneten öffentlichen kryptographischen Schlüssel 252 umfassen. Zudem kann in dem Speicher 182 eine Identifikationsnummer 254 des anonymen Kontos ("account number"/AN) gespeichert sein. Beispielsweise berechnet das mobile Kommunikationsgerät 180 den öffentlichen kryptographischen Schlüssel 252 unter Verwendung des von der Banknote bereitgestellten privaten kryptographischen Schlüssels 250.

Das Nutzercomputersystem 190 umfasst beispielsweise einen Speicher 192 und einen Prozessor 194 zum Ausführen von Programinstruktionen 196. Ferner umfasst das Nutzercomputersystem 190 beispielsweise eine Kommunikationsschnittstelle 197 zur Kommunikation mit der Banknote 100 sowie eine Kommunikationsschnittstelle 198 zur Kommunikation über das Netzwerk 160. Beispielsweise umfasst das Nutzercomputersystem 190 einen Sensor, wie etwa eine Kamera, zum Erfassen von visuellen Angaben 107 der Banknote 100, wie etwa der Seriennummer 106 oder den öffentlichen kryptographischen Schlüssel 105 der Banknote 100. Das Nutzercomputersystem 190 ist beispielsweise dazu konfiguriert eine Zahlungsanfrage, etwa von dem Server 170 oder dem Zahlungsdienstserver 200, an die Banknote 100 und eine von der Banknote signierte Transaktionsfreigabe an den Server 170 oder den Zahlungsdienstserver 200 weiterzuleiten. Beispielsweise ist das Nutzercomputersystem 190 ferner dazu konfiguriert, etwa unter Verwendung des Sensors 199, die Blockchain-Adresse der Banknote 100 zu ermitteln und die Zahlungsanfrage an die Banknote 100 um die Blockchain-Adresse als Ausgangsadresse der Zahlung zu ergänzen. Ferner kann das Nutzercomputersystem 190 dazu konfiguriert sein, direkt oder unter Vermittlung eines Servers wie dem Server 170 oder dem Zahlungsdienstserver 200 den aktuellen Nominalwert der Banknote 100 gemäß der Blockchain 148 zu ermitteln und einem Nutzer unter Verwendung einer Nutzerschnittstelle 191 anzuzeigen. Die Nutzerschnittstelle 191 umfasst beispielsweise eine Eingabe- und eine Ausgabevorrichtung zur Kommunikation des Nutzers mit dem mobilen Kommunikationsgerät 190. Die Eingabevorrichtung umfasst beispielsweise eine Tastatur und/oder Maus. Die Ausgabevorrichtung umfasst beispielsweise ein Display. Beispielsweise sind Eingabe- und Ausgabevorrichtung in Form eines Touch-Displays miteinander kombiniert.

Ferner kann das Nutzercomputersystem 190 einen aus dem banknotenindividuellen kryptographischen Schlüssel 118 abgeleiteten privaten kryptographischen Schlüssel 250 eines anonymen Kontos umfassen. Der private kryptographische Schlüssel 250 ist beispielsweise in einem geschützten Speicherbereich 193 des Speichers 192 gespeichert. Ferner kann der Speicher 192 beispielsweise einen dem privaten kryptographischen Schlüssel 250 zugeordneten öffentlichen kryptographischen Schlüssel 252 umfassen. Zudem kann in dem Speicher 192 eine Identifikationsnummer 254 des anonymen Kontos ("account number"/AN) gespeichert sein. Beispielsweise berechnet das Nutzercomputersystem 190 den öffentlichen kryptographischen Schlüssel 252 unter Verwendung des von der Banknote bereitgestellten privaten kryptographischen Schlüssels 250.

Der Server 200 des Zahlungsdienstanbieters ist beispielsweise dazu konfiguriert eine Zahlungsabwicklung unter Verwendung der Banknote 100 und einem lokalen Gerät zur Kommunikation mit der Banknote 100, wie etwa dem mobilen Kommunikationsgerät 180 oder dem Nutzercomputersystem 190, zu ermöglichen. Der Zahlungsdienstserver 200 umfasst beispielsweise einen Speicher 202, einen Prozessor 204 zum Ausführen von Programminstruktionen 206 und eine Kommunikationsschnittstelle 208 zur Kommunikation über das Netzwerk 160. Beispielsweise stellt der Zahlungsdienstserver 200 dem lokalen Gerät Transaktionsdaten einer auszuführenden Transaktion, wie etwa eine als Empfängeradresse zu verwendende Blockchain-Adresse und/oder Angaben zu dem zu zahlenden Betrag zur Verfügung. Beispielsweise leitet der Zahlungsdienstserver 200 über das lokale Gerät empfangene signierte Transaktionsfreigaben an die Blockchain-Servern 140, 141 weiter. Beispielsweise leitet der Zahlungsdienstserver 200 von den Blockchain-Servern 140, 141 empfangene Transaktionsbestätigungen und/oder Eintragungsbestätigungen an das lokale Gerät weiter.

Das System 157 umfasst beispielsweise ein Herstellercomputersystem 210, welches im Zuge der Herstellung der Banknote 100 zum Einsatz kommt. Das Herstellercomputersystem 210 umfasst beispielsweise einen Speicher 212 und einen Prozessor 214 zum Ausführen von Programminstruktionen 216. Ferner umfasst das Herstellercomputersystem 210 beispielsweise eine Kommunikationsschnittstelle 221 zur Kommunikation mit der Banknote 100. Beispielsweise liest das Herstellercomputersystem 210 unter Verwendung der Kommunikationsschnittstelle 217 den öffentlichen kryptographischen Schlüssel 105 der Banknote 100 aus. Beispielsweise sendet das Herstellercomputersystem 210 unter Verwendung der Kommunikationsschnittstelle 217 Daten zur Speicherung an die Banknote 100, wie etwa die Seriennummer 106 der Banknote 100. Ferner umfasst das Herstellercomputersystem 210 beispielsweise einen Sensor 219 zum Prüfen der Banknote 100. Unter Verwendung des Sensor 219 wird beispielsweise eine Qualitätskontrolle der Banknote 100 durchgeführt. Besteht die Banknote 100 die Qualitätskontrolle wird beispielsweise eine Herstellungsbestätigung von dem Herstellercomputersystem 210 unter Verwendung einer Kommunikationsschnittstelle 218 zur Kommunikation mit einem Computersystem der Zentralbank, wie etwa dem Zentralbankcomputersystem 220, an die Zentralbank gesendet. Die Herstellungsbestätigung umfasst beispielsweise die Seriennummer 106 und/oder den öffentlichen kryptographischen Schlüssel 105 der Banknote 100 zur Initialisierung der Banknote 100 in der Blockchain 148.

Das System 157 umfasst ferner beispielsweise ein Zentralbankcomputersystem 220 mit einem Speicher 222 und einem Prozessor 224 zum Ausführen von Programminstruktionen 226. Ferner umfasst das Zentralbankcomputersystem 220 beispielsweise eine Kommunikationsschnittstelle 228 zur Kommunikation mit dem Herstellercomputersystem 210 und/oder mit den Blockchain-Servern 140, 141, beispielsweise über das Netzwerk 160. Das Zentralbankcomputersystem 220 ist beispielsweise dazu konfiguriert Banknoten bzw. Blockchain-Adressen von Banknoten in der Blockchain 148 zu registrieren und/oder zu sperren. Mit anderen Worten ist das Zentralbankcomputersystem 220 beispielsweise dazu konfiguriert eine Initialisierungsanfrage und/oder eine Sperranfrage zum Initialisieren bzw. Sperren der Banknote 100 an einen der Blockchain-Servern 140, 141 zu senden. Zum Erstellen der Initialisierungsanfrage verwendet das Zentralbankcomputersystem 220 beispielsweise Daten, welche das Herstellercomputersystem in Form der Herstellungsbestätigung zur Verfügung stellt. Ferner kann das Zentralbankcomputersystem 220 beispielsweise einen Sensor umfassen zum Prüfen von Sicherheitsmerkmalen einer beschädigten Banknote. Falls die Prüfung der Sicherheitsmerkmalen sowie des Beschädigungsgrads der Banknote ergibt, dass es sich um eine valide Banknote handelt, ersetzt die Zentralbank die beschädigte Banknote. Hierzu ermittelt das Zentralbankcomputersystem 220 beispielsweise den aktuellen Nominalwert der beschädigten Banknote unter Verwendung einer entsprechenden Anfrage an einen der Blockchain-Servern 140, 141, zahlt den aktuellen Nominalwert aus und sendet eine Sperranfrage zum Sperren der Blockchain-Adresse der beschädigten Banknote an einen der Blockchain-Servern 140, 141.

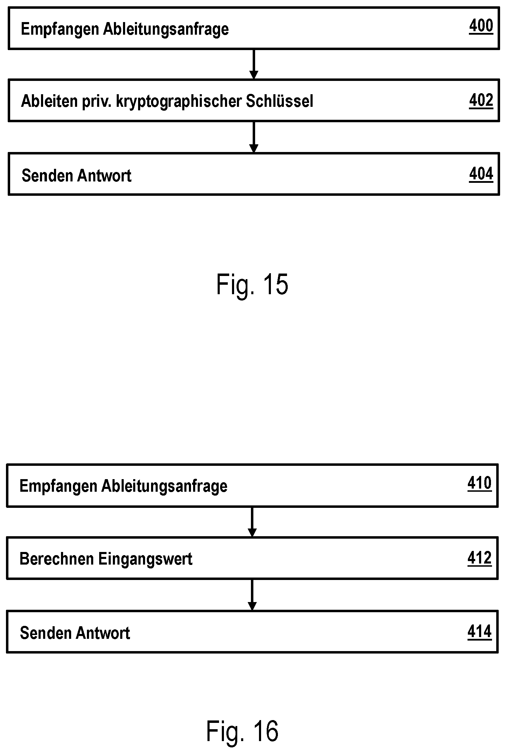

Figur 15 zeigt ein exemplarisches Verfahren zum Ableiten eines ersten privaten kryptographischen Schlüssels eines anonymen Kontos für ein Computersystem unter Verwendung einer Banknote. Das anonyme Konto des Computersystems ist von einem einer Banknote individuell zugeordneten anonymen Banknotenkonto abhängig. Die Banknote umfasst ein Sicherheitselement mit einem Prozessor und einem Speicher mit Programminstruktionen. In dem Speicher des Sicherheitselements ist eine Identifikationsnummer der Banknote gespeichert, welche das von einer die Banknote ausgebenden Zentralbank verwaltete und der entsprechenden Banknote individuell zugeordnete anonyme Banknotenkonto identifiziert. In einem geschützten Speicherbereich des Speichers des Sicherheitselements ist ein banknotenindividueller zweiter kryptographischer Schlüssel gespeichert.

In Block 400 empfängt die Banknote eine Ableitungsanfrage zum Ableiten des ersten privaten kryptographischen Schlüssels für das abhängige anonyme Konto von dem Computersystem. In Block 402 leitet die Banknote den ersten privaten kryptographischen Schlüssel für das abhängige anonyme Konto unter Verwendung einer Einwegfunktion und des banknotenindividuellen zweiten kryptographischen Schlüssels ab. In Block 404 sendet die Banknote den abgeleiteten ersten privaten kryptographischen Schlüssel in Antwort auf die Ableitungsanfrage an das Computersystem. Der abgeleitete erste private kryptographische Schlüssel dient dem Computersystem zum Erzeugen von Kryptogrammen zur Freigabe von Zahlung von dem abhängigen Konto. Beispielsweise berechnet die Banknote zusätzlich zu dem ersten privaten kryptographischen Schlüssel einen ersten öffentlichen kryptographischen Schlüssel und sendet das resultierende erste asymmetrische Schlüsselpaar an das Computersystem. Beispielsweise wird der erste öffentliche kryptographische Schlüssel für den ersten privaten kryptographischen Schlüssel von dem Computersystem berechnet.

Figur 16 zeigt ein weiteres exemplarisches Verfahren zum Ableiten des ersten privaten kryptographischen Schlüssels des anonymen Kontos für das Computersystem unter Verwendung der Banknote. In Block 410 empfängt die Banknote eine Ableitungsanfrage zum Ableiten des ersten privaten kryptographischen Schlüssels für das abhängige anonyme Konto von dem Computersystem. In Block 412 berechnet die Banknote aus dem banknotenindividuellen zweiten kryptographischen Schlüssel einen Eingangswert für die Einwegfunktion zum Ableiten des ersten privaten kryptographischen Schlüssels für das abhängige anonyme Konto. In Block 414 sendet die Banknote den berechneten Eingangswert in Antwort auf die Ableitungsanfrage an das Computersystem. Das Computersystem kann den gesendeten Eingangswert dann zum Ableiten des ersten privaten kryptographischen Schlüssels für das abhängige anonyme Konto unter Verwendung der Einwegfunktion verwenden. Ferner kann das Computersystem einen ersten öffentlichen kryptographischen Schlüssel für den ersten privaten kryptographischen Schlüssel berechnen.

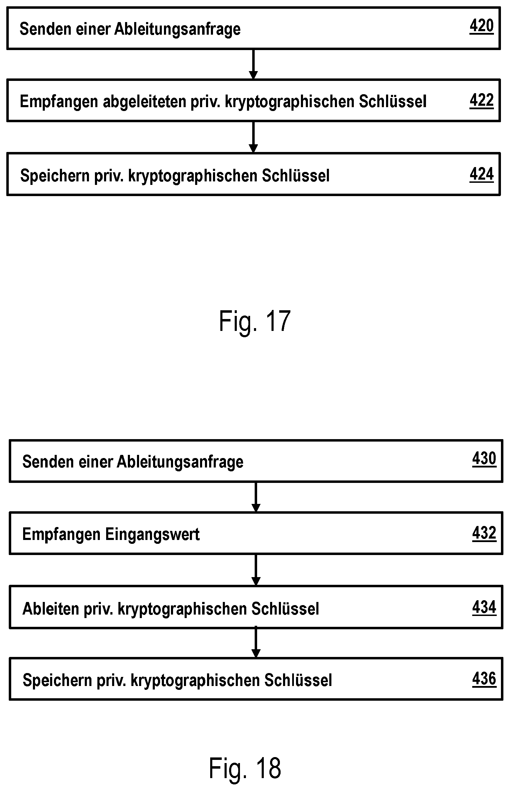

Figur 17 zeigt ein exemplarisches Verfahren zum Ableiten des ersten privaten kryptographischen Schlüssels des anonymen Kontos. Beispielsweise entspricht das Verfahren gemäß Figur 17 dem Verfahren aus Figur 15 aus Sicht des Computersystems. In Block 420 sendet das Computersystem eine Ableitungsanfrage zum Ableiten des ersten privaten kryptographischen Schlüssels für das abhängige anonyme Konto an die Banknote. In Block 422 empfängt das Computerprogramm in Antwort auf die Ableitungsanfrage den ersten privaten kryptographischen Schlüssel für das abhängige anonyme Konto. Dieser erste private kryptographische Schlüssel ist beispielsweise unter Verwendung einer Einwegfunktion und des banknotenindividuellen zweiten kryptographischen Schlüssels der Banknote abgeleitet. In Block 424 speichert das Computersystem den abgeleiteten ersten privaten kryptographischen Schlüssel zur weiteren Verwendung. Beispielsweise wird der erste private kryptographische Schlüssel in einem geschützten Speicherbereich des Computersystems gespeichert. Der abgeleitete erste private kryptographische Schlüssel dient dem Computersystem zum Erzeugen von Kryptogrammen zur Freigabe von Zahlung von dem abhängigen Konto. Beispielsweise empfängt das Computersystem in Block 422 zusammen mit dem ersten privaten kryptographischen Schlüssel einen ersten öffentlichen kryptographischen Schlüssel. Beispielsweise wird der erste öffentliche kryptographische Schlüssel für den ersten privaten kryptographischen Schlüssel von dem Computersystem berechnet.

Figur 18 zeigt ein exemplarisches Verfahren zum Ableiten des ersten privaten kryptographischen Schlüssels des anonymen Kontos. Beispielsweise entspricht das Verfahren gemäß Figur 18 dem Verfahren aus Figur 16 aus Sicht des Computersystems. In Block 430 sendet das Computersystem eine Ableitungsanfrage zum Ableiten des ersten privaten kryptographischen Schlüssels für das abhängige anonyme Konto an die Banknote. In Block 432 empfängt das Computersystem in Antwort auf die Ableitungsanfrage von der Banknote einen aus dem banknotenindividuellen zweiten kryptographischen Schlüssel berechneten Eingangswert für die Einwegfunktion zum Ableiten des ersten privaten kryptographischen Schlüssels. In Block 434 leitet das Computersystem den ersten privaten kryptographischen Schlüssel für das abhängige anonyme Konto unter Verwendung der Einwegfunktion und des empfangenen Eingangswerts ab. Ferner kann das Computersystem einen ersten öffentlichen kryptographischen Schlüssel für den ersten privaten kryptographischen Schlüssel berechnen. In Block 436 speichert das Computersystem den abgeleiteten ersten privaten kryptographischen Schlüssel zur weiteren Verwendung. Beispielsweise wird der erste private kryptographische Schlüssel in einem geschützten Speicherbereich des Computersystems gespeichert. Der abgeleitete erste private kryptographische Schlüssel dient dem Computersystem zum Erzeugen von Kryptogrammen zur Freigabe von Zahlung von dem abhängigen Konto.

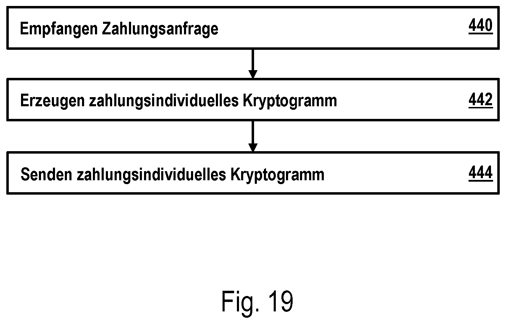

Figur 19 zeigt ein exemplarisches Verfahren zum Zahlen eines Betrags unter Verwendung des Computersystems mit dem abgeleiteten privaten kryptographischen Schlüssel. In Block 440 empfängt das Computersystem eine Zahlungsanfrage zum Zahlen des entsprechenden Betrags. In Block 442 erzeugt das Computersystem ein zahlungsindividuelles Kryptogramm zur Freigabe der Zahlung mit dem abhängigen Konto. Die Identifikationsnummer des abhängigen Kontos und ein zahlungsindividueller Code dienen dabei als Eingangswerte, aus welchen unter Verwendung des abgeleiteten privaten kryptographischen Schlüssels das Kryptogramm erzeugt wird. Block 444 wird eine das zahlungsindividuelle Kryptogramm umfassenden Zahlungsfreigabe gesendet.

### Bezugszeichenliste

- 100: Banknote
- 102: Sicherheitselement
- 104: Kommunikationsschnittstelle
- 105: öffentlicher kryptographischer Schlüssel
- 106: Seriennummer
- 107: visuelle Angabe
- 108: initialer Nominalwert
- 109: aktueller Nominalwert
- 110: Sicherheitsmerkmal
- 112: Nutzerschnittstelle
- 116: Identifikationsnummer
- 118: kryptographischer Schlüssel
- 120: Speicher
- 122: geschützter Speicherbereich
- 124: Prozessor
- 128: Programminstruktionen
- 130: Terminal
- 132: Speicher
- 134: Prozessor
- 136: Programminstruktionen
- 137: Kommunikationsschnittstelle
- 138: Kommunikationsschnittstelle
- 139: Sensor
- 148: Register 1
- 150: Register 2
- 156: Zentralbanksystem
- 157: System
- 160: Netzwerk
- 162: Nutzer
- 161: Zahlungsempfänger
- 164: PoS
- 165: Zahlungsverkehr
- 170: Server
- 172: Speicher
- 174: Prozessor
- 176: Programminstruktionen
- 178: Kommunikationsschnittstelle
- 180: mobiles tragbares Kommunikationsgerät
- 181: Nutzerschnittstelle
- 182: Speicher
- 183: geschützter Speicherbereich
- 184: Prozessor
- 186: Programminstruktionen
- 187: Kommunikationsschnittstelle
- 188: Kommunikationsschnittstelle
- 189: Kamera
- 190: Nutzercomputersystem
- 191: Nutzerschnittstelle
- 192: Speicher
- 193: geschützter Speicherbereich
- 194: Prozessor
- 196: Programminstruktionen
- 197: Kommunikationsschnittstelle
- 198: Kommunikationsschnittstelle
- 199: Sensor
- 200: Zahlungsdienstserver
- 202: Speicher
- 204: Prozessor
- 206: Programminstruktionen
- 208: Kommunikationsschnittstelle
- 210: Herstellercomputersystem
- 212: Speicher
- 214: Prozessor
- 216: Programminstruktionen
- 217: Kommunikationsschnittstelle
- 218: Kommunikationsschnittstelle
- 219: Sensor
- 220: Zentralcomputersystem
- 222: Speicher
- 224: Prozessor
- 226: Programminstruktionen
- 228: Kommunikationsschnittstelle
- 229: Sensor
- 250: privater kryptographischer Schlüssel
- 252: öffentlicher kryptographischer Schlüssel
- 254: Identifikationsnummer

## Patentansprüche

1. Verfahren zum Ableiten eines ersten privaten kryptographischen Schlüssels (250) eines anonymen Kontos, welches von einem einer Banknote (100) individuell zugeordneten anonymen Banknotenkonto abhängig ist, für ein Computersystem (180, 190) unter Verwendung der Banknote (100), wobei die Banknote (100) ein Sicherheitselement (102) mit einem Prozessor (124) und einem Speicher (120) mit Programminstruktionen (128) umfasst,
wobei in dem Speicher (120) des Sicherheitselements (102) eine Identifikationsnummer (116) der Banknote (100) gespeichert ist, welche das von einer die Banknote (100) ausgebenden Zentralbank (220) verwaltete und der entsprechenden Banknote (100) individuell zugeordnete anonyme Banknotenkonto identifiziert, wobei in einem geschützten Speicherbereich (122) des Speichers (120) des Sicherheitselements (102) ein banknotenindividueller zweiter kryptographischer Schlüssel (118) gespeichert ist,
wobei das Verfahren durch die Banknote (100) umfasst:
• Empfangen einer Ableitungsanfrage zum Ableiten des ersten privaten kryptographischen Schlüssels (250) für das abhängige anonyme Konto von dem Computersystem (180, 190),
• Initiieren eines Ableitens des ersten privaten kryptographischen Schlüssels (250) für das abhängige anonyme Konto unter Verwendung einer Einwegfunktion und des banknotenindividuellen zweiten kryptographischen Schlüssels (118), wobei der abgeleitete erste private kryptographische Schlüssel (250) zum Erzeugen von Kryptogrammen zur Freigabe von Zahlung von dem abhängigen Konto dient,
wobei die Banknote (100) den ersten privaten kryptographischen Schlüssel (250) für das abhängige anonyme Konto unter Verwendung des banknotenindividuellen zweiten kryptographischen Schlüssels (118) ableitet und den abgeleiteten ersten privaten kryptographischen Schlüssel (250) in Antwort auf die Ableitungsanfrage an das Computersystem (180, 190) sendet.

2. Verfahren nach Anspruch 1, wobei die Banknote (100) zusätzlich einen zu dem abgeleiteten ersten privaten kryptographischen Schlüssel (250) zugehörigen ersten öffentlichen kryptographischen Schlüssel (252) ableitet und den abgeleiteten ersten privaten kryptographischen Schlüssel (250) als Teil eines resultierenden ersten asymmetrischen Schlüsselpaars an das Computersystem (180, 190) sendet oder
das Computersystem (180, 190) den abgeleiteten ersten privaten kryptographischen Schlüssel (250) verwendet, um den zugehörigen ersten öffentlichen kryptographischen Schlüssel (252) zu berechnen.

3. Verfahren zum Ableiten eines ersten privaten kryptographischen Schlüssels (250) eines anonymen Kontos, welches von einem einer Banknote (100) individuell zugeordneten anonymen Banknotenkonto abhängig ist, für ein Computersystem (180, 190) unter Verwendung der Banknote (100), wobei die Banknote (100) ein Sicherheitselement (102) mit einem Prozessor (124) und einem Speicher (120) mit Programminstruktionen (128) umfasst,
wobei in dem Speicher (120) des Sicherheitselements (102) eine Identifikationsnummer (116) der Banknote (100) gespeichert ist, welche das von einer die Banknote (100) ausgebenden Zentralbank (220) verwaltete und der entsprechenden Banknote (100) individuell zugeordnete anonyme Banknotenkonto identifiziert, wobei in einem geschützten Speicherbereich (122) des Speichers (120) des Sicherheitselements (102) ein banknotenindividueller zweiter kryptographischer Schlüssel (118) gespeichert ist,
wobei das Verfahren durch die Banknote (100) umfasst:
• Empfangen einer Ableitungsanfrage zum Ableiten des ersten privaten kryptographischen Schlüssels (250) für das abhängige anonyme Konto von dem Computersystem (180, 190),
• Initiieren eines Ableitens des ersten privaten kryptographischen Schlüssels (250) für das abhängige anonyme Konto unter Verwendung einer Einwegfunktion und des banknotenindividuellen zweiten kryptographischen Schlüssels (118), wobei der abgeleitete erste private kryptographische Schlüssel (250) zum Erzeugen von Kryptogrammen zur Freigabe von Zahlung von dem abhängigen Konto dient,
wobei die Banknote (100) aus dem banknotenindividuellen zweiten kryptographischen Schlüssel (118) einen Eingangswert für die Einwegfunktion zum Ableiten des ersten privaten kryptographischen Schlüssels (250) für das abhängige anonyme Konto berechnet und den resultierenden Eingangswert zum Ableiten des ersten privaten kryptographischen Schlüssels (250) durch das Computersystem (180, 190) in Antwort auf die Ableitungsanfrage an das Computersystem (180, 190) sendet.

4. Verfahren nach Anspruch 3, wobei das Verfahren ferner ein Ableiten des ersten privaten kryptographischen Schlüssels (250) für das abhängige anonyme Konto durch das Computersystem (180, 190) unter Verwendung der Einwegfunktion und des empfangenen Eingangswerts umfasst,
wobei beispielsweise das Computersystem (180, 190) den ersten privaten kryptographischen Schlüssel (250) zusammen mit einem zugehörigen ersten öffentlichen kryptographischen Schlüssel (252) als erstes asymmetrisches Schlüsselpaar ableitet.

5. Verfahren nach einem der vorangehenden Ansprüche, wobei es sich bei dem banknotenindividuellen zweiten kryptographischen Schlüssel (118) um einen zweiten privaten kryptographischen Schlüssel eines zweiten asymmetrischen Schlüsselpaars der Banknote (100) handelt und/oder
wobei für die Banknote (100) eine maximale Anzahl an Ableitungen von kryptographischen Schlüsseln für abhängige anonyme Bankkonten festgelegt ist,
wobei die Banknote (100) beispielsweise einen Zähler umfasst, wobei der Zähler bei null startet und sich mit jeder Ableitung um eins erhöht bis der Zähler die maximale Anzahl an Ableitungen erreicht oder
wobei der Zähler bei der maximalen Anzahl startet und sich mit jeder Ableitung ums eins reduziert bis der Zähler null erreicht.

6. Verfahren nach einem der vorangehenden Ansprüche, wobei das Verfahren ferner umfasst:
• Erzeugen eines zahlungsindividuellen ersten Kryptogramms zur Freigabe einer initialen Zahlung von dem Banknotenkonto auf das abhängige Konto, wobei das erste Kryptogramm aus der Identifikationsnummer (116) der Banknote (100) und einem ersten zahlungsindividuellen Code als Eingangswerte unter Verwendung des banknotenindividuellen zweiten kryptographischen Schlüssels (118) erzeugt wird,
• Senden einer das zahlungsindividuelle ersten Kryptogramm umfassenden ersten Zahlungsfreigabe an das Computersystem (180, 190).

7. Verfahren nach Anspruch 6, wobei das erste Kryptogramm ferner eine Angabe umfasst, welche angibt, wohin im Falle eines Revozierens des abhängigen Kontos, ein Guthaben des abhängigen Kontos zu transferieren ist,
wobei die Angabe beispielsweise eine Identifikationsnummer eines Banknotenkontos, eine Identifikationsnummer eines weiteren abhängigen Kontos, oder eine banknotenunabhängige Bankkontonummer umfasst.

8. Verfahren nach einem der Ansprüche 6 bis 7, wobei die initiale Zahlung von dem Banknotenkonto auf das abhängige Konto einen zu zahlenden Betrag von Null umfasst oder
wobei die initiale Zahlung von dem Banknotenkonto auf das abhängige Konto einen zu zahlenden Betrag größer Null umfasst.

9. Verfahren nach einem der vorangehenden Ansprüche, wobei das Verfahren ferner ein Revozieren des abhängigen Kontos umfasst,
wobei zum Revozieren des abhängigen Kontos beispielsweise das Ableiten des abgeleiteten ersten privaten kryptographischen Schlüssels (250) des zu revozierenden Kontos wiederholt und der abgeleitete erste private kryptographische Schlüssel (250) zum Revozieren des zu revozierenden Kontos verwendet wird oder
wobei das Revozieren des abhängigen Kontos ferner unter Verwendung der Banknote (100) beispielsweise umfasst:
• Erzeugen eines zahlungsindividuellen fünften Kryptogramms zu einer Freigabe einer Zahlung von dem anonymen Banknotenkonto an das zu revozierende Konto, wobei die Zahlung von dem Banknotenkonto auf das zu revozierende Konto einen zu zahlenden Betrag von Null umfasst,
• Senden einer das zahlungsindividuelle fünften Kryptogramm umfassenden vierten Zahlungsfreigabe.

10. Banknote (100) umfassend ein Sicherheitselement (102) mit einem Prozessor (124) und einem Speicher (120) mit Programminstruktionen (128),
wobei in dem Speicher (120) des Sicherheitselements (102) eine Identifikationsnummer (116) der Banknote (100) gespeichert ist, welche ein von einer die Banknote (100) ausgebenden Zentralbank (220) verwaltetes und der entsprechenden Banknote (100) individuell zugeordnetes anonymes Banknotenkonto identifiziert, wobei in einem geschützten Speicherbereich (122) des Speichers (120) des Sicherheitselements (102) ein banknotenindividueller zweiter kryptographischer Schlüssel (118) gespeichert ist,
wobei die Banknote (100) ferner eine Kommunikationsschnittstelle (104) umfasst,
wobei der Prozessor (124) dazu konfiguriert ist bei Ausführen der Programminstruktionen (128) ein Verfahren zum Ableiten eines ersten privaten kryptographischen Schlüssels (250) eines anonymen Kontos, welches von dem anonymen Banknotenkonto der Banknote (100) abhängig ist, für ein Computersystem (180, 190) mit der Banknote (100) auszuführen, wobei das Verfahren umfasst:
• Empfangen einer Ableitungsanfrage zum Ableiten des ersten privaten kryptographischen Schlüssels (250) für das abhängige anonyme Konto von dem Computersystem (180, 190) über die Kommunikationsschnittstelle (104),
• Initiieren eines Ableitens eines abgeleiteten ersten privaten kryptographischen Schlüssels für das abhängige anonyme Konto unter Verwendung einer Einwegfunktion und des banknotenindividuellen zweiten kryptographischen Schlüssels (118), wobei der abgeleitete erste private kryptographische Schlüssel (250) zum Erzeugen von Kryptogrammen zur Freigabe von Zahlung von dem abhängigen Konto dient,
wobei die Banknote (100) den ersten privaten kryptographischen Schlüssel (250) für das abhängige anonyme Konto unter Verwendung des banknotenindividuellen zweiten kryptographischen Schlüssels (118) ableitet und den abgeleiteten ersten privaten kryptographischen Schlüssel (250) in Antwort auf die Ableitungsanfrage an das Computersystem (180, 190) sendet.

11. Banknote (100) umfassend ein Sicherheitselement (102) mit einem Prozessor (124) und einem Speicher (120) mit Programminstruktionen (128),
wobei in dem Speicher (120) des Sicherheitselements (102) eine Identifikationsnummer (116) der Banknote (100) gespeichert ist, welche ein von einer die Banknote (100) ausgebenden Zentralbank (220) verwaltetes und der entsprechenden Banknote (100) individuell zugeordnetes anonymes Banknotenkonto identifiziert, wobei in einem geschützten Speicherbereich (122) des Speichers (120) des Sicherheitselements (102) ein banknotenindividueller zweiter kryptographischer Schlüssel (118) gespeichert ist,
wobei die Banknote (100) ferner eine Kommunikationsschnittstelle (104) umfasst,
wobei der Prozessor (124) dazu konfiguriert ist bei Ausführen der Programminstruktionen (128) ein Verfahren zum Ableiten eines ersten privaten kryptographischen Schlüssels (250) eines anonymen Kontos, welches von dem anonymen Banknotenkonto der Banknote (100) abhängig ist, für ein Computersystem (180, 190) mit der Banknote (100) auszuführen, wobei das Verfahren umfasst:
• Empfangen einer Ableitungsanfrage zum Ableiten des ersten privaten kryptographischen Schlüssels (250) für das abhängige anonyme Konto von dem Computersystem (180, 190) über die Kommunikationsschnittstelle (104),
• Initiieren eines Ableitens eines abgeleiteten ersten privaten kryptographischen Schlüssels für das abhängige anonyme Konto unter Verwendung einer Einwegfunktion und des banknotenindividuellen zweiten kryptographischen Schlüssels (118), wobei der abgeleitete erste private kryptographische Schlüssel (250) zum Erzeugen von Kryptogrammen zur Freigabe von Zahlung von dem abhängigen Konto dient,
wobei die Banknote (100) aus dem banknotenindividuellen zweiten kryptographischen Schlüssel (118) einen Eingangswert für die Einwegfunktion zum Ableiten des ersten privaten kryptographischen Schlüssels (250) für das abhängige anonyme Konto berechnet und den resultierenden Eingangswert zum Ableiten des ersten privaten kryptographischen Schlüssels (250) durch das Computersystem (180, 190) in Antwort auf die Ableitungsanfrage an das Computersystem (180, 190) sendet.

12. System mit einem Computersystem (180, 190) umfassend einen Prozessor (184, 194), einen Speicher (182, 192) mit Programminstruktionen (186, 196) und eine Kommunikationsschnittstelle (187, 197),
wobei der Prozessor (184, 194) dazu konfiguriert ist bei Ausführen der Programminstruktionen (186, 196) ein Verfahren zum Ableiten eines ersten privaten kryptographischen Schlüssels (250) eines anonymen Kontos, welches von einem einer Banknote (100) individuell zugeordneten anonymen Banknotenkonto abhängig ist, für das Computersystem (180, 190) mit der Banknote (100) auszuführen, wobei das Verfahren umfasst:
• Senden einer Ableitungsanfrage zum Ableiten des ersten privaten kryptographischen Schlüssels (250) für das abhängige anonyme Konto an die Banknote (100) über die Kommunikationsschnittstelle (186, 196),
• Empfangen einer Antwort auf die Ableitungsanfrage,
• Bereitstellen des unter Verwendung einer Einwegfunktion und des banknotenindividuellen zweiten kryptographischen Schlüssels (118) der Banknote (100) abgeleiteten ersten privaten kryptographischen Schlüssels (250) für das abhängige anonyme Konto auf dem Computersystem (180, 190), wobei zum Bereitstellen die empfangene Antwort verwendet wird,
wobei das Computersystem (180, 190) von der Banknote (100) den abgeleiteten ersten privaten kryptographischen Schlüssel (250) in Antwort auf die Ableitungsanfrage empfängt,
• Speichern des bereitgestellten ersten privaten kryptographischen Schlüssels (250) in einem geschützten Speicherbereich (183, 193) des Computersystems (180, 190) zum Erzeugen von Kryptogrammen zur Freigabe von Zahlung von dem abhängigen Konto,
und der Banknote (100) nach Anspruch 10 zum Ableiten eines ersten privaten kryptographischen Schlüssels (250) eines anonymen Kontos, welches von einem der Banknote (100) individuell zugeordneten anonymen Banknotenkonto abhängig ist, für das Computersystem (180, 190) unter Verwendung der Banknote (100).

13. Computersystem (180, 190) umfassend einen Prozessor (184, 194), einen Speicher (182, 192) mit Programminstruktionen (186, 196) und eine Kommunikationsschnittstelle (187, 197),
wobei der Prozessor (184, 194) dazu konfiguriert ist bei Ausführen der Programminstruktionen (186, 196) ein Verfahren zum Ableiten eines ersten privaten kryptographischen Schlüssels (250) eines anonymen Kontos, welches von einem einer Banknote (100) individuell zugeordneten anonymen Banknotenkonto abhängig ist, für das Computersystem (180, 190) mit der Banknote (100) auszuführen, wobei das Verfahren umfasst:
• Senden einer Ableitungsanfrage zum Ableiten des ersten privaten kryptographischen Schlüssels (250) für das abhängige anonyme Konto an die Banknote (100) über die Kommunikationsschnittstelle (186, 196),
• Empfangen einer Antwort auf die Ableitungsanfrage,
• Bereitstellen des unter Verwendung einer Einwegfunktion und des banknotenindividuellen zweiten kryptographischen Schlüssels (118) der Banknote (100) abgeleiteten ersten privaten kryptographischen Schlüssels (250) für das abhängige anonyme Konto auf dem Computersystem (180, 190), wobei zum Bereitstellen die empfangene Antwort verwendet wird,
wobei das Computersystem (180, 190) von der Banknote (100) einen aus dem banknotenindividuellen zweiten kryptographischen Schlüssel (118) berechneten Eingangswert für die Einwegfunktion zum Ableiten des ersten privaten kryptographischen Schlüssels (250) empfängt und den ersten privaten kryptographischen Schlüssel (250) unter Verwendung des empfangenen Eingangswerts und der Einwegfunktion ableitet,
• Speichern des bereitgestellten ersten privaten kryptographischen Schlüssels (250) in einem geschützten Speicherbereich (183, 193) des Computersystems (180, 190) zum Erzeugen von Kryptogrammen zur Freigabe von Zahlung von dem abhängigen Konto.

14. System nach Anspruch 12 oder Computersystem (180, 190) nach Anspruch 13, wobei der Prozessor (184, 194) ferner dazu konfiguriert ist bei Ausführen der Programminstruktionen (186, 196) ein Verfahren zum Zahlen mit dem Computersystem (180, 190) aufzuführen, wobei das Zahlen mit dem Computersystem (180, 190) umfasst:
• Empfangen einer Zahlungsanfrage für eine Zahlung mit dem Computersystem (180, 190),
• Erzeugen eines zahlungsindividuellen zweiten Kryptogramms zur Freigabe der Zahlung mit dem Computersystem (180, 190), wobei das zweite Kryptogramm aus der Identifikationsnummer (254) des abhängigen Kontos und einem zweiten zahlungsindividuellen Code als Eingangswerte unter Verwendung des abgeleiteten ersten kryptographischen Schlüssels (250) des abhängigen anonymen Kontos erzeugt wird,
• Senden einer das zahlungsindividuelle zweite Kryptogramm umfassenden zweiten Zahlungsfreigabe,
wobei es sich bei dem Computersystem (180) beispielsweise um ein mobiles tragbares Endgerät handelt.

15. System (157) umfassend ein Computersystem (180, 190) nach Anspruch 13 und eine Banknote (100) nach Anspruch 11 zum Ableiten eines ersten privaten kryptographischen Schlüssels (250) eines anonymen Kontos, welches von einem der Banknote (100) individuell zugeordneten anonymen Banknotenkonto abhängig ist, für das Computersystem (180, 190) unter Verwendung der Banknote (100).

## Claims

1. A method for deriving a first private cryptographic key (250) of an anonymous account, which is dependent on an anonymous banknote account individually assigned to a banknote (100), for a computer system (180, 190) using the banknote (100), wherein the banknote (100) comprises a security element (102) with a processor (124) and a memory (120) with program instructions (128),
wherein an identification number (116) of the banknote (100) is stored in the memory (120) of the security element (102) and identifies the anonymous banknote account managed by a central bank (220) issuing the banknote (100) and individually assigned to the corresponding banknote (100), wherein a second cryptographic key (118) specific to the banknote is stored in a protected memory area (122) of the memory (120) of the security element (102),
wherein the method comprises, by the banknote (100):
• receiving a derivation request for deriving the first private cryptographic key (250) for the dependent anonymous account from the computer system (180, 190),
• initiating derivation of the first private cryptographic key (250) for the dependent anonymous account using a one-way function and the banknote-specific second cryptographic key (118), wherein the derived first private cryptographic key (250) serves to generate cryptograms for releasing payment from the dependent account,
wherein the banknote (100) derives the first private cryptographic key (250) for the dependent anonymous account using the banknote-specific second cryptographic key (118) and sends the derived first private cryptographic key (250) to the computer system (180, 190) in response to the derivation request.

2. The method according to claim 1, wherein the banknote (100) additionally derives a first public cryptographic key (252) associated with the derived first private cryptographic key (250) and sends the derived first private cryptographic key (250) to the computer system (180, 190) as part of a resulting first asymmetric key pair, or
the computer system (180, 190) uses the derived first private cryptographic key (250) to calculate the associated first public cryptographic key (252).

3. A method for deriving a first private cryptographic key (250) of an anonymous account, which is dependent on an anonymous banknote account individually assigned to a banknote (100), for a computer system (180, 190) using the banknote (100), wherein the banknote (100) comprises a security element (102) with a processor (124) and a memory (120) with program instructions (128),
wherein an identification number (116) of the banknote (100) is stored in the memory (120) of the security element (102) and identifies the anonymous banknote account managed by a central bank (220) issuing the banknote (100) and individually assigned to the corresponding banknote (100), wherein a second cryptographic key (118) specific to the banknote is stored in a protected memory area (122) of the memory (120) of the security element (102),
wherein the method comprises, by the banknote (100):
• receiving a derivation request for deriving the first private cryptographic key (250) for the dependent anonymous account from the computer system (180, 190),
• initiating derivation of the first private cryptographic key (250) for the dependent anonymous account using a one-way function and the banknote-specific second cryptographic key (118), wherein the derived first private cryptographic key (250) serves to generate cryptograms for releasing payment from the dependent account,
wherein the banknote (100) calculates an input value for the one-way function for deriving the first private cryptographic key (250) for the dependent anonymous account from the banknote-specific second cryptographic key (118) and sends the resulting input value for deriving the first private cryptographic key (250) by the computer system (180, 190) in response to the derivation request to the computer system (180, 190).

4. The method according to claim 3, wherein the method further comprises deriving the first private cryptographic key (250) for the dependent anonymous account by the computer system (180, 190) using the one-way function and the received input value,
wherein, for example, the computer system (180, 190) derives the first private cryptographic key (250) together with an associated first public cryptographic key (252) as a first asymmetric key pair.

5. The method according to any one of the preceding claims, wherein the banknote-specific second cryptographic key (118) is a second private cryptographic key of a second asymmetric key pair of the banknote (100) and/or
wherein a maximum number of derivations of cryptographic keys for dependent anonymous bank accounts is specified for the banknote (100),
wherein the banknote (100) comprises, for example, a counter, wherein the counter starts at zero and increases by one with each derivation until the counter reaches the maximum number of derivations, or
wherein the counter starts at the maximum number and is decremented by one with each derivation until the counter reaches zero.

6. A method according to any one of the preceding claims, wherein the method further comprises:
• generating a payment-specific first cryptogram for releasing an initial payment from the banknote account to the dependent account, wherein the first cryptogram is generated from the identification number (116) of the banknote (100) and a first payment-specific code as input values using the banknote-specific second cryptographic key (118),
• sending a first payment release comprising the payment-specific first cryptogram to the computer system (180, 190).

7. The method according to claim 6, wherein the first cryptogram further comprises an indication specifying where, in the event of a reversal of the dependent account, a credit balance of the dependent account is to be transferred,
wherein the indication comprises, for example, an identification number of a banknote account, an identification number of another dependent account, or a bank account number independent of banknotes.

8. The method according to any one of claims 6 to 7, wherein the initial payment from the banknote account to the dependent account comprises an amount to be paid of zero or
wherein the initial payment from the banknote account to the dependent account comprises an amount to be paid greater than zero.

9. The method according to any one of the preceding claims, wherein the method further comprises revoking the dependent account,
wherein revoking the dependent account comprises, for example, repeating the derivation of the derived first private cryptographic key (250) of the account to be revoked and using the derived first private cryptographic key (250) to revoke the account to be revoked, or
wherein revoking the dependent account further comprises, with use of the banknote (100), for example:
• generating a payment-specific fifth cryptogram for releasing a payment from the anonymous banknote account to the account to be revoked, wherein the payment from the banknote account to the account to be revoked comprises an amount to be paid of zero,
• sending a fourth payment release comprising the payment-specific fifth cryptogram.

10. A banknote (100) comprising a security element (102) with a processor (124) and a memory (120) with program instructions (128),
wherein an identification number (116) of the banknote (100) is stored in the memory (120) of the security element (102) and identifies an anonymous banknote account managed by a central bank (220) issuing the banknote (100) and individually assigned to the corresponding banknote (100), wherein a second cryptographic key (118) specific to the banknote is stored in a protected memory area (122) of the memory (120) of the security element (102),
wherein the banknote (100) further comprises a communication interface (104),
wherein the processor (124) is configured to execute the program instructions (128), to execute a method for deriving a first private cryptographic key (250) of an anonymous account, which is dependent on the anonymous banknote account of the banknote (100), for a computer system (180, 190) with the banknote (100), wherein the method comprises:
• receiving a derivation request for deriving the first private cryptographic key (250) for the dependent anonymous account from the computer system (180, 190) via the communication interface (104),
• initiating derivation of a derived first cryptographic private key for the dependent anonymous account using a one-way function and the banknote-specific second cryptographic key (118), wherein the derived first cryptographic private key (250) is used to generate cryptograms for releasing payment from the dependent account,
wherein the banknote (100) derives the first private cryptographic key (250) for the dependent anonymous account using the banknote-specific second cryptographic key (118) and sends the derived first private cryptographic key (250) to the computer system (180, 190) in response to the derivation request.

11. A banknote (100) comprising a security element (102) with a processor (124) and a memory (120) with program instructions (128),
wherein an identification number (116) of the banknote (100) is stored in the memory (120) of the security element (102) and identifies an anonymous banknote account managed by a central bank (220) issuing the banknote (100) and individually assigned to the corresponding banknote (100), wherein a second cryptographic key (118) specific to the banknote is stored in a protected memory area (122) of the memory (120) of the security element (102),
wherein the banknote (100) further comprises a communication interface (104),
wherein the processor (124) is configured to execute the program instructions (128), to execute a method for deriving a first private cryptographic key (250) of an anonymous account, which is dependent on the anonymous banknote account of the banknote (100), for a computer system (180, 190) with the banknote (100), wherein the method comprises:
• receiving a derivation request for deriving the first private cryptographic key (250) for the dependent anonymous account from the computer system (180, 190) via the communication interface (104),
• initiating derivation of a derived first cryptographic private key for the dependent anonymous account using a one-way function and the banknote-specific second cryptographic key (118), wherein the derived first cryptographic private key (250) is used to generate cryptograms for releasing payment from the dependent account,
wherein the banknote (100) calculates an input value for the one-way function for deriving the first private cryptographic key (250) for the dependent anonymous account from the banknote-specific second cryptographic key (118) and sends the resulting input value for deriving the first private cryptographic key (250) by the computer system (180, 190) in response to the derivation request to the computer system (180, 190).

12. A system with a computer system (180, 190) comprising a processor (184, 194), a memory (182, 192) with program instructions (186, 196) and a communication interface (187, 197),
wherein the processor (184, 194) is configured, when the program instructions (186, 196) are executed, to execute a method for deriving a first private cryptographic key (250) of an anonymous account, which is dependent on an anonymous banknote account individually assigned to a banknote (100), for the computer system (180, 190) with the banknote (100), wherein the method comprises:
• sending a derivation request for deriving the first private cryptographic key (250) for the dependent anonymous account to the banknote (100) via the communication interface (186, 196),
• receiving a response to the derivation request,
• providing the first private cryptographic key (250) derived for the dependent anonymous account on the computer system (180, 190) using a one-way function and the banknote-specific second cryptographic key (118) of the banknote (100), wherein the received response is used for the provision,
wherein the computer system (180, 190) receives, from the banknote (100), the derived first private cryptographic key (250) in response to the derivation request,
• storing the provided first private cryptographic key (250) in a protected memory area (183, 193) of the computer system (180, 190) for generating cryptograms for releasing payment from the dependent account,
and the banknote (100) according to claim 10 for deriving a first private cryptographic key (250) of an anonymous account, which is dependent on an anonymous banknote account individually assigned to a banknote (100), for the computer system (180, 190) using the banknote (100).

13. A computer system (180, 190) comprising a processor (184, 194), a memory (182, 192) with program instructions (186, 196) and a communication interface (187, 197),
wherein the processor (184, 194) is configured, when the program instructions (186, 196) are executed, to execute a method for deriving a first private cryptographic key (250) of an anonymous account, which is dependent on an anonymous banknote account individually assigned to a banknote (100), for the computer system (180, 190) with the banknote (100), wherein the method comprises:
• sending a derivation request for deriving the first private cryptographic key (250) for the dependent anonymous account to the banknote (100) via the communication interface (186, 196),
• receiving a response to the derivation request,
• providing the first private cryptographic key (250) derived for the dependent anonymous account on the computer system (180, 190) using a one-way function and the banknote-specific second cryptographic key (118) of the banknote (100), wherein the received response is used for the provision,
wherein the computer system (180, 190) receives, from the banknote (100), an input value, calculated from the banknote-specific second cryptographic key (118), for the one-way function for deriving the first private cryptographic key (250) and derives the first private cryptographic key (250) using the received input value and the one-way function,
• storing the provided first private cryptographic key (250) in a protected memory area (183, 193) of the computer system (180, 190) for generating cryptograms for releasing payment from the dependent account.

14. The system according to claim 12 or computer system (180, 190) according to claim 13, wherein
the processor (184, 194) is further configured, upon execution of the program instructions (186, 196), to perform a method for paying with the computer system (180, 190), wherein paying with the computer system (180, 190) comprises:
• receiving a payment request for a payment using the computer system (180, 190),
• generating a payment-specific second cryptogram for authorising the payment using the computer system (180, 190), wherein the second cryptogram is generated from the identification number (254) of the dependent account and a second payment-specific code as input values using the derived first cryptographic key (250) of the dependent anonymous account,
• sending a second payment release comprising the payment-specific second cryptogram,
wherein the computer system (180) is, for example, a mobile portable terminal device.

15. A system (157) comprising a computer system (180, 190) according to claim 13 and a banknote (100) according to claim 11 for deriving a first private cryptographic key (250) of an anonymous account, which is dependent on an anonymous banknote account individually assigned to a banknote (100), for the computer system (180, 190) using the banknote (100).

## Revendications

1. Procédé de dérivation d'une première clé cryptographique privée (250) d'un compte anonyme, qui dépend d'un compte de billets de banque anonyme attribué individuellement à un billet de banque (100), pour un système informatique (180, 190) utilisant le billet de banque (100), dans lequel le billet de banque (100) comprend un élément de sécurité (102) avec un processeur (124) et une mémoire (120) avec des instructions de programme (128),
dans lequel un numéro d'identification (116) du billet de banque (100) est stocké dans la mémoire (120) de l'élément de sécurité (102) et identifie le compte de billets de banque anonyme géré par une banque centrale (220) émettant le billet de banque (100) et attribué individuellement au billet de banque (100) correspondant, dans lequel une seconde clé cryptographique (118) spécifique du billet de banque est stockée dans une zone de mémoire protégée (122) de la mémoire (120) de l'élément de sécurité (102),
dans lequel le procédé comprend, par le billet de banque (100), les étapes consistant à :
• recevoir une requête de dérivation pour dériver la première clé cryptographique privée (250) pour le compte anonyme dépendant depuis le système informatique (180, 190),
• initier la dérivation de la première clé cryptographique privée (250) pour le compte anonyme dépendant en utilisant une fonction unidirectionnelle et la seconde clé cryptographique spécifique du billet de banque (118), dans lequel la première clé cryptographique privée (250) dérivée sert à générer des cryptogrammes pour libérer le paiement depuis le compte dépendant,
dans lequel le billet de banque (100) dérive la première clé cryptographique privée (250) pour le compte anonyme dépendant en utilisant la seconde clé cryptographique spécifique du billet de banque (118) et envoie la première clé cryptographique privée (250) dérivée au système informatique (180, 190) en réponse à la requête de dérivation.

2. Procédé selon la revendication 1, dans lequel le billet de banque (100) dérive en outre une première clé cryptographique publique (252) associée à la première clé cryptographique privée (250) dérivée et envoie la première clé cryptographique privée (250) dérivée au système informatique (180, 190) en tant que partie d'une première paire de clés asymétriques résultante, ou
le système informatique (180, 190) utilise la première clé cryptographique privée (250) dérivée pour calculer la première clé cryptographique publique (252) associée.

3. Procédé de dérivation d'une première clé cryptographique privée (250) d'un compte anonyme, qui dépend d'un compte de billets de banque anonyme attribué individuellement à un billet de banque (100), pour un système informatique (180, 190) utilisant le billet de banque (100), dans lequel le billet de banque (100) comprend un élément de sécurité (102) avec un processeur (124) et une mémoire (120) avec des instructions de programme (128),
dans lequel un numéro d'identification (116) du billet de banque (100) est stocké dans la mémoire (120) de l'élément de sécurité (102) et identifie le compte de billets de banque anonyme géré par une banque centrale (220) émettant le billet de banque (100) et attribué individuellement au billet de banque (100) correspondant, dans lequel une seconde clé cryptographique (118) spécifique du billet de banque est stockée dans une zone de mémoire protégée (122) de la mémoire (120) de l'élément de sécurité (102),
dans lequel le procédé comprend, par le billet de banque (100), les étapes consistant à :
• recevoir une requête de dérivation pour dériver la première clé cryptographique privée (250) pour le compte anonyme dépendant depuis le système informatique (180, 190),
• initier la dérivation de la première clé cryptographique privée (250) pour le compte anonyme dépendant en utilisant une fonction unidirectionnelle et la seconde clé cryptographique spécifique du billet de banque (118), dans lequel la première clé cryptographique privée (250) dérivée sert à générer des cryptogrammes pour libérer le paiement depuis le compte dépendant,
dans lequel le billet de banque (100) calcule une valeur d'entrée pour la fonction unidirectionnelle pour dériver la première clé cryptographique privée (250) pour le compte anonyme dépendant depuis la seconde clé cryptographique spécifique du billet de banque (118) et envoie la valeur d'entrée résultante pour faire dériver la première clé cryptographique privée (250) par le système informatique (180, 190) en réponse à la requête de dérivation au système informatique (180, 190).

4. Procédé selon la revendication 3, dans lequel le procédé comprend en outre une étape consistant à faire dériver la première clé cryptographique privée (250) pour le compte anonyme dépendant par le système informatique (180, 190) en utilisant la fonction unidirectionnelle et la valeur d'entrée reçue,
dans lequel, par exemple, le système informatique (180, 190) dérive la première clé cryptographique privée (250) conjointement à une première clé cryptographique publique (252) associée en tant que première paire de clés asymétriques.

5. Procédé selon l'une quelconque des revendications précédentes, dans lequel la seconde clé cryptographique spécifique du billet de banque (118) est une seconde clé cryptographique privée d'une seconde paire de clés asymétriques du billet de banque (100) et/ou
dans lequel un nombre maximal de dérivations de clés cryptographiques pour des comptes bancaires anonymes dépendants est spécifié pour le billet de banque (100),
dans lequel le billet de banque (100) comprend, par exemple, un compteur, dans lequel le compteur démarre à zéro et augmente d'un à chaque dérivation jusqu'à ce que le compteur atteigne le nombre maximal de dérivations, ou
dans lequel le compteur démarre au nombre maximal et est décrémenté d'un à chaque dérivation jusqu'à ce que le compteur atteigne zéro.

6. Procédé selon l'une quelconque des revendications précédentes, dans lequel le procédé comprend en outre les étapes consistant à :
• générer un premier cryptogramme spécifique d'un paiement pour libérer un paiement initial du compte de billets de banque au compte dépendant, dans lequel le premier cryptogramme est généré à partir du numéro d'identification (116) du billet de banque (100) et un premier code spécifique du paiement en tant que valeurs d'entrée en utilisant la seconde clé cryptographique spécifique du billet de banque (118),
• envoyer une première libération de paiement comprenant le premier cryptogramme spécifique d'un paiement au système informatique (180, 190).

7. Procédé selon la revendication 6, dans lequel le premier cryptogramme comprend en outre une indication spécifiant où, en cas d'inversion du compte dépendant, une balance de crédit du compte dépendant doit être transférée,
dans lequel l'indication comprend, par exemple, un numéro d'identification d'un compte de billets de banque, un numéro d'identification d'un autre compte dépendant, ou un numéro de compte bancaire indépendant des billets de banque.

8. Procédé selon l'une quelconque des revendications 6 à 7, dans lequel le paiement initial depuis le compte de billets de banque au compte dépendant comprend une quantité à payer de zéro ou
dans lequel le paiement initial depuis le compte de billets de banque au compte dépendant comprend une quantité à payer supérieure à zéro.

9. Procédé selon l'une quelconque des revendications précédentes, dans lequel le procédé comprend en outre une étape consistant à résilier le compte dépendant,
dans lequel l'étape consistant à résilier le compte dépendant comprend, par exemple, une étape consistant à répéter la dérivation de la première clé cryptographique privée (250) dérivée du compte à résilier et à utiliser la première clé cryptographique privée (250) dérivée pour résilier le compte à résilier, ou
dans lequel l'étape consistant à résilier le compte dépendant comprend en outre, avec l'utilisation du billet de banque (100), par exemple, les étapes consistant à :
• générer un cinquième cryptogramme spécifique du paiement pour libérer un paiement du compte de billets de banque anonyme au compte à résilier, dans lequel le paiement du compte de billets de banque au compte à résilier comprend une quantité à payer de zéro,
• envoyer une quatrième libération de paiement comprenant le cinquième cryptogramme spécifique d'un paiement.

10. Billet de banque (100) comprenant un élément de sécurité (102) avec un processeur (124) et une mémoire (120) avec des instructions de programme (128),
dans lequel un numéro d'identification (116) du billet de banque (100) est stocké dans la mémoire (120) de l'élément de sécurité (102) et identifie un compte de billets de banque anonyme géré par une banque centrale (220) émettant le billet de banque (100) et attribué individuellement au billet de banque correspondant (100), dans lequel une seconde clé cryptographique (118) spécifique du billet de banque est stockée dans une zone de mémoire protégée (122) de la mémoire (120) de l'élément de sécurité (102),
dans lequel le billet de banque (100) comprend en outre une interface de communication (104),
dans lequel le processeur (124) est configuré pour exécuter les instructions de programme (128), pour exécuter un procédé destiné à dériver une première clé cryptographique privée (250) d'un compte anonyme, qui dépend du compte de billets de banque anonyme du billet de banque (100), pour un système informatique (180, 190) avec le billet de banque (100), dans lequel le procédé comprend les étapes consistant à :
• recevoir une requête de dérivation pour dériver la première clé cryptographique privée (250) pour le compte anonyme dépendant depuis le système informatique (180, 190) par l'intermédiaire de l'interface de communication (104),
• initier la dérivation d'une première clé cryptographique privée dérivée pour le compte anonyme dépendant en utilisant une fonction unidirectionnelle et de la seconde clé cryptographique spécifique du billet de banque (118), dans lequel la première clé cryptographique privée (250) dérivée est utilisée pour générer des cryptogrammes afin de libérer le paiement depuis le compte dépendant,
dans lequel le billet de banque (100) dérive la première clé cryptographique privée (250) pour le compte anonyme dépendant en utilisant la seconde clé cryptographique spécifique du billet de banque (118) et envoie la première clé cryptographique privée (250) dérivée au système informatique (180, 190) en réponse à la requête de dérivation.

11. Billet de banque (100) comprenant un élément de sécurité (102) avec un processeur (124) et une mémoire (120) avec des instructions de programme (128),
dans lequel un numéro d'identification (116) du billet de banque (100) est stocké dans la mémoire (120) de l'élément de sécurité (102) et identifie un compte de billets de banque anonyme géré par une banque centrale (220) émettant le billet de banque (100) et attribué individuellement au billet de banque correspondant (100), dans lequel une seconde clé cryptographique (118) spécifique du billet de banque est stockée dans une zone de mémoire protégée (122) de la mémoire (120) de l'élément de sécurité (102),
dans lequel le billet de banque (100) comprend en outre une interface de communication (104),
dans lequel le processeur (124) est configuré pour exécuter les instructions de programme (128), pour exécuter un procédé destiné à dériver une première clé cryptographique privée (250) d'un compte anonyme, qui dépend du compte de billets de banque anonyme du billet de banque (100), pour un système informatique (180, 190) avec le billet de banque (100), dans lequel le procédé comprend les étapes consistant à :
• recevoir une requête de dérivation pour dériver la première clé cryptographique privée (250) pour le compte anonyme dépendant depuis le système informatique (180, 190) par l'intermédiaire de l'interface de communication (104),
• initier la dérivation d'une première clé cryptographique privée dérivée pour le compte anonyme dépendant en utilisant une fonction unidirectionnelle et de la seconde clé cryptographique spécifique du billet de banque (118), dans lequel la première clé cryptographique privée (250) dérivée est utilisée pour générer des cryptogrammes afin de libérer le paiement depuis le compte dépendant,
dans lequel le billet de banque (100) calcule une valeur d'entrée pour la fonction unidirectionnelle pour dériver la première clé cryptographique privée (250) pour le compte anonyme dépendant depuis la seconde clé cryptographique spécifique du billet de banque (118) et envoie la valeur d'entrée résultante pour faire dériver la première clé cryptographique privée (250) par le système informatique (180, 190) en réponse à la requête de dérivation au système informatique (180, 190).

12. Système avec un système informatique (180, 190) comprenant un processeur (184, 194), une mémoire (182, 192) avec des instructions de programme (186, 196) et une interface de communication (187, 197),
dans lequel le processeur (184, 194) est configuré, lorsque les instructions de programme (186, 196) sont exécutées, pour exécuter un procédé de dérivation d'une première clé cryptographique privée (250) d'un compte anonyme, qui dépend d'un compte de billets de banque anonyme attribué individuellement à un billet de banque (100), pour le système informatique (180, 190) avec le billet de banque (100), dans lequel le procédé comprend les étapes consistant à :
• envoyer une requête de dérivation pour dériver la première clé cryptographique privée (250) pour le compte anonyme dépendant au billet de banque (100) par l'intermédiaire de l'interface de communication (186, 196),
• recevoir une réponse à la requête de dérivation,
• fournir la première clé cryptographique privée (250) dérivée pour le compte anonyme dépendant sur le système informatique (180, 190) en utilisant une fonction unidirectionnelle et la seconde clé cryptographique spécifique du billet de banque (118) du billet de banque (100), dans lequel la réponse reçue est utilisée pour la fourniture,
dans lequel le système informatique (180, 190) reçoit, à partir du billet de banque (100), la première clé cryptographique privée (250) dérivée en réponse à la requête de dérivation,
• stocker la première clé cryptographique privée (250) fournie dans une zone de mémoire protégée (183, 193) du système informatique (180, 190) pour générer des cryptogrammes afin de libérer le paiement depuis le compte dépendant,
et le billet de banque (100) selon la revendication 10 pour dériver une première clé cryptographique privée (250) d'un compte anonyme, qui dépend d'un compte de billets de banque anonyme attribué individuellement à un billet de banque (100), pour le système informatique (180, 190) utilisant le billet de banque (100).

13. Système informatique (180, 190) comprenant un processeur (184, 194), une mémoire (182, 192) avec des instructions de programme (186, 196) et une interface de communication (187, 197),
dans lequel le processeur (184, 194) est configuré, lorsque les instructions de programme (186, 196) sont exécutées, pour exécuter un procédé de dérivation d'une première clé cryptographique privée (250) d'un compte anonyme, qui dépend d'un compte de billets de banque anonyme attribué individuellement à un billet de banque (100), pour le système informatique (180, 190) avec le billet de banque (100), dans lequel le procédé comprend les étapes consistant à :
• envoyer une requête de dérivation pour dériver la première clé cryptographique privée (250) pour le compte anonyme dépendant au billet de banque (100) par l'intermédiaire de l'interface de communication (186, 196),
• recevoir une réponse à la requête de dérivation,
• fournir la première clé cryptographique privée (250) dérivée pour le compte anonyme dépendant sur le système informatique (180, 190) en utilisant une fonction unidirectionnelle et la seconde clé cryptographique spécifique du billet de banque (118) du billet de banque (100), dans lequel la réponse reçue est utilisée pour la fourniture,
dans lequel le système informatique (180, 190) reçoit, depuis le billet de banque (100), une valeur d'entrée, calculée à partir de la seconde clé cryptographique spécifique du billet de banque (118), pour la fonction unidirectionnelle afin de dériver la première clé cryptographique privée (250) et dérive la première clé cryptographique privée (250) en utilisant la valeur d'entrée reçue et la fonction unidirectionnelle,
• stocker la première clé cryptographique privée (250) fournie dans une zone de mémoire protégée (183, 193) du système informatique (180, 190) pour générer des cryptogrammes afin de libérer le paiement depuis le compte dépendant.

14. Système selon la revendication 12 ou système informatique (180, 190) selon la revendication 13, dans lequel le processeur (184, 194) est en outre configuré, lors de l'exécution des instructions de programme (186, 196), pour réaliser un procédé de paiement avec le système informatique (180, 190), dans lequel le paiement avec le système informatique (180, 190) comprend les étapes consistant à :
• recevoir une requête de paiement pour un paiement en utilisant le système informatique (180, 190),
• générer un deuxième cryptogramme spécifique du paiement pour autoriser le paiement en utilisant le système informatique (180, 190), dans lequel le deuxième cryptogramme est généré à partir du numéro d'identification (254) du compte dépendant et d'un second code spécifique du paiement en tant que valeurs d'entrée en utilisant la première clé cryptographique (250) dérivée du compte anonyme dépendant,
• envoyer une deuxième libération de paiement comprenant le deuxième cryptogramme spécifique du paiement,
dans lequel le système informatique (180) est, par exemple, un dispositif de terminal mobile portatif.

15. Système (157) comprenant un système informatique (180, 190) selon la revendication 13 et un billet de banque (100) selon la revendication 11 pour dériver une première clé cryptographique privée (250) d'un compte anonyme, qui dépend d'un compte de billets de banque anonyme attribué individuellement à un billet de banque (100), pour le système informatique (180, 190) utilisant le billet de banque (100).
